# EUROPEAN PATENT APPLICATION

(11) **EP 4 492 870 A1**
(43) Date of publication of application: **15.01.2025**
(21) Application number: 23778245.3
(22) Date of filing: 28.03.2023
(51) Int. Cl.: H04W 48/08

(54) **ACCESS NETWORK DEVICE DETERMINING METHOD**

(30) Priority: 28.03.2022 CN 202210317331; 10.08.2022 CN 202210957861
(71) Applicant: Huawei Technologies Co., Ltd., Shenzhen, Guangdong 518129 (CN)
(72) Inventor: XU, Yishan, Shenzhen, Guangdong 518129 (CN); ZHU, Fangyuan, Shenzhen, Guangdong 518129 (CN); HUANG, Kang, Shenzhen, Guangdong 518129 (CN)
(74) Representative: Körber, Martin Hans
(86) International application number: PCT/CN2023/084506
(87) International publication number: WO 2023/185880

(57) **Abstract**

This application relates to the field of communication technologies, and provides an access network device determining method and an apparatus, to resolve a problem, in a conventional technology, that a terminal device cannot learn of a network slice supported by a non-3GPP access network device, and therefore may fail to access, when requesting to access a network through the non-3GPP access network device, a network slice that the terminal device requests to access. The method includes: The terminal device sends a first message to a mobility management device through a first access network device, where the first message includes an identifier of at least one network slice, and indicates a request for accessing the network slice; receives a second message through the first access network device or a second access network device, where the second message includes information about the second access network device, and indicates that the second access network device supports one or more of the at least one network slice; and establishes a connection to the second access network device.

## Description

This application claims priority to Chinese Patent Application No. 202210317331.2, filed with the China National Intellectual Property Administration on March 28, 2022 and entitled "ACCESS NETWORK DEVICE DETERMINING METHOD", and claims priority to Chinese Patent Application No. 202210957861.3, filed with the China National Intellectual Property Administration on August 10, 2022 and entitled "ACCESS NETWORK DEVICE DETERMINING METHOD", which are incorporated herein by reference in their entireties.

### TECHNICAL FIELD

This application relates to the field of communication technologies, and in particular, to an access network device determining method and an apparatus.

### BACKGROUND

A concept of a network slice (Network Slice) is proposed in a fifth generation (fifth generation, 5G) mobile communication network (5G network for short) to meet differentiated requirements of various types of services. Network slicing means dividing a physical network into a plurality of virtual networks including a specific network function, a network topology, and a network resource, to meet service functions and quality of service requirements corresponding to different network slices. Through the network slicing, an operator can construct a plurality of dedicated, virtualized, and isolated logical subnets on a universal physical platform, to pertinently meet different requirements of different services of users for network capabilities.

A network slice that can be supported by an access network device may be configured at a granularity of a tracking area (tracking area, TA). To be specific, the TA corresponds to at least one network slice, and different TAs may correspond to different network slices. Therefore, access network devices corresponding to a same TA support a same network slice, and access network devices corresponding to different TAs support different network slices. The TA may be obtained through division based on a location or another parameter.

Currently, for a non-3rd generation partnership project (3rd generation partnership project, 3GPP) access type, a terminal device cannot learn of a TA of a non-3GPP access network device, and consequently cannot learn of a network slice supported by the non-3GPP access network device. When the terminal device accesses a core network through the non-3GPP access network device, and requests to obtain a slice service corresponding to a specific network slice, problems such as a failure of the terminal device in obtaining the slice service and a communication failure may be caused because the non-3GPP access network device does not support the network slice requested by the terminal device.

### SUMMARY

This application provides an access network device determining method and an apparatus, to resolve problems, in a conventional technology, that a terminal device cannot learn of a network slice supported by a non-3GPP access network device and therefore may fail to obtain a requested slice service and fail in communication when the terminal device accesses a network through the non-3GPP access network device and requests to access a specific network slice.

To achieve the foregoing objective, this application uses the following technical solutions.

According to a first aspect, an access network device determining method is provided, and is applied to a terminal device. The method includes: sending a first message to a mobility management device through a first access network device, where the first message includes an identifier of at least one network slice, and indicates a request for accessing the network slice; receiving a second message through the first access network device or a second access network device, where the second message includes information about the second access network device, and indicates that the second access network device supports one or more of the at least one network slice; and establishing a connection to the second access network device.

In the foregoing implementation, when determining, based on information about a slice supported by an access network device, that the access network device currently connected to the terminal device does not support the network slice requested by the terminal device, the mobility management device may determine a target access network device that supports the network slice requested by the terminal device, and send information about the target access network device to the terminal device, so that the terminal device can be connected to the target access network device based on the information about the target access network device and access a core network through the target access network device. This effectively resolves a problem that the terminal device cannot be accurately connected to the access network device in a non-3GPP access type to obtain a network slice service.

In a possible implementation, the second message indicates that the first access network device does not support one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, if the second message is a registration accept message, before the receiving a second message, the method further includes: The terminal device completes an authentication and security procedure, and establishes an Internet protocol security IPsec SA communication tunnel.

In a possible implementation, after the receiving a second message, the method further includes: The terminal device performs a deregistration procedure through the first access network device.

In a possible implementation, the second message includes second indication information, and the second indication information indicates the terminal device to change an access network device.

In a possible implementation, the method further includes: obtaining third information, where the third information indicates to release a connection between the terminal device and the first access network device.

In a possible implementation, the third information includes the information about the second access network device.

In a possible implementation, the third information is the second message.

In a possible implementation, the third information includes the second message, or the second message includes the third information.

In other words, in the foregoing implementation, when determining that the access network device currently connected to the terminal device does not support the network slice requested by the terminal device, the mobility management device determines, for the terminal device, the target access network device that supports the network slice. In addition, when the deregistration procedure does not need to be performed, the access network device is indicated to release a connection to the terminal device, or a connection between the terminal device and the access network device is indicated, so that the terminal device can subsequently establish a connection to the target access network device and access the core network.

In a possible implementation, the method further includes: obtaining allowed slice information, where the allowed slice information includes first slice information supported by the second access network device, and the first slice information includes an identifier of at least one network slice. The allowed slice information corresponding to the terminal device is updated, so that updated allowed slice information includes the slice information that is requested by the terminal device and that is supported by the second access network device. This simplifies an interaction procedure, and effectively resolves the problem that the terminal device cannot be accurately connected to the access network device to obtain the network slice service.

In a possible implementation, the method further includes: obtaining the allowed slice information through the first access network device.

In a possible implementation, the method further includes: the first slice information includes second slice information that the terminal device requests to access, and the second slice information includes an identifier of at least one network slice.

In a possible implementation, the allowed slice information includes second slice information that the terminal device requests to access, the second slice information includes an identifier of at least one network slice, and the first slice information is the same as or different from the second slice information.

In a possible implementation, the allowed slice information includes an identifier of at least one network slice not supported by the first access network device. The allowed slice information corresponding to the terminal device is updated, so that updated allowed slice information includes the slice information that is requested by the terminal device and that is not supported by the first access network device. This simplifies the interaction procedure, and effectively resolves the problem that the terminal device cannot be accurately connected to the access network device to obtain the network slice service.

In a possible implementation, the method further includes: obtaining the allowed slice information through the first access network device.

In a possible implementation, the allowed slice information includes an identifier of at least one network slice that is supported by the second access network but not supported by the first access network device.

In a possible implementation, the method further includes: obtaining fourth information, where the fourth information indicates that slice information is allowed to be included when the terminal device establishes the connection and/or indicates a procedure to be performed. In the foregoing implementation, in a partial procedure performed when the terminal device establishes the connection to the target access network device, the terminal device may include, in an access stratum message or a non-access stratum message based on the fourth information, the slice information requested by the terminal device.

In a possible implementation, that the terminal device establishes a connection to the second access network device specifically includes: sending fifth information, where the fifth information includes third slice information that the terminal device requests to access, the third slice information includes an identifier of at least one network slice, and the third slice information is the same as or different from the first slice information or the second slice information.

In a possible implementation, the fifth information may be sent through a service request procedure, a periodic registration update procedure, a mobility registration update procedure, or a registration procedure used to update a capability of the terminal device. In other words, the terminal device may include, in the foregoing procedure for establishing the connection to the second terminal device or establishing a connection to the mobility management device through a second terminal device, the slice information requested by the terminal device, so that the terminal device can obtain, through the second access network device, a service corresponding to the requested slice, to improve efficiency of successful access of the terminal.

In a possible implementation, the method further includes: The terminal device sends, to the second access network device, indication information indicating that an establishment cause is access network device update, reselection, or redirection.

According to a second aspect, an access network device determining method is provided, and is applied to a mobility management device. The method includes: receiving a first message from a terminal device through a first access network device, where the first message includes an identifier of at least one network slice, and indicates that the terminal device requests to access the network slice; and if it is determined that the first access network device does not support one or more of the at least one network slice, and that a second access network device supports one or more of the at least one network slice; sending a second message to the terminal device through the first access network device, where the second message includes information about the second access network device, and indicates that the second access network device supports the one or more of the at least one network slice.

In the foregoing implementation, when determining, based on information about a slice supported by an access network device, that the access network device currently connected to the terminal device does not support the network slice requested by the terminal device, the mobility management device may determine a target access network device that supports the network slice requested by the terminal device, and send information about the target access network device to the terminal device, so that the terminal device can be connected to the target access network device based on the information about the target access network device and access a core network through the target access network device. This effectively resolves a problem that the terminal device cannot be accurately connected to the access network device in a non-3GPP access type to obtain a network slice service.

In a possible implementation, the at least one network slice is a first network slice; and if the mobility management device determines that the first access network device does not support the first network slice, and determines that the second access network device supports the first network slice, the second message is sent to the terminal device through the first access network device.

In a possible implementation, the second message indicates that the first access network device does not support the one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, the second message is a registration reject message.

In a possible implementation, the second message includes second indication information, and the second indication information indicates the terminal device to change a corresponding access network device.

In a possible implementation, the method further includes: The mobility management device receives an identifier of the terminal device, where the identifier of the terminal device is used by an access network device to determine the terminal device.

In a possible implementation, after it is determined that the second access network device supports the one or more of the at least one network slice, the method further includes: sending a first request message to the second access network device, where the first request message includes the identifier of the terminal device, and requests to change the access network device for the terminal device; and receiving a first response message from the second access network device, where the first response message includes the address of the second access network device.

In a possible implementation, the method further includes: storing fourth slice information that the terminal device requests to access, where the fourth slice information includes an identifier of at least one network slice. In the foregoing implementation, the mobility management device stores, saves, or records the network slice information that the terminal device requests to access. In this way, when the terminal device subsequently establishes a connection through the target access network device, the mobility management device may update or determine, based on the stored, saved, or recorded slice information requested by the terminal device, slice information allowed to be used by the terminal device, so that updated slice information allowed to be used by the terminal device or the determined slice information allowed to be used by the terminal device includes the requested slice information. Therefore, when the access network device currently connected to the terminal device does not support the requested slice, and a deregistration procedure does not need to be performed, the terminal device can establish the connection to the target access network device and access the core network. This effectively resolves the problem that the terminal device cannot be accurately connected to the access network device to obtain the network slice service.

In a possible implementation, the identifier of the network slice that the terminal device requests to access includes an identifier of at least one network slice not supported by the first access network.

In a possible implementation, the fourth slice information includes an identifier of at least one network slice not supported by the first access network.

In a possible implementation, the fourth slice information includes an identifier of at least one network slice supported by the second access network.

In a possible implementation, the fourth slice information includes an identifier of at least one network slice that is supported by the second access network but not supported by the first access network device.

In a possible implementation, the method further includes: sending allowed slice information to the terminal device, where the allowed slice information includes first slice information supported by the second access network device, and the first slice information includes an identifier of at least one network slice.

In a possible implementation, the allowed slice information includes second slice information that the terminal device requests to access, the second slice information includes an identifier of at least one network slice, and the first slice information is the same as or different from the second slice information.

In a possible implementation, the allowed slice information includes an identifier of at least one network slice not supported by the first access network device.

In a possible implementation, the method further includes: obtaining the allowed slice information through the first access network device.

In a possible implementation, the allowed slice information includes the identifier of the at least one network slice that is supported by the second access network but not supported by the first access network device.

In a possible implementation, the method further includes: sending third information, where the third information indicates to release a connection between the terminal device and the first access network device.

In other words, in the foregoing implementation, when determining that the access network device currently connected to the terminal device does not support the network slice requested by the terminal device, the mobility management device determines, for the terminal device, the target access network device that supports the network slice. In addition, when the deregistration procedure does not need to be performed, the mobility management device indicates the first access network device to release the connection to the terminal device, or indicates the terminal device to release the connection to the first access network device, so that the terminal device can subsequently establish a connection to the target access network device or the second access network device and access the core network.

In a possible implementation, the method further includes: sending fourth information to the terminal device, where the fourth information indicates that slice information is allowed to be included when the terminal device establishes a connection and/or indicates a procedure to be performed.

In a possible implementation, the method further includes: sending the fourth information to the terminal device through the first access network device, where the fourth information indicates that the slice information is allowed to be included when the terminal device establishes the connection and/or indicates the procedure to be performed.

In a possible implementation, the procedure to be performed includes a mobility registration update procedure, an initial access procedure, a service request procedure, a periodic registration update procedure, or a registration procedure used to update a capability of the terminal device.

In a possible implementation, the method further includes: obtaining fifth information, where the fifth information includes third slice information that the terminal device requests to access, the third slice information includes an identifier of at least one network slice, and the third slice information is the same as or different from the first slice information or the second slice information.

In a possible implementation, the method further includes: receiving fifth information from the terminal device, where the fifth information includes third slice information that the terminal device requests to access, the third slice information includes an identifier of at least one network slice, and the third slice information is the same as or different from the first slice information or the second slice information.

In a possible implementation, the fifth information includes the identifier of the at least one network slice that is supported by the second access network but not supported by the first access network device.

In a possible implementation, the fifth information may be sent through a service request procedure, the periodic registration update procedure, the mobility registration update procedure, or the registration procedure used to update the capability of the terminal device.

In a possible implementation, the method further includes: updating the allowed slice information based on the fourth slice information or the third slice information.

In a possible implementation, the method further includes: updating, based on the fourth slice information or the third slice information, the allowed slice information corresponding to the terminal device.

In a possible implementation, the method further includes: sending, to the second access network device, the allowed slice information corresponding to the terminal device; and/or sending the allowed slice information to the terminal device through the second access network device.

According to a third aspect, an access network device determining method is provided, and is applied to a mobility management device. The method includes: receiving a first message from a terminal device through a first access network device, where the first message includes an identifier of at least one network slice, and indicates that the terminal device requests to access the network slice; and if it is determined that the first access network device does not support one or more of the at least one network slice, and that a second access network device supports one or more of the at least one network slice, sending a second message to the second access network device, where the second message indicates the second access network device to send information about the second access network device to the terminal device, and the information about the second access network device is used by the terminal device to establish a connection to the second access network device.

In a possible implementation, after it is determined that the first access network device does not support the one or more of the at least one network slice, the method further includes: sending a second request message to the first access network device, where the second request message requests to obtain an identifier of a non-3GPP access point connected to the terminal device; and receiving, from the first access network device, the identifier of the non-3GPP access point connected to the terminal device.

In a possible implementation, after it is determined that the first access network device does not support the one or more of the at least one network slice, the method further includes: sending a third request message to the second access network device, where the third request message includes the identifier of the non-3GPP access point.

In a possible implementation, the third request message further includes third indication information, and the third indication information indicates to change an access network device for the terminal device, indicates that the terminal device is migrated from another access network device, or indicates that the terminal device was previously connected to another access network device.

In a possible implementation, the third request message is for setting up context information of the terminal device.

According to a fourth aspect, an access network device determining method is provided, and is applied to a first access network device. The method includes: receiving a first message from a terminal device, where the first message includes an identifier of at least one network slice, and the first request indicates that the terminal device requests to access the network slice; sending the first message to a mobility management device; receiving a second message from the mobility management device, where the second message includes information about a second access network device, and indicates that the second access network device supports one or more of the at least one network slice; and sending the second message to the terminal device.

In the foregoing implementation, in a registration procedure for the terminal device, when determining, based on the network slice requested by the terminal device, that an access network device currently connected to the terminal device does not support the network slice requested by the terminal device, the mobility management device may change an access network device for the terminal device. Specifically, the source access network device may send information about a target access network device to the terminal device, so that the terminal device can be connected to a target access network based on the information about the target access network device, and the changed target access network device can support the network slice requested by the terminal device, to improve communication efficiency. In addition, changing the access network device for the terminal device may enable the terminal device to not perform a registration procedure again, to effectively reduce signaling overheads and delay overheads.

In a possible implementation, the second message indicates that the first access network device does not support one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, if the second message is a registration reject message, after the sending the second message to the terminal device, the method further includes: releasing, by the first access network device, a connection to the terminal device.

In a possible implementation, the second message includes second indication information, and the second indication information indicates the terminal device to change the access network device.

In a possible implementation, the method further includes: receiving an identifier of the terminal device, where the identifier of the terminal device is used by an access network device to determine the terminal device.

According to a fifth aspect, an access network device determining method is provided. A terminal device obtains configuration information. The terminal device selects, based on the configuration information, an access network device that supports a requested network slice.

In the foregoing implementation, the terminal device may select, based on the obtained configuration information, the access network device that supports the network slice requested by the terminal device, to effectively resolve a problem that the terminal device cannot be accurately connected to the access network device in a non-3GPP access type to obtain a network slice service.

In a possible implementation, the configuration information is one or more of a WLAN selection policy (for example, a WLAN selection policy, WLANSP), N3IWF identifier configuration information (for example, an N3IWF identifier configuration), or non-3GPP access point selection information (for example, non-3GPP access node selection information).

In a possible implementation, the configuration information includes information about at least one access network device and information about a network slice corresponding to the access network device.

In a possible implementation, that the terminal device selects, based on the configuration information, an access network device that supports a requested network slice specifically includes: The terminal device may select, from a selectable access network device based on the configuration information, an access network device that matches at least one network slice requested by the terminal device.

In a possible implementation, the configuration information includes information about at least one network slice and access network device information of one or more access network devices that support the network slice.

In a possible implementation, that the terminal device selects, based on the configuration information, an access network device that supports a requested network slice specifically includes: The terminal device may select, based on the configuration information, one of the one or more access network devices that support the network slice requested by the terminal device.

In a possible implementation, the at least one network slice included in the configuration information includes the network slice requested by the terminal device.

In a possible implementation, the at least one network slice included in the configuration information is one or more slices supported by a network or is a network slice that the terminal device is allowed to use or subscribe to.

In a possible implementation, the configuration information is preconfigured on the terminal device, or the terminal device obtains the configuration information through a core network device.

In a possible implementation, the core network device is a policy control device, a mobility management device, a session management device, a user plane device, a unified data management device, a network repository device, or a network exposure function device.

In a possible implementation, the terminal device obtains the configuration information through a configuration update procedure.

In a possible implementation, the access network device is a TNAN, a TNGF, a TNAP, an N3IWF, or a WLAN access point (for example, an access point, AP).

According to a sixth aspect, a communication apparatus is provided. The communication apparatus includes a sending module, a receiving module, and a processing module. The sending module is configured to send a first message to a mobility management device through a first access network device, where the first message includes an identifier of at least one network slice, and indicates a request for accessing the network slice. The receiving module is configured to receive a second message through the first access network device or a second access network device, where the second message includes information about the second access network device, and indicates that the second access network device supports one or more of the at least one network slice. The processing module is configured to establish a connection to the second access network device.

In a possible implementation, the second message indicates that the first access network device does not support one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, if the second message is a registration accept message, before the receiving a second message, the processing module is further configured to: complete, by a terminal device, an authentication and security procedure, and establish an Internet protocol security IPsec SA communication tunnel.

In a possible implementation, the processing module is further configured to perform, by the terminal device, a deregistration procedure through the first access network device.

In a possible implementation, the second message includes second indication information, and the second indication information indicates the terminal device to change an access network device.

In a possible implementation, the receiving module is further configured to receive third information, where the third information indicates to release a connection between the terminal device and the first access network device.

In a possible implementation, the receiving module is further configured to receive allowed slice information, where the allowed slice information includes first slice information supported by the second access network device, and the first slice information includes an identifier of at least one network slice. The allowed slice information corresponding to the terminal device is updated, so that updated allowed slice information includes the slice information that is requested by the terminal device and that is supported by the second access network device. This simplifies an interaction procedure, and effectively resolves a problem that the terminal device cannot be accurately connected to the access network device to obtain a network slice service.

In a possible implementation, the allowed slice information includes second slice information that the terminal device requests to access, the second slice information includes an identifier of at least one network slice, and the first slice information is the same as or different from the second slice information.

In a possible implementation, the receiving module is further configured to obtain fourth information, where the fourth information indicates that slice information is allowed to be included when the terminal device establishes the connection and/or indicates a procedure to be performed.

In a possible implementation, the sending module is further configured to send fifth information, where the fifth information includes third slice information, the third slice information includes an identifier of at least one network slice, and the third slice information is the same as or different from the first slice information or the second slice information.

In a possible implementation, the fifth information may be sent through a service request procedure, a periodic registration update procedure, a mobility registration update procedure, or a registration procedure used to update a capability of the terminal device.

In a possible implementation, the sending module is further configured to send, to the second access network device, indication information indicating that an establishment cause is access network device update, reselection, or redirection.

According to a seventh aspect, a communication apparatus is provided. The communication apparatus includes a sending module, a receiving module, and a processing module. The receiving module is configured to receive a first message from a terminal device through a first access network device, where the first message includes an identifier of at least one network slice, and indicates that the terminal device requests to access the network slice. If the processing module is configured to determine that the first access network device does not support one or more of the at least one network slice, and that a second access network device supports one or more of the at least one network slice, the sending module is configured to send a second message to the terminal device through the first access network device, where the second message includes information about the second access network device, and indicates that the second access network device supports the one or more of the at least one network slice.

In a possible implementation, the at least one network slice is a first network slice. If the processing module determines that the first access network device does not support the first network slice, and determines that the second access network device supports the first network slice, the sending module is configured to send the second message to the terminal device through the first access network device.

In a possible implementation, the second message indicates that the first access network device does not support the one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, the second message is a registration reject message.

In a possible implementation, the second message includes second indication information, and the second indication information indicates the terminal device to change a corresponding access network device.

In a possible implementation, the receiving module is further configured to receive an identifier of the terminal device, where the identifier of the terminal device is used by an access network device to determine the terminal device.

In a possible implementation, the sending module is further configured to send a first request message to the second access network device, where the first request message includes the identifier of the terminal device, and requests to change the access network device for the terminal device. The receiving module is further configured to receive a first response message from the second access network device, where the first response message includes the address of the second access network device.

In a possible implementation, the processing module is further configured to store fourth slice information that the terminal device requests to access, where the fourth slice information includes an identifier of at least one network slice.

In a possible implementation, the identifier of the network slice that the terminal device requests to access includes an identifier of at least one network slice not supported by the first access network.

In a possible implementation, the sending module is further configured to send allowed slice information to the terminal device, where the allowed slice information includes first slice information, and the first slice information includes an identifier of at least one network slice.

In a possible implementation, the allowed slice information includes second slice information that the terminal device requests to access, the second slice information includes an identifier of at least one network slice, and the first slice information is the same as or different from the second slice information.

In a possible implementation, the sending module is further configured to send third information, where the third information indicates to release a connection between the terminal device and the first access network device.

In a possible implementation, the sending module is further configured to send fourth information to the terminal device through the first access network device, where the fourth information indicates that slice information is allowed to be included when the terminal device establishes a connection and/or indicates a procedure to be performed.

In a possible implementation, the receiving module is further configured to receive fifth information from the terminal device through the second access network device, where the fifth information includes third slice information that the terminal device requests to access, the third slice information includes an identifier of at least one network slice, and the third slice information is the same as or different from the first slice information or the second slice information.

In a possible implementation, the fifth information may be sent through a service request procedure, a periodic registration update procedure, a mobility registration update procedure, or a registration procedure used to update a capability of the terminal device.

In a possible implementation, the processing module is further configured to update the allowed slice information based on the fourth slice information or the third slice information.

In a possible implementation, the sending module is further configured to: send, to the second access network device, the allowed slice information corresponding to the terminal device; and/or send the allowed slice information to the terminal device through the second access network device.

According to an eighth aspect, a communication apparatus is provided. The communication apparatus includes a sending module, a receiving module, and a processing module. The receiving module is configured to receive a first message from a terminal device through a first access network device, where the first message includes an identifier of at least one network slice, and indicates that the terminal device requests to access the network slice. If the processing module determines that the first access network device does not support one or more of the at least one network slice, and that a second access network device supports one or more of the at least one network slice, the sending module is configured to send a second message to the second access network device, where the second message indicates the second access network device to send information about the second access network device to the terminal device, and the information about the second access network device is used by the terminal device to establish a connection to the second access network device.

In a possible implementation, the sending module is further configured to send a second request message to the first access network device, where the second request message requests to obtain an identifier of a non-3GPP access point connected to the terminal device. The receiving module is further configured to receive, from the first access network device, the identifier of the non-3GPP access point connected to the terminal device.

In a possible implementation, the sending module is further configured to send a third request message to the second access network device, where the third request message includes the identifier of the non-3GPP access point.

In a possible implementation, the third request message further includes third indication information, and the third indication information indicates to change an access network device for the terminal device, indicates that the terminal device is migrated from another access network device, or indicates that the terminal device was previously connected to another access network device.

In a possible implementation, the third request message is for setting up context information of the terminal device.

According to a ninth aspect, a communication apparatus is provided. The communication apparatus includes a sending module, a receiving module, and a processing module. The receiving module is configured to receive a first message from a terminal device, where the first message includes an identifier of at least one network slice, and the first request indicates that the terminal device requests to access the network slice. The sending module is configured to send the first message to a mobility management device. The receiving module is further configured to receive a second message from the mobility management device, where the second message includes information about a second access network device, and indicates that the second access network device supports one or more of the at least one network slice. The sending module is further configured to send the second message to the terminal device.

In a possible implementation, the second message indicates that a first access network device does not support one or more of the at least one network slice.

In a possible implementation, the first message includes first indication information, and the first indication information indicates to obtain information about an access network device that supports the at least one network slice or indicates to match a corresponding access network device based on the first message.

In a possible implementation, the information about the second access network device includes at least one of an identifier of the second access network device or an address of the second access network device.

In a possible implementation, the second message further includes an identifier that is of one or more of the at least one network slice and that is included in the first message.

In a possible implementation, the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

In a possible implementation, if the second message is a registration reject message, the processing module is configured to release, by the first access network device, a connection to the terminal device.

In a possible implementation, the second message includes second indication information, and the second indication information indicates the terminal device to change an access network device.

In a possible implementation, the receiving module is configured to receive an identifier of the terminal device, where the identifier of the terminal device is used by an access network device to determine the terminal device.

According to a tenth aspect, a communication apparatus is provided. The communication apparatus includes a processing module, configured to obtain configuration information, and select, based on the configuration information, an access network device that supports a requested network slice.

In a possible implementation, the configuration information is one or more of a WLAN selection policy (for example, a WLAN selection policy, WLANSP), N3IWF identifier configuration information (for example, an N3IWF identifier configuration), or non-3GPP access point selection information (for example, non-3GPP access node selection information).

In a possible implementation, the configuration information includes information about at least one access network device and information about a network slice corresponding to the access network device.

In a possible implementation, the processing module is configured to select, from a selectable access network device based on the configuration information, an access network device that matches at least one network slice requested by the terminal device.

In a possible implementation, the configuration information includes information about at least one network slice and access network device information of one or more access network devices that support the network slice.

In a possible implementation, the processing module is configured to select, based on the configuration information, one of the one or more access network devices that support the network slice requested by the terminal device.

In a possible implementation, the at least one network slice included in the configuration information includes the network slice requested by the terminal device.

In a possible implementation, the at least one network slice included in the configuration information is one or more slices supported by a network or is a network slice that the terminal device is allowed to use or subscribe to.

In a possible implementation, the configuration information is preconfigured on the communication apparatus, or the processing module is configured to obtain the configuration information through a core network device.

In a possible implementation, the core network device is a policy control device, a mobility management device, a session management device, a user plane device, a unified data management device, a network repository device, or a network exposure function device.

In a possible implementation, the processing module is configured to obtain the configuration information through a configuration update procedure.

In a possible implementation, the access network device is a TNAN, a TNGF, a TNAP, an N3IWF, or a WLAN access point (for example, an access point, AP).

According to an eleventh aspect, a communication apparatus is provided. The communication apparatus includes a processor and a transmission interface. The processor is configured to execute instructions stored in a memory, to enable the apparatus to perform the method according to any possible implementation in the first aspect.

According to a twelfth aspect, a communication apparatus is provided. The communication apparatus includes a processor and a transmission interface. The processor is configured to execute instructions stored in a memory, to enable the apparatus to perform the method according to any possible implementation in the second aspect.

According to a thirteenth aspect, a communication apparatus is provided. The communication apparatus includes a processor and a transmission interface. The processor is configured to execute instructions stored in a memory, to enable the apparatus to perform the method according to any possible implementation in the third aspect.

According to a fourteenth aspect, a communication apparatus is provided. The communication apparatus includes a processor and a transmission interface. The processor is configured to execute instructions stored in a memory, to enable the apparatus to perform the method according to any possible implementation in the fourth aspect.

According to a fifteenth aspect, a communication apparatus is provided. The communication apparatus includes a processor and a transmission interface. The processor is configured to execute instructions stored in a memory, to enable the apparatus to perform the method according to any possible implementation in the fifth aspect.

According to a sixteenth aspect, a computer-readable storage medium is provided, and includes a program or instructions. When the program or the instructions are run by a processor, the method according to any possible implementation in the first aspect is performed.

According to a seventeenth aspect, a computer-readable storage medium is provided, and includes a program or instructions. When the program or the instructions are run by a processor, the method according to any possible implementation in the second aspect is performed.

According to an eighteenth aspect, a computer-readable storage medium is provided, and includes a program or instructions. When the program or the instructions are run by a processor, the method according to any possible implementation in the third aspect is performed.

According to a nineteenth aspect, a computer-readable storage medium is provided, and includes a program or instructions. When the program or the instructions are run by a processor, the method according to any possible implementation in the fourth aspect is performed.

According to a twentieth aspect, a computer-readable storage medium is provided, and includes a program or instructions. When the program or the instructions are run by a processor, the method according to any possible implementation in the fifth aspect is performed.

According to a twenty-first aspect, a computer program product is provided. When the computer program product runs on a computer or a processor, the computer or the processor is enabled to perform the method according to any possible implementation in the first aspect.

According to a twenty-second aspect, a computer program product is provided. When the computer program product runs on a computer or a processor, the computer or the processor is enabled to perform the method according to any possible implementation in the second aspect.

According to a twenty-third aspect, a computer program product is provided. When the computer program product runs on a computer or a processor, the computer or the processor is enabled to perform the method according to any possible implementation in the third aspect.

According to a twenty-fourth aspect, a computer program product is provided. When the computer program product runs on a computer or a processor, the computer or the processor is enabled to perform the method according to any possible implementation in the fourth aspect.

According to a twenty-fifth aspect, a computer program product is provided. When the computer program product runs on a computer or a processor, the computer or the processor is enabled to perform the method according to any possible implementation in the fifth aspect.

According to a twenty-sixth aspect, a communication system is provided. The communication system includes the apparatus according to any possible implementation in the sixth aspect and the apparatus according to any possible implementation in the seventh aspect.

In a possible implementation, the communication system includes the apparatus according to any possible implementation in the ninth aspect.

According to a twenty-seventh aspect, a communication system is provided. The communication system includes the apparatus according to any possible implementation in the sixth aspect and the apparatus according to any possible implementation in the eighth aspect.

In a possible implementation, the communication system includes the apparatus according to any possible implementation in the ninth aspect.

It may be understood that any communication method, communication apparatus, communication system, computer-readable storage medium, or computer program product, or the like provided above may be implemented by using the corresponding method provided above. Therefore, for beneficial effects that can be achieved by the communication method, the communication apparatus, the communication system, the computer-readable storage medium, the computer program product, or the like, refer to the beneficial effects in the corresponding method provided above. Details are not described herein again.

### BRIEF DESCRIPTION OF DRAWINGS

FIG. 1 to FIG. 3 each are an architectural diagram of a communication system according to an embodiment of this application;
FIG. 4 is a schematic flowchart of registration of a terminal device in a 3GPP access mode according to an embodiment of this application;
FIG. 5 is a schematic diagram of a manner of obtaining a network slice supported by an access network device according to an embodiment of this application;
FIG. 6 is an architectural diagram of another communication system according to an embodiment of this application;
FIG. 7 is a schematic diagram of a structure of a communication apparatus according to an embodiment of this application;
FIG. 8 to FIG. 13 are schematic flowcharts 1 to 6 of a communication method according to embodiments of this application;
FIG. 14 is a schematic diagram of a structure of another communication apparatus according to an embodiment of this application;
FIG. 15 is a schematic flowchart of another communication method according to an embodiment of this application; and
FIG. 16A and FIG. 16B are a schematic flowchart of another communication method according to an embodiment of this application.

### DESCRIPTION OF EMBODIMENTS

Terms "first" and "second" below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

It should be noted that, in this application, terms such as "example" or "for example" are used to indicate an example, an instance, or an illustration. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, related technologies in this application are briefly described.

Network slicing, referred to as slicing for short, means dividing a physical network into a plurality of virtual networks including a specific network function, a network topology, and a network resource, to meet service functions and quality of service requirements of users of different network slices. Through the network slicing, an operator can construct a plurality of dedicated, virtualized, and isolated logical subnets on a universal physical platform, to pertinently meet different requirements of different services of users for network capabilities. This provides an end-to-end (end-to-end, E2E) logical network that meets a specific service requirement.

An identifier of a network slice may be represented by network slice selection assistance information (network slice selection assistance information, NSSAI).

The NSSAI may include one or more pieces of single NSSAI (single NSSAI, S-NSSAI), where the NSSAI is an S-NSSAI set.

The S-NSSAI includes a slice/service type (slice/service type, SST) and a slice differentiator (slice differentiator, SD). The SST includes a standardized or operator-defined feature of the network slice in terms of a characteristic and a service. The SD is optional information for supplementing the SST, and is for distinguishing between different network slices with the same SST.

The NSSAI includes the following several types and functions.

Subscribed NSSAI (Subscribed NSSAI): belongs to a network slice corresponding to subscription data of a user.

Default NSSAI (Default NSSAI): To be specific, one or more network slices in the subscribed NSSAI of the user may be set as the default NSSAI according to an operator policy. When the default NSSAI is set, if user equipment does not include requested NSSAI in a registration request (Registration Request) message, a network provides a service for the user equipment by using the default NSSAI.

Requested NSSAI (Requested NSSAI): NSSAI identification information that is of a network slice and that is included by the user equipment in the registration request (Registration Request) message. Specifically, when the user equipment requests a specific service for the first time, the registration request message may carry configured NSSAI, namely, Configured NSSAI. When the user equipment requests the service again, the registration request message may carry allowed NSSAI as the requested NSSAI.

Allowed NSSAI (Allowed NSSAI): represents one or more pieces of S-NSSAI allowed by a network device in the requested NSSAI of the user equipment. Specifically, the network device may include the allowed NSSAI network element in a registration accept (Registration Accept) message to notify the user equipment of information about the allowed NSSAI.

Rejected NSSAI (Rejected NSSAI): represents one or more pieces of S-NSSAI rejected by the network device in the requested NSSAI of a terminal. For example, the network device may include the rejected NSSAI network element in the registration accept (Registration Accept) message to notify the terminal of information about the rejected NSSAI.

Configured NSSAI (Configured NSSAI): available NSSAI configured by the network for the terminal. The terminal receives, from the network device, an indication message for the configured NSSAI, to determine the available NSSAI in the network. Specifically, the network may include the configured NSSAI network element in the registration accept (Registration Accept) message to notify the terminal of information about the configured NSSAI. The terminal may store, in non-volatile storage space, configured NSSAI configured by different networks, and each public land mobile network (Public Land Mobile Network, PLMN) may configure one piece of configured NSSAI. In addition, if the configured NSSAI configured by the network for the terminal changes after registration is completed, the network may notify, by using a configuration update command (Configuration Update Command), the terminal to update the information about the configured NSSAI.

Tracking area TA: is a basic unit for a core network to perform UE location update and paging. For example, coverage of a 4G or 5G mobile network is divided into a plurality of tracking areas TAs, so that the core network can determine a location of UE based on the TA. One TA may include one or more cells, in other words, one or more cells correspond to one TA. A tracking area identity (Tracking Area Identity, TAI) may be used as a unique identifier of the TA, and include a mobile country code (Mobile Country Code, MC), a mobile network code (Mobile Network Code, MNC), and a TA code (Tracking Area Code, TAC). The TAC may be broadcast in a SIB1 (System Information Block 1, SIB1, system information block) message.

A network slice that can be supported by an access network device may be configured based on the TA. To be specific, access network devices (for example, a base station, an N3IWF, a TNGF, a TWIF, or a W-AGF) of a same TA support a same network slice, and access network devices of different TAs may support different network slices.

The following briefly describes an implementation environment and an application scenario of embodiments of this application.

A communication method provided in embodiments of this application may be applied to a communication system of a 3rd generation partnership project (3rd generation partnership project, 3GPP) access type and a communication system of a non-3GPP access type.

The 3GPP access type may include the following access technologies: a long term evolution (Long Term Evolution, LTE) technology corresponding to a 4G cellular network, a new radio (New Radio, NR) technology corresponding to a 5G cellular network, a 3GPP-defined satellite (including a low-orbit satellite, a medium-orbit satellite, and a synchronous satellite) access mode, and the like.

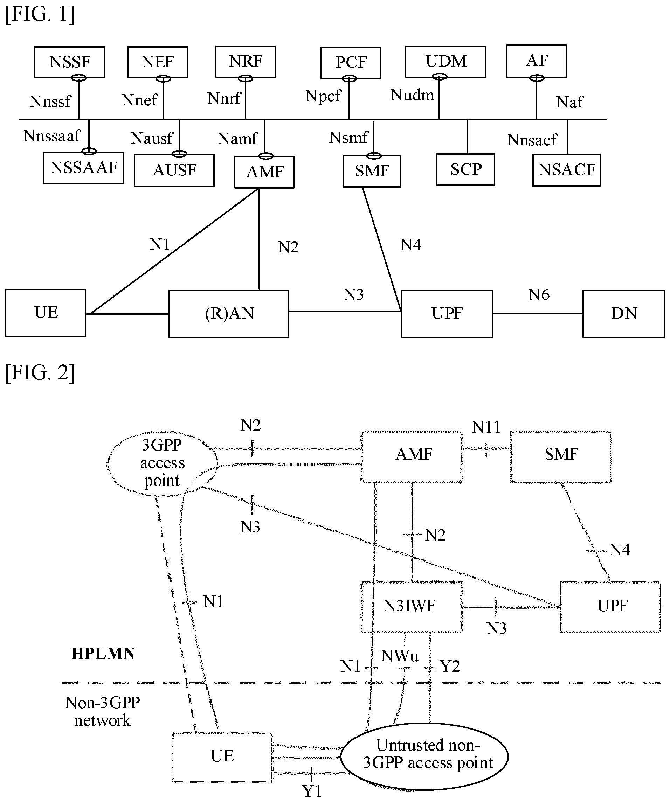

For example, FIG. 1 shows an interaction relationship between network functions (network functions, NFs) and entities and corresponding interfaces by using a network service architecture of a 5G mobile communication system as an example.

Network functions and entities included in a service-based architecture (service-based architecture, SBA) of the 5G system mainly include: a terminal device, an access network (access network, AN) or a radio access network (radio access network, RAN), a user plane function (user plane function, UPF), a data network (data network, DN), an access and mobility management function (access and mobility management function, AMF), a session management function (session management function, SMF), an authentication server function (authentication server function, AUSF), a policy control function (policy control function, PCF), an application function (application function, AF), a network slice selection function (network slice selection function, NSSF), a unified data management (unified data management, UDM), a network slice admission control function (network slice admission control function, NSACF), a network slice-specific authentication and authorization function (network slice-specific authentication and authorization function, NSSAAF), a network exposure function (network exposure function, NEF), and a network function storage function (NF repository function, NRF).

The UE, the (R)AN, the UPF, and the DN are generally referred to as user plane network functions and entities (or user plane network elements or user plane channels), and the other parts are generally referred to as control plane network functions and entities (or control plane network elements). A processing function of the control plane network element in one network is defined by 3GPP. The control plane network element has a 3GPP-defined function behavior and a 3GPP-defined interface. The NF can be used as a network element running on dedicated hardware, a software instance running on dedicated hardware, or a virtual function that is instantiated on an appropriate platform. For example, the NF is implemented on a cloud infrastructure.

Main functions of the network elements are described in detail below.

The terminal device may also be referred to as user equipment (user equipment, UE), a mobile station, a mobile terminal, or the like. In FIG. 1, the UE represents the terminal. The terminal may be widely used in various scenarios, for example, a device-to-device (device-to-device, D2D) scenario, a vehicle-to-everything (vehicle-to-everything, V2X) communication scenario, a machine-type communications (machine-type communications, MTC) scenario, an Internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form used by the terminal are not limited in embodiments of this application.

(R)AN: The (R)AN may be the AN or the RAN. Specifically, the RAN may be radio access network devices in various forms, for example, a base station, a macro base station, a micro base station, or a distributed unit-control unit (distributed unit-control unit, DU-CU). In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, quality of service management, data compression and encryption, and the like on an air interface side. The AN may be a non-3GPP access network, for example, a trusted non-3GPP access network (trusted non-3GPP access network, TNAN), a trusted WLAN access network (trusted WLAN access network, TWAN), an untrusted non-3GPP radio access network, a wireline access network (wireline access network, WAN), or a wireline-5G access network (wireline-5G access network, W-5GAN). An access network device corresponding to the trusted non-3GPP access network may be a trusted non-3GPP gateway function (trusted non-3GPP gateway function, TNGF). An access network device corresponding to the trusted WLAN access network may be a trusted WLAN interworking function (trusted WLAN interworking function, TWIF). An access network device corresponding to the untrusted non-3GPP access network may be a non-3GPP interworking function (non-3GPP interworking function, N3IWF). An access network device corresponding to the wireline access network or the wireline-5G access network may be a wireline-access gateway function (wireline-access gateway function, W-AGF).

User plane device: may be referred to as the user plane function (user plane function, UPF) or a user plane network element, and is mainly responsible for user data forwarding and receiving. The UPF may receive downlink data from the DN, and then transmit the downlink data to the UE through the (R)AN. The UPF may further receive uplink data from the UE through the (R)AN, and then forward the uplink data to the DN.

Mobility management device: may also be referred to as the access and mobility management function (access and mobility management function, AMF), a mobility management function, a mobility management entity, an access and mobility management device, and an access and mobility management entity. An AMF entity may also be referred to as the access and mobility management function, the access and mobility management device, an access and mobility management network element, an access management device, the mobility management device, and the like. The AMF entity is a type of core network device, is mainly used for mobility management, access management, and the like, and may be configured to implement functions, such as lawful interception, access authorization (or authentication), user equipment registration, mobility management, a tracking area update procedure, reachability detection, session management network element selection, and mobility state transition management, other than session management in functions of the mobility management entity (mobility management entity, MME). For example, in 5G, the access and mobility management network element may be an access and mobility management function AMF network element. In future communication, for example, in 6G, the access and mobility management network element may still be the AMF network element or have another name. This is not limited in this application. When the access and mobility management network element is the AMF network element, the AMF may provide an Namf service.

Session management device: also referred to as the session management function (session management function, SMF) or a session management entity, is configured to perform functions such as session management, control policy execution, user plane function network element selection, and Internet protocol (internet protocol, IP) address assignment to the terminal.

Network repository device: also referred to as the network repository function (network repository function, NRF). An NRF network element may also be referred to as a network repository function device or a network repository function network element. The network element function may support a service discovery function. The network element function receives a network element discovery request from a network element function or a service communication proxy (SCP), and may feed back information about a discovered network element function. In addition, the network element function is also responsible for maintaining information about available network functions and services supported by the network functions. A discovery procedure is a procedure in which a requesting network function (NF) implements addressing of a specific NF or service through the NRF. The NRF provides an IP address, a full qualified domain name (full qualified domain name, FQDN), or a URI of a corresponding NF instance or NF service instance. The NRF may further provide a network identifier (for example, a public land mobile network identifier, PLMN ID) to implement an inter-PLMN discovery procedure. To implement network element function addressing and discovery, each network element needs to be registered with the NRF. Some network element functions may be registered with the NRF during first time of running. The network repository function device may be a core network device.

Authentication server device: also referred to as the authentication server function (authentication server function, AUSF) and an authentication server network element, is configured to perform primary authentication, namely, authentication between the terminal device and an operator network. After receiving an authentication request initiated by a subscriber, the authentication server network element may perform authentication and/or authorization on the subscriber by using authentication information and/or authorization information stored in the unified data management network element, or generate authentication and/or authorization information of the subscriber through the unified data management network element. The authentication server network element may feed back the authentication information and/or the authorization information to the subscriber. In an implementation, the authentication server network element may also be co-located with the unified data management network element. In a 5G communication system, the authentication server network element may be an authentication server function (authentication server function, AUSF) network element. In a future communication system, the unified data management may still be the AUSF network element or may have another name. This is not limited in this application.

Unified data management device: also referred to as the unified data management (unified data management, UDM) and a data management network element, is configured to process an identifier of the terminal device, and perform access authentication, registration, mobility management, and the like. In the 5G communication system, the data management network element may be a unified data management (unified data management, UDM) network element or the unified data management device. In the future communication system, the unified data management may still be the UDM network element or may have another name. This is not limited in this application. The unified data management device may be a core network device.

For functions of the other network elements included in FIG. 1, refer to related descriptions in a conventional technology. Details are not described herein.

In addition, the communication method provided in embodiments of this application may be applied to the communication system of the non-3GPP access type. The non-3GPP access type includes untrusted non-3GPP access (untrusted non-3GPP access) (for example, access to a core network through an individually purchased wireless access node), a trusted non-3GPP access network (trusted non-3GPP access Network, TNAN) (for example, access to a core network through a wireless access node deployed by an operator), a wireline access (wireline access) technology, and the like. Access technologies of the non-3GPP access may include a wireless communication technology (Wi-Fi), Bluetooth, ZigBee (ZigBee), and the like.

A non-3GPP access network device may be specifically a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), a wireline-access gateway function (wireline-access gateway function, W-AGF), or the like. The W-AGF may also be referred to as an AGF. If the access technology is the untrusted non-3 GPP access technology, a non-3GPP access network device corresponding to the untrusted non-3GPP access technology may include the N3IWF. A network topology of the N3IWF is equivalent to the RAN in FIG. 1, namely, the 3GPP access network, and may support an N2 interface and an N3 interface. If the access technology is the trusted non-3GPP access technology, a non-3GPP access network device corresponding to the trusted non-3GPP access technology may include the TNGF. A network topology of the TNGF is equivalent to the RAN in FIG. 1, namely, the 3GPP access network, and may support an N2 interface and an N3 interface.

A communication system shown in FIG. 2 is a schematic diagram of an untrusted non-3GPP access system according to an embodiment of this application. After a terminal device first establishes a connection to an untrusted non-3GPP access point and obtains an Internet protocol (internet protocol, IP) address, the terminal device obtains IP identification information, for example, address information, of an N3IWF through a DNS server according to an N3IWF discovery and selection criterion. Then, the terminal device establishes an Internet protocol security (internet protocol security, IPsec) tunnel with the N3IWF, and accesses a core network through the N3IWF.

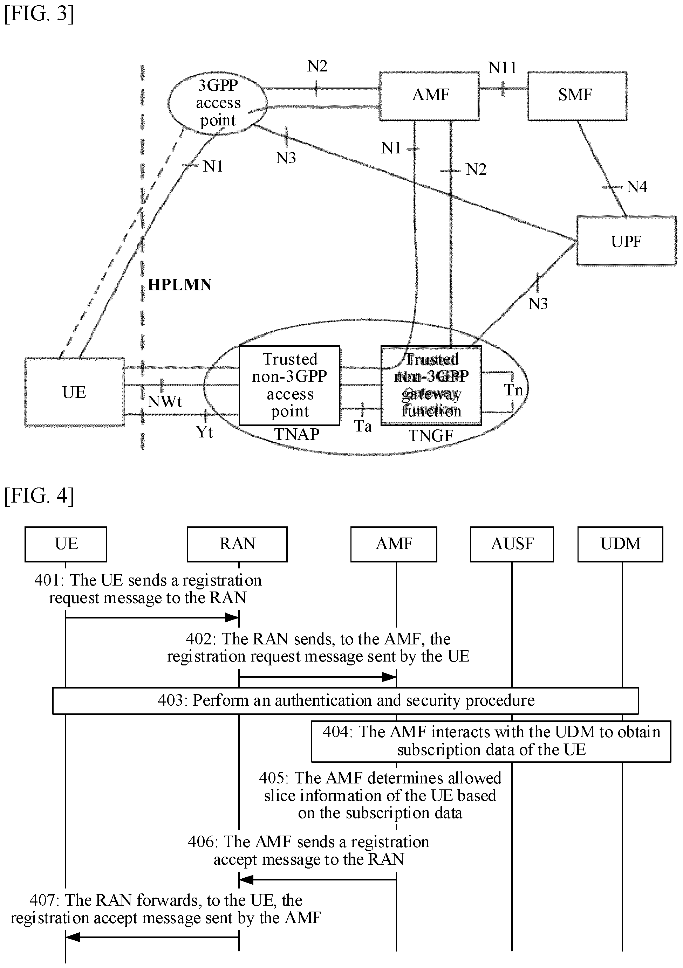

A communication system shown in FIG. 3 is a schematic diagram of a trusted non-3GPP access system according to an embodiment of this application. For example, the trusted non-3GPP access system includes a Wi-Fi AP deployed in a public place. A terminal device first selects a PLMN, and selects a non-3GPP access network that provides a trusted connection and that is in the PLMN. The terminal device then selects a connection type.

The following describes functions of devices shown in FIG. 2 and FIG. 3.

The untrusted non-3GPP access point may be an access point deployed by a non-operator, for example, a Wi-Fi access point (access point, AP) deployed at home or by a merchant.

The N3IWF may be configured to allow the terminal device to implement interconnection and interworking with the 3GPP core network by using a non-3GPP technology. The N3IWF supports communication the N2 interface and a mobility management device, and supports communication between the N3 interface and a user plane device.

The trusted non-3GPP access point may be an access point deployed by an operator, and may be referred to as a trusted non-3GPP access point (trusted N3GPP Access Point, TNAP).

The TNAP may be configured to send an authentication, authorization, and accounting (authentication, authorization, and accounting, AAA) message, for example, encapsulate an extensible authentication protocol (extensible authentication protocol, EAP) data packet into the AAA message and interact with a TNGF, to forward an EAP message.

The TNGF may be configured to support the N2 interface and the N3 interface, and terminate EAP-5G signaling, and may implement functions such as AMF selection, processing of N2 signaling with an SMF (where the N2 signaling is relayed by an AMF) to support a session and quality of service (quality of service, QoS), and transparent relay of a protocol data unit (protocol data unit, PDU) between the terminal device and a user plane device.

The 3GPP access point may be an access point deployed by an operator.

Currently, for the 3GPP access type, UE may obtain allowed slice information (Allowed NSSAI) through a registration procedure. As shown in FIG. 4, the registration procedure may include the following steps.

401: The UE sends a registration request message to a RAN.

Specifically, the UE may send an AN message to the RAN, where the AN message carries the registration request (Registration Request) message. The AN message may further include an AN parameter, and the AN parameter may be used by the RAN to select an AMF. The registration request message may include a registration type (Registration Type) and identification information of the UE, and may further include requested network slice information, for example, requested NSSAI (Requested NSSAI).

402: The RAN sends, to the AMF, the registration request message sent by the UE.

The RAN may select the appropriate AMF for the UE based on the AN message, and send the registration request message of the UE to the AMF.

403: Perform an authentication and security procedure.

The UE interacts with the AMF, an AUSF, and a UDM to complete the authentication and security procedure. For a detailed interaction process in the authentication and security procedure, refer to related technical descriptions in a current technology. Details are not described in this application.

404: The AMF interacts with the UDM to obtain subscription data of the UE.

After mutual authentication between the UE and a network side succeeds, the AMF interacts with the UDM to obtain the subscription data of the UE. The subscription data may include information such as subscribed NSSAI (Subscribed NSSAI), default NSSAI (Default NSSAI), and S-NSSAI subject to network slice-specific authentication and authorization (S-NSSAI subject to Network Slice-Specific Authentication and Authorization) that are of the UE.

405: The AMF determines allowed slice information of the UE based on the subscription data.

The AMF determines, based on the subscription data, the slice information allowed to be used by the UE, namely, slice information such as allowed NSSAI (Allowed NSSAI). Specifically, a network device may include the allowed NSSAI network element in a registration accept (Registration Accept) message, to notify the terminal device of information about the allowed NSSAI.

406: The AMF sends the registration accept message to the RAN.

Specifically, the AMF sends an N2 message to the RAN, where the N2 message may include a NAS message that needs to be forwarded by the RAN to the UE. The NAS message includes the registration accept message sent by the AMF to the UE, and the registration accept message includes the information about the allowed NSSAI that is of the UE and that is determined by the AMF based on the subscription data.

407: The RAN forwards, to the UE, the registration accept message sent by the AMF.

The RAN forwards the registration accept message to the UE by using a NAS message.

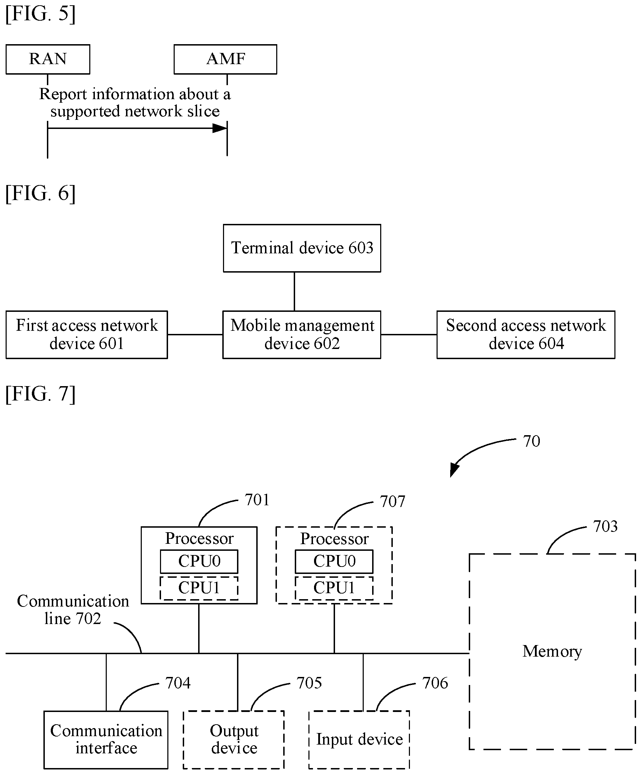

It should be noted that an access network device may report, to the AMF, information about a network slice supported by the access network device. For example, as shown in FIG. 5, the RAN may send a supported tracking area list (TA LIST) to the AMF by using an NG setup request message or a RAN configuration update message, where the TA list includes a supported TA item, and the TA item includes a TAC and a supported slice list corresponding to a tracking area (TAI Slice Support List). Therefore, the AMF may learn of specific slices supported by the access network device.

However, for a non-3GPP access network, a terminal device cannot learn of a TA of a non-3GPP access network device, and consequently cannot learn of a network slice supported by the non-3GPP access network device. When the terminal device accesses a core network through the non-3GPP access network device, and requests to obtain a slice service corresponding to a specific network slice, problems such as a failure of the terminal device in obtaining the slice service and a communication failure may be caused because the non-3GPP access network device does not support the network slice requested by the terminal device.

Based on the foregoing problem, this application provides an access network device determining method and an apparatus. When determining that an access network device currently connected to a terminal device does not support a network slice requested by the terminal device, a mobility management device may determine a target access network device based on information about a network slice supported by an access network device, and send information about the target access network device to the UE, so that the terminal device can be connected to the target access network device based on the information about the target access network device, and access a core network through the target access network device, to obtain a slice service. This improves communication efficiency.

Based on this, as shown in FIG. 6, an embodiment of this application provides a communication system. The access network device determining method provided in embodiments of this application may be applied to the communication system shown in any one of FIG. 1 to FIG. 3 and FIG. 6. The communication system 60 shown in FIG. 6 may include a first access network device 601, a mobility management device 602, and a terminal device 603.

The first access network device 601 may be specifically an access network device, for example, a base station or a RAN, in a 3GPP access type; or may be an N3IWF, a TNGF, a TWIF, a W-AGF, or the like in a non-3GPP access type.

Optionally, in an implementation, the communication system 60 may further include a second access network device 604. The first access network device 601 and the second access network device 604 may be access network devices of a same type. For example, if the first access network device 601 is an N3IWF-1, the second access network device 604 may be another N3IWF, for example, an N3IWF-2.

In an implementation, in the communication system 60 shown in FIG. 6, the terminal device 603 may send a first message to the mobility management device 602 through the first access network device 601, where the first message includes an identifier of at least one network slice, and indicates a request for accessing the network slice.

The terminal device 603 may receive a second message through the first access network device 601 or the second access network device 604, where the second message includes information about the second access network device 604, and indicates that the second access network device 604 supports one or more of the at least one network slice.

The terminal device 603 establishes a connection to the second access network device 604.

It may be understood that the devices or network elements in the communication system 60 may directly communicate with each other, or may communicate with each other through forwarding by another device. This is not specifically limited in this embodiment of this application.

It may be understood that FIG. 6 is merely a schematic diagram, and does not constitute a limitation on an applicable scenario of the technical solutions provided in this application. A person skilled in the art should understand that, in a specific implementation process, the communication system 60 may include fewer devices or network elements than those shown in FIG. 6, or may further include another device or another network element, and a quantity of devices or network elements in the communication system 60 may be determined based on a specific requirement.

It should be noted that the communication systems shown in FIG. 1 to FIG. 3 and FIG. 6 are merely used as examples, and are not intended to limit the technical solutions of this application. A person skilled in the art should understand that, in a specific implementation process, the communication system may further include another device or network element, and a quantity of network elements of each type may be determined based on a specific requirement.

Optionally, each network element in FIG. 1 to FIG. 3 and FIG. 6 in embodiments of this application may be a functional module in a device. It may be understood that the foregoing function may be a network element in a hardware device, for example, a communication chip in a mobile phone, may be a software function running on dedicated hardware, or may be a virtualization function instantiated on a platform (for example, a cloud platform).

For example, all the network elements in FIG. 1 to FIG. 3 and FIG. 6 may be implemented by a communication apparatus 700 in FIG. 7. FIG. 7 is a schematic diagram of a hardware structure of the communication apparatus usable in an embodiment of this application. The communication apparatus 700 includes at least one processor 701, a communication line 702, a memory 703, and at least one communication interface 704.

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 702 may include a path, for example, a bus, for transferring information between the foregoing components.

The communication interface 704 is configured to communicate with another device or a communication network by using any transceiver-type apparatus, and is, for example, an Ethernet interface, a RAN interface, or a wireless local area network (wireless local area network, WLAN) interface.

The memory 703 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that is accessible to a computer, but is not limited thereto. The memory may independently exist and is connected to the processor through the communication line 702. The memory may alternatively be integrated with the processor. The memory provided in embodiments of this application may be usually non-volatile. The memory 703 is configured to store computer-executable instructions for executing the solutions of this application, and the processor 701 controls the execution. The processor 701 is configured to execute the computer-executable instructions stored in the memory 703, to implement the method provided in embodiments of this application.

Optionally, the computer-executable instructions in embodiments of this application may also be referred to as application program code. This is not specifically limited in embodiments of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 707 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive an input from a user in a plurality of manners. For example, the input device 706 may be a mouse, a keyboard, a touchscreen device, or a sensor device.

The foregoing communication apparatus 700 may be a general-purpose device or a special-purpose device. During specific implementation, the communication apparatus 700 may be a portable computer, a network server, a personal digital assistant (personal digital assistant, PDA), a mobile phone, a tablet computer, a wireless terminal, an embedded device, or a device having a structure similar to that in FIG. 7. A type of the communication apparatus 700 is not limited in this embodiment of this application.

The following specifically describes the access network device determining method provided in embodiments of this application.

It should be noted that names of messages between network elements, names of parameters in the messages, or the like in the following embodiments of this application are merely examples, and there may be other names during specific implementation. This is not specifically limited in embodiments of this application.

It may be understood that some or all of steps in embodiments of this application are merely examples, and other steps or variations of various steps may be further performed in embodiments of this application. In addition, the steps may be performed in a sequence different from that presented in embodiments of this application, and not all the steps in embodiments of this application need to be performed.

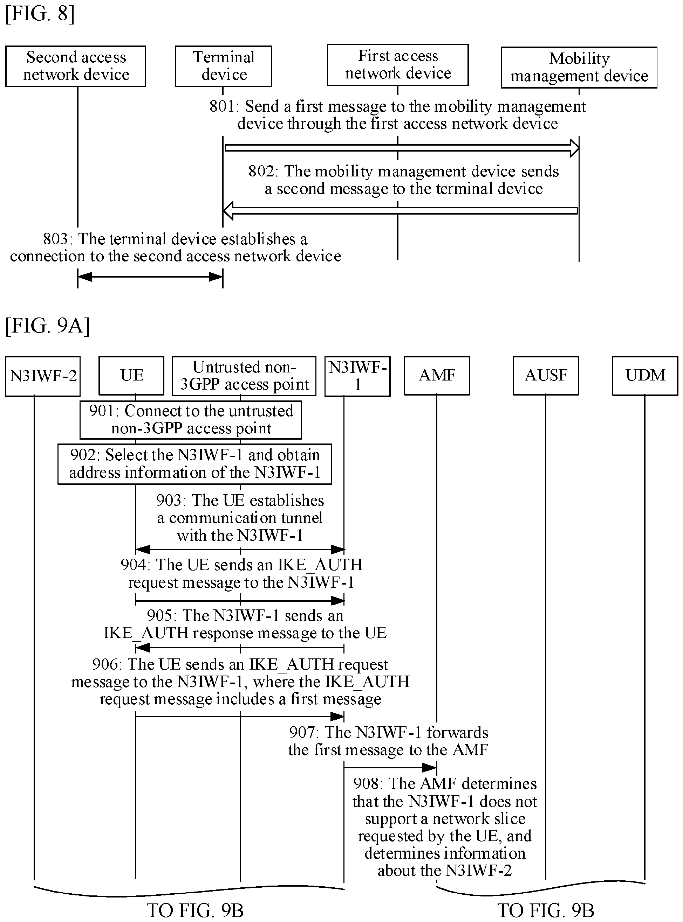

FIG. 8 shows an access network device determining method according to an embodiment of this application. An example in which a terminal device is UE is used. The method may include the following steps.

801: The terminal device sends a first message to a mobility management device through a first access network device.

The first message includes an identifier, for example, requested NSSAI or S-NSSAI, of at least one network slice. The first message indicates that the UE requests to access the network slice, to obtain a service corresponding to the at least one network slice.

In an implementation, the first message may be specifically a registration request (Registration Request) message. The registration request message sent by the UE may be carried in a NAS message, and is transparently transmitted by the first access network device to the mobility management device. The registration request may include the requested NSSAI (Requested NSSAI).

In an implementation, the first access network device may be any one of a trusted non-3GPP gateway function TNGF corresponding to a trusted non-3GPP access technology, a non-3GPP interworking function N3IWF corresponding to an untrusted non-3GPP access technology, a trusted wireless local area network WLAN interworking function TWIF corresponding to a trusted WLAN access technology, an access network device, for example, a wireline-access gateway function W-AGF, corresponding to a wireline access technology, an access network device corresponding to a non-3GPP access technology, or an access network device corresponding to a 3GPP access technology.

Correspondingly, a second access network device may be an access network device, for example, a base station or a RAN, in a 3GPP access type; or may be any one of an N3IWF, a TNGF, a TWIF, a W-AGF, or the like in a non-3GPP access type. A type of the second access network device is the same as that of the first access network device. For example, if the first access network device is an N3IWF-1, the second access network device may be another N3IWF, for example, an N3IWF-2.

In addition, in an implementation, the first message may further include first indication information, and the first indication information indicates to obtain information about an access network device that supports the at least one network slice or indicates to match or select a corresponding access network device based on the first message. In a possible implementation, matching or selecting the corresponding access network device may be understood as matching or selecting an access network device supporting the slice to which the terminal device requests to be connected or that is needed by the terminal device.

In other words, the UE may include the specific first indication information in the first message, to indicate that the UE may currently obtain, in a registration procedure, the information about the access network device that supports the network slice requested by the UE, or indicate that the access network device that supports the requested network slice may be matched or selected for the UE. Therefore, when it is determined that the first message does not carry the first indication information, registration may be completed through an existing registration procedure. When it is determined that the first message carries the first indication information, the appropriate access network device is matched or selected for the UE in the implementation of this application, and the information about the appropriate access network device is sent to the UE.

802: The mobility management device sends a second message to the terminal device.

When determining that the first access network device currently connected to the UE does not support a part or all of the network slices requested by the UE, the mobility management device may determine a target access network device, for example, the second access network device, based on information about a network slice supported by an access network device, and send information about the second access network device to the UE by using the second message, so that the UE can be connected to the second access network device based on the information about the second access network device.

The second message may include the information about the second access network device. For example, the information about the second access network device includes at least one of identification information, domain name information, an identifier (Identifier), a service set identifier (Service Set Identifier, SSID), a port number, or an address of the second access network device.

The second message may indicate that the second access network device supports one or more of the at least one network slice. In other words, the second message indicates, to the UE, that the second access network device can support a part or all of the network slices requested by the UE.

In an implementation, the second message may further indicate that the first access network device does not support one or more of the at least one network slice.

In other words, the second message may indicate, to the UE, that the first access network device does not support the part or all of the network slices requested by the UE, but the second access network device can support a part or all of network slices that are requested by the UE but not supported by the first access network device.

For example, the mobility management device may be an AMF, and the network slice identifiers carried in the first message sent by the UE include S-NSSAI-1 and S-NSSAI-2. If the AMF determines that the first access network device does not support the S-NSSAI-1 and supports only the S-NSSAI-2, and the second access network device supports the S-NSSAI-1 and the S-NSSAI-2, the second message sent by the AMF to the UE may indicate, to the UE, that the second access network device supports all the network slices requested by the UE.

In addition, in an implementation, when the first message of the UE includes a plurality of network slices, and the second access network device supports only a part of the plurality of network slices requested by the UE, in this implementation, the second message may further include an identifier that is of one or more of the at least one network slice and that is included in the first message.

For example, the network slice identifiers carried in the first message sent by the UE include S-NSSAI-1 and S-NSSAI-2. If the AMF determines that the first access network device does not support either the S-NSSAI-1 or the S-NSSAI-2, but the second access network device supports the S-NSSAI-1, the second message sent by the AMF to the UE may include the identifier of the one or more network slices that are in the at least one network slice requested by the UE and that are supported by the second access network device, in other words, include the S-NSSAI-1.

For another example, the network slice identifiers carried in the first message sent by the UE include S-NSSAI-1 and S-NSSAI-2. If the AMF determines that the first access network device does not support either the S-NSSAI-1 or the S-NSSAI-2, but the second access network device supports the S-NSSAI-1 and the S-NSSAI-2, the second message sent by the AMF to the UE may include the S-NSSAI-1 and the S-NSSAI-2.

In an implementation, the mobility management device may send the second message to the UE through the first access network device or the second access network device.

In a possible implementation, the second message may be a response message in response to the first message. For example, the first message may be the registration request message, and the second message may be a registration accept message or a registration reject message. In another possible implementation, the second message may not be in response to the first message. For example, the first message may be the registration request message, but the second message may not be a registration accept message or a registration reject message. The second message may be another message, and a name may not be a response (response) message, but may be another message or signaling, for example, extensible authentication protocol (Extensible Authentication Protocol, EAP) message or signaling. The second message may be another request message, for example, an EAP-req/5G-notification message or signaling.

Correspondingly, the UE may receive the second message through the first access network device or the second access network device. A specific implementation is described in detail below with reference to a corresponding scenario and flowchart, and details are not described herein.

803: The terminal device establishes the connection to the second access network device.

The UE may be connected to the second access network device based on the information about the second access network device, access a core network through the second access network device, complete the registration procedure, and obtain the requested network slice service. For a specific process, refer to related descriptions in a conventional technology. This is not specifically limited in this application.

In the foregoing manner, when determining, based on the information about the slice supported by the access network device, that the access network device currently connected to the UE does not support the network slice requested by the UE, the mobility management device may determine the target access network device that supports a part or all of the network slices requested by the UE, and send information about the target access network device to the UE, so that the UE can be connected to the target access network device based on the information about the target access network device and access the core network through the target access network device. This effectively resolves a problem that the UE cannot be accurately connected to the access network device in the non-3GPP access type to obtain the network slice service.

In an implementation, the second message may be specifically the registration reject message or the registration accept message, or may be carried in the registration reject message or the registration accept message. To be specific, the mobility management device may include the information about the second access network device in the registration reject (Registration Reject) message or the registration accept (Registration Accept) message, to send the information about the second access network device to the UE, so that the UE can be connected to the second access network device based on the information about the second access network device and access the core network through the second access network device.

If the second message is the registration accept message, the UE may complete an authentication and security procedure, and establish an Internet protocol security IPsec SA communication tunnel with the first access network device. Then, after receiving the registration accept message, the UE may perform a deregistration procedure, or may perform a deregistration procedure through the first access network device, and subsequently establish the connection to the second access network device based on the information about the second access network device in the registration accept message. If the second message is the registration reject message, the UE may establish the connection to the second access network device based on the information about the second access network device in the registration reject message.

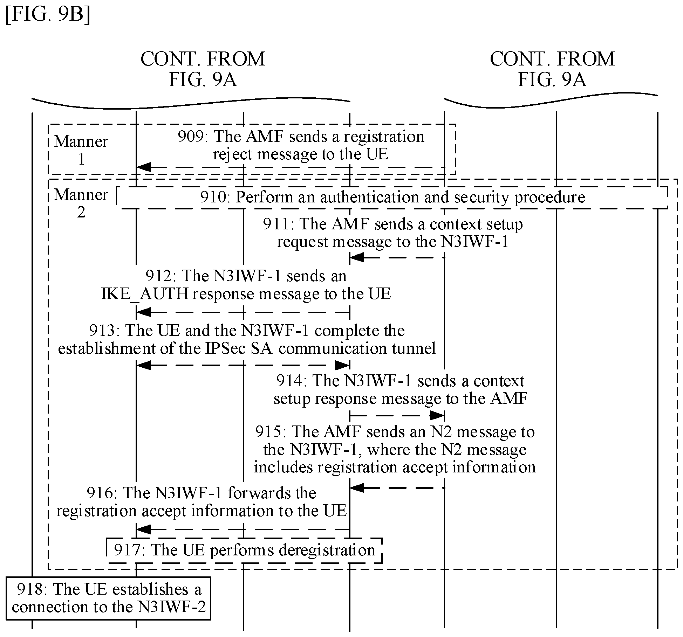

For example, in the following embodiment of this application, a specific procedure for the access network device determining method is described with reference to FIG. 9A and FIG. 9B by using an example in which UE accesses an untrusted non-3GPP access network device in a non-3GPP access type. It should be noted that this implementation is applicable to an access network device, for example, a base station, a RAN, a micro base station, or a macro base station, in a 3GPP access type, or is applicable to an access network device, for example, any one of an N3IWF, a TNGF, a TWIF, or a W-AGF, in the non-3GPP access type.

901: The UE connects to an untrusted non-3GPP access point.

Specifically, the untrusted non-3GPP access point may be specifically an access point deployed by a non-operator, for example, a Wi-Fi access point AP deployed at home or by a merchant.

When the UE requests to connect to the untrusted non-3GPP access point, the untrusted non-3GPP access point may assign an internal IP address to the UE.

902: The UE selects an N3IWF-1 and obtains address information of the N3IWF-1.

The UE selects the untrusted non-3GPP access network device, for example, the N3IWF-1, through the untrusted non-3GPP access point, and obtains the address information of the N3IWF-1.

In a possible implementation, the terminal device obtains configuration information, and selects, based on the configuration information, the access network device that supports a requested slice (or a needed slice). The configuration information may be one or more of a WLAN selection policy (for example, a WLAN selection policy, WLANSP), N3IWF identifier configuration information (for example, an N3IWF identifier configuration), or non-3GPP access point selection information (for example, non-3GPP access node selection information).

In a possible implementation, the configuration information includes information about one or more access network devices and slice information corresponding to or supported by the one or more access network devices. The information about the access network device may be one or more of identification information (for example, an identifier or an SSID), domain name information (for example, a domain name or an FQDN), address information (for example, an IP address), or port number information. The slice information may be one or more pieces of NSSAI, one or more pieces of S-NSSAI, or the like. The terminal device may select, based on the slice information that corresponds to or is supported by the information about the one or more access network devices and that is in the configuration information, one access network device from the one or more access network devices (which may be referred to as one or more optional access network devices) that support the slice requested or needed by the terminal device.

In a possible implementation, the access network device may be an N3IWF, a WLAN access point (for example, an access point, AP), a TNAN, a TNAP, or a TNGF. In a possible implementation, a slice corresponding to the slice information included in the configuration information may be a slice supported by the access network device, may be a slice that is in a slice supported by the access network device and that is allowed to be used by the terminal device, or may be a slice that is in a slice supported by the access network device and that is subscribed to by the terminal device.

In another possible implementation, the configuration information includes one or more pieces of slice information and information about an access network device corresponding to the one or more pieces of slice information. The access network device corresponding to the slice information may be understood as access network device information of an access network device that supports a slice. The information about the access network device may be one or more of identification information, domain name information (for example, a domain name or an FQDN), address information (for example, an IP address), or port number information. The slice information may be one or more pieces of NSSAI, one or more pieces of S-NSSAI, or the like. The terminal device may determine, based on the information about the access network device corresponding to the slice information in the configuration information, information about one or more access network devices that support the slice requested or needed by the terminal device, and select one access network device from the access network device corresponding to the information about the one or more access network devices. In a possible implementation, the access network device may be an N3IWF, a WLAN access point (for example, an access point, AP), a TNAN, a TNGF, or a TNAP. In a possible implementation, the slice corresponding to the one or more pieces of slice information included in the configuration information may be a slice supported by a network, may be a slice that is allowed to be used by the terminal device, or may be a slice that is subscribed to by the terminal device.

In a possible implementation, the configuration information may be pre-configured on the terminal device, or the terminal device may obtain the configuration information through a core network device. The core network device may be a policy control device, a mobility management device, a session management device, a user plane device, a unified data management device, a network repository device, a network exposure function device, or the like. In a possible implementation, the terminal device may obtain the configuration information through a registration procedure or a configuration update procedure (for example, a UE configuration update procedure).

In a possible implementation, when the terminal device does not obtain the configuration information, or the configuration information obtained by the terminal device does not include the slice information, the terminal device may select an access network device that does not support the slice requested or needed by the terminal device.

903: The UE establishes a communication tunnel with the N3IWF-1.

Specifically, the UE may initiate an Internet key exchange (Internet Key Exchange, IKE) initial exchange, to establish an Internet protocol security security association (IPsec Security Association, IPsec SA) with the N3IWF-1.

904: The UE sends an IKE_AUTH request message to the N3IWF-1.

The IKE_AUTH request message does not include an AUTH data payload (payload), to indicate that the IKE_AUTH request message is for EAP signaling exchange.

905: The N3IWF-1 sends an IKE_AUTH response message to the UE.

The IKE_AUTH response message includes an EAP-request (Request)/5G-start (Start) data packet. The EAP-request/5G-start data packet may notify the UE to initiate an EAP-5G session, for example, notify the UE to start to encapsulate a NAS message into the EAP-5G data packet, to send the NAS message.

906: The UE sends an IKE_AUTH request message to the N3IWF-1, where the IKE_AUTH request message includes a first message.

The IKE_AUTH request message may include an EAP-response (Response)/5G-NAS data packet, and the 5G-NAS data packet includes an AN parameter and the first message.

Specifically, refer to step 801 shown in FIG. 8. The IKE_AUTH request message sent by the UE to the N3IWF-1 carries the first message sent by the UE to an AMF, and the N3IWF-1 forwards the first message to the AMF. For example, the first message may be a registration request, and carries requested NSSAI (Requested NSSAI).

The AN parameter includes parameter information, for example, a GUAMI or a selected PLMN ID (or a PLMN ID and a NID), used by the N3IWF-1 to select the AMF.

In an implementation, the first message may include first indication information, and the first indication information indicates to obtain information about an access network device that supports at least one network slice or indicates to match a corresponding access network device based on the first message.

907: The N3IWF-1 forwards the first message to the AMF.

The N3IWF-1 selects the AMF, and forwards the first message to the AMF. Specifically, the N3IWF-1 may include, through an N2 interface, the first message in an N2 message to be sent to the AMF.

908: The AMF determines that the N3IWF-1 does not support the network slice requested by the UE, and determines information about an N3IWF-2.

In a possible implementation, the AMF determines, based on a configuration update procedure (for example, a RAN configuration update procedure) between the N3IWF-1 and the AMF, network slice information supported by the N3IWF-1. When a part or all of the requested network slices sent by the UE are not supported by the N3IWF-1, the AMF determines that the N3IWF-1 does not support the network slice requested by the UE.

Specifically, when the AMF determines that the N3IWF-1 currently connected to the UE does not support the part or all of the network slices requested by the UE, the AMF may obtain, based on information about network slices respectively supported by a plurality of N3IWF network elements, the information about the access network device, for example, the N3IWF-2, that supports (a part or all of) the network slices requested by the UE.

In a possible implementation, in the one or more network slices requested by the UE, a quantity of network slices supported by the N3IWF-2 is greater than a quantity of network slices supported by the N3IWF-1, and the AMF determines to change or reselect an access network device N3IWF for the UE.

In a possible implementation, the AMF may determine, based on the first indication information included in the received first message, to select a matched or an appropriate access network device for the UE, to select a matched or an appropriate access network device for the UE and support the network slice requested by the UE, or to indicate, to the UE, information about the access network device that supports the network slice requested by the UE. In a possible implementation, in this embodiment of this application, the network slice requested by the UE may be understood as the network slice needed by the UE.

A specific implementation in which the AMF subsequently indicates the information about the N3IWF-2 to the UE may include the following two manners.

Manner 1: The AMF indicates the information about the N3IWF-2 to the UE by using a registration reject message, and performs step 909.

909: The AMF sends the registration reject message to the UE.

When the AMF determines that the N3IWF-1 currently connected to the UE does not support all or the part of the network slices requested by the UE, the AMF may send the registration reject message (a NAS message) to the UE through the N3IWF-1, and include, in the registration reject message, the information that is about the N3IWF-2 and that is determined by the AMF in step 908.

In a possible implementation, optionally, the registration reject message may further include an identifier of at least one network slice corresponding to the N3IWF-2. In other words, the AMF may send, to the UE, the information about the N3IWF-2 and at least one piece of slice information corresponding to the N3IWF-2. The network slice information corresponding to the N3IWF-2 may be network slice information supported by the N3IWF-2, or may be network slice information that is in the at least one network slice requested by the UE and that is supported by the N3IWF-2.

Manner 2: The AMF indicates the information about the N3IWF-2 to the UE by using a registration accept message, and performs steps 910 to 916.

In other words, when determining that the N3IWF-1 currently connected to the UE does not support all or the part of the network slices requested by the UE, the AMF does not reject access of the UE or does not immediately reject the access of the UE, but continues to perform the registration procedure, and feeds back, to the UE by using the registration accept message, the information that is about the N3IWF-2 and that is determined in step 908.

910: Perform an authentication and security procedure.

The AMF may determine to perform an authentication procedure on the UE. Specifically, the AMF selects an AUSF, and sends an authentication request message to the AUSF. Subsequently, the AUSF performs the authentication procedure on the UE and obtains authentication data from a UDM. All authentication-related data packets may be encapsulated by using a NAS message, and all NAS messages may be encapsulated by using an EAP/5G-NAS data packet.

After completing the authentication, the AUSF may send a security anchor function (SEcurity Anchor Function, SEAF) key to the AMF. The AMF may derive a NAS security key and a security key for the N3IWF-1 by using the SEAF key. The key for the N3IWF-1 is used by the UE and the N3IWF-1 to establish the IPsec SA communication tunnel.

The AMF sends a NAS security mode command (NAS Security Mode Command) to the UE to activate NAS communication security. The NAS security mode command may include an EAP-success (Success), where the EAP-success indicates that EAP-AKA authentication performed by a core network succeeds. The N3IWF forwards, to the UE, the NAS security mode command sent by the AMF, and sends, to the AMF, a NAS security mode complete (NAS Security Mode Complete) message sent by the UE.

911: The AMF sends a context setup request message to the N3IWF-1.

After receiving the NAS security mode complete message from the UE, the AMF may send a context setup request message to the N3IWF-1, for example, send an NGAP initial context setup request, where the NGAP initial context setup request may include the key for the N3IWF-1.

912: The N3IWF-1 sends an IKE_AUTH response message to the UE.

The IKE_AUTH response message includes the EAP-success (Success). In this case, the EAP-5G session is completed, and no EAP-5G data packet is exchanged subsequently.

913: The UE and the N3IWF-1 complete the establishment of the IPsec SA communication tunnel.

The UE and the N3IWF-1 establish the IPsec SA communication tunnel by using the previously obtained key for the N3IWF-1.

914: The N3IWF-1 sends a context setup response message to the AMF.

After the IPsec SA communication tunnel is established, the N3IWF-1 may send the context setup response message to the AMF, to notify the AMF that a context corresponding to the UE has been created. For example, the N3IWF-1 sends an NGAP initial context setup response to the AMF.

In this case, the IPsec SA is configured to run in a tunnel mode, and the N3IWF-1 may assign an internal IP address and a NAS IP address (NAS_IP_ADDRESS) to the UE, so that a subsequent NAS message may be transmitted through the IPsec SA. For example, for an uplink NAS message sent by the UE to the AMF, a source address may be the internal IP address of the UE, and a destination address is the NAS_IP_ADDRESS. For a downlink NAS message sent by the AMF to the UE, a source address may be the NAS_IP_ADDRESS, and a destination address may be the internal IP address of the UE.

915: The AMF sends an N2 message to the N3IWF-1, where the N2 message includes the registration accept information.

The AMF sends the N2 message to the N3IWF-1, where the N2 message includes a NAS registration accept (NAS Registration Accept) message to be forwarded to the UE. Then, the N3IWF-1 may send the NAS registration accept message to the UE through the established IPsec SA communication tunnel.

In a possible implementation, when the AMF determines, in step 908, that the N3IWF-1 does not support the part or all of the network slices requested by the UE, and determines the information about the N3IWF-2, the registration accept message may include the information about the N3IWF-2.

In a possible implementation, optionally, the registration accept message may further include the identifier of the at least one network slice corresponding to the N3IWF-2. In other words, the AMF may send, to the UE, the information about the N3IWF-2 and the at least one piece of slice information corresponding to the N3IWF-2. The network slice information corresponding to the N3IWF-2 may be the network slice information supported by the N3IWF-2, or may be the network slice information that is in the at least one network slice requested by the UE and that is supported by the N3IWF-2.

In another possible implementation, only when the UE includes the first indication information in the registration request message, the AMF includes the information about the N3IWF-2 and the identifier of the at least one network slice corresponding to the N3IWF-2 in the registration accept message. Subsequently, when the AMF is registered with the UDM, an access type that needs to be provided to the UDM may be non-3GPP access.

916: The N3IWF-1 forwards the registration accept information to the UE.

The N3IWF-1 may send NAS registration accept information to the UE through the IPsec SA communication tunnel established in step 913.

917: The UE performs deregistration.

The UE may obtain the information about the N3IWF-2 based on the registration accept message, and determine that the currently connected access network device, namely, the N3IWF-1, does not support the network slice requested by the UE. The UE may perform the deregistration procedure or perform the deregistration procedure through the N3IWF-1. For a specific deregistration procedure, refer to related descriptions in a conventional technology. Details are not described in embodiments of this application.

918: The UE establishes a connection to the N3IWF-2.

If the UE performs step 909 (the manner 1), in other words, receives the registration reject message, the UE may determine that the currently connected access network device, namely, the N3IWF-1, does not support the network slice requested by the UE. The UE establishes the connection to the N3IWF 2 based on the information about the N3IWF-2 in the registration reject message, and is registered with the core network through the N3IWF-2. Therefore, the UE may select or be connected to the access network device that supports the network slice requested by the UE.

If the UE performs steps 910 to 917 (the manner 2), in other words, receives the registration accept message and completes the deregistration procedure with the N3IWF-1, the UE may establish the connection to the N3IWF-2 based on the information about the N3IWF-2 in the registration accept message, and is registered with the core network through the N3IWF-2.

In the foregoing manner, when determining that the access network device currently connected to the UE does not support the network slice requested by the UE, the AMF may determine, for the UE, a target access network device that supports the requested network slice, and feed back information about the target access network device to the UE in the registration accept message or the registration reject message, to trigger the UE to change the access network device based on the information about the target access network device, and access the core network, so that the UE can establish the connection to the access network device that supports the network slice requested by the UE. This improves communication efficiency.

In addition, in another implementation, a first core network device may obtain, based on information about the network slice requested by the terminal device, information about a second access network (or the information about the second access network device) when the first access network device connected to the terminal device does not support the part or all of the network slices requested by the terminal device. The first core network device may send, to the terminal device, the information about the second access network and/or information about a network slice corresponding to or supported by the second access network. The terminal device may establish the connection to the second access network device based on the information about the second access network and/or the information about the network slice corresponding to or supported by the second access network. The first core network device may be the mobility management device, a policy control device, or another network element that can perform the foregoing function.

In a possible implementation, the information about the second access network includes one or more of the service set identifier (for example, the service set identifier, SSID), the identification information (for example, a TNGF ID or a trusted access network device identifier) of the second access network device, identification information (for example, a TNAP identifier) of an second access network node, address information of the second access network device, the domain name information (for example, an FQDN or a domain name) of the second access network device, port information of the second access network device, the information about the one or more network slices supported by the second access network, or information about the one or more network slices supported by the second access network device. In a possible implementation, the information about the one or more network slices supported by the second access network may include the information about all the slices supported by the second access network, or include information about a network slice that is supported by the second access network and that is allowed to be used or subscribed to by the terminal device. In a possible implementation, the information about the one or more network slices supported by the second access network device may include the information about all the slices supported by the second access network device, or include information about a network slice that is supported by the second access network device and that is allowed to be used or subscribed to by the terminal device. The information about the network slice may include identification information (for example, NSSAI or S-NSSAI) of the network slice. In a possible implementation, one or more of the service set identifier (for example, the service set identifier, SSID), the identification information (for example, the TNGF ID or the trusted access network device identifier) of the second access network device, the identification information (for example, the TNAP identifier) of the second access network node, the address information of the second access network device, the domain name information (for example, the FQDN or the domain name) of the second access network device, or the port information of the second access network device may be related to or correspond to a part or all of the network slices that the terminal device requests to access.

For example, the terminal device requests to access a slice 1 and a slice 2, the first access network device supports the slice 1, and the second access network device supports the slice 1 and the slice 2. An SSID 1 supports the slice 1 and a slice 3, and an SSID 2 supports the slice 1 and the slice 2. When the first core network device determines, based on the information about the network slice (where for example, the requested NSSAI includes the slice 1 and the slice 2) requested by the terminal device, that the first access network device does not support a part or all of the slices requested by the terminal device (where for example, the first access network device does not support the slice 2), and the second access network device supports a part or all of the slices requested by the terminal device (where for example, the second access network device supports the slice 1 and the slice 2), the first core network device obtains or determines the information about the second access network (or the information about the second access network device) based on information about an access network or a correspondence between information about an access network and information about a slice.

In a possible implementation, the first core network device sends, to the terminal device, the information about the second access network and/or the information about the network slice corresponding to or supported by the second access network. For example, the first core network device may be the mobility management device, and a second core network device may be the policy control device. The mobility management device or the policy control device may send, to the terminal device, the information about the second access network and/or the information about the network slice corresponding to or supported by the second access network.

In a possible implementation, information about one or more access networks and/or information about a network slice corresponding to or supported by the one or more access networks may be configured on the first core network device. For example, the information about the one or more access networks and/or the information about the network slice corresponding to or supported by the one or more access networks may be configured on the mobility management device or the policy control device.

In a possible implementation, the information about the network slice supported by the access network may include the information about all the slices supported by the access network, or include information about a network slice that is supported by the access network and that is allowed to be used or subscribed to by the terminal device.

In a possible implementation, the first core network device may obtain, through the second core network device, information about one or more access networks and/or information about a network slice corresponding to or supported by the one or more access networks. For example, the mobility management device may obtain, through the policy control device, the information about the one or more access networks and/or the information about the network slice corresponding to or supported by the one or more access networks.

In a possible implementation, the first core network device may send, to the second core network device, the information about the network slice requested by the terminal device, and the second core network device obtains the information about the second access network based on the information about the network slice requested by the terminal device and based on the information about the one or more access networks and/or the information about the network slice corresponding to or supported by the one or more access networks. The second core network device sends the information about the second access network to the terminal device, or sends the information about the second access network to the terminal device through the first core network device. For example, the mobility management device may send, to the policy control device, the information about the network slice requested by the terminal device, and the policy control device obtains the information about the second access network based on the information about the network slice requested by the terminal device. The policy control device sends the information about the second access network to the terminal device, or sends the information about the second access network to the terminal device through the mobility management device. In a possible implementation, the policy control device may send the information about the second access network to the terminal device through a configuration update procedure.

In a possible implementation, after sending the information about the second access network to the terminal device, the first core network device may reject access of the terminal device, send a registration reject message to the terminal device, or perform an access network device reselection or redirection procedure.

In a possible implementation, the terminal device may obtain, by using the registration reject message, the registration accept message, a configuration update message, a wireless local area network selection policy rule (WLANSP rule), or a configuration update procedure, the information about the second access network and/or the information about the network slice corresponding to or supported by the second access network.

In a possible implementation, the terminal device may obtain the information about the second access network and/or the information about the network slice corresponding to or supported by the second access network.

In a possible implementation, the terminal device obtains the information about the second access network and/or the information about the network slice corresponding to or supported by the second access network, and establishes the connection to the second access network device.

In a possible implementation, the terminal device obtains the correspondence between the information about the access network and the information about the network slice, and obtains the information about the second access network based on the information about the network slice requested to be accessed.

In a possible implementation, the terminal device obtains the information about the one or more access networks and/or the information about the network slice corresponding to or supported by the one or more access networks, and obtains the information about the second access network based on the information about the network slice requested to be accessed. For example, the second access network or the second access network device supports the network slice that the terminal device requests to access, and the terminal device obtains the information about the second access network.

In a possible implementation, the terminal device obtains the correspondence between the information about the access network and the information about the slice, and obtains the information about the second access network based on the information about the network slice requested to be accessed and the correspondence between the information about the access network and the information about the slice.

In a possible implementation, the terminal device obtains the information about the one or more access networks and/or the information about the network slice corresponding to or supported by the one or more access networks, and obtains the information about the second access network based on the information about the network slice requested to be accessed and based on the information about the one or more access networks and/or the information about the network slice corresponding to or supported by the one or more access networks. For example, the second access network or the second access network device supports the network slice that the terminal device requests to access, and the terminal device obtains the information about the second access network.

In a possible implementation, the terminal device may obtain the correspondence between the information about the access network and the information about the slice by using the registration reject message, the registration accept message, a configuration update message, a wireless local area network selection policy rule (WLANSP rule), or a configuration update procedure.

In a possible implementation, the information about the second access network includes the one or more of the service set identifier (for example, the service set identifier, SSID), the identification information (for example, the TNGF ID or the trusted access network device identifier) of the second access network device, the identification information (for example, the TNAP identifier) of the second access network node, the address information of the second access network device, the domain name information (for example, the FQDN or the domain name) of the second access network device, the port information of the second access network device, the information about the one or more network slices supported by the second access network, or the information about the one or more network slices supported by the second access network device. The terminal device obtains the information about the second access network, and determines or selects the service set identifier. For example, when the information about the second access network includes the SSID, the terminal device selects the SSID included in the information about the second access network. For example, when the information about the second access network includes the TNAP identifier, the terminal device selects a TNAP corresponding to the TNAP identifier included in the information about the second access network. For example, when determining or selecting the second access network or the second access network device based on the information about the network slice requested to be accessed, the terminal device selects or determines the SSID based on the information about the second access network.

In a possible implementation, the terminal device includes the information about the second access network device in a domain name information part of a network access identifier (network access Identifier, NAI) based on the information about the second access network. Alternatively, the terminal device generates or constructs a NAI based on the information about the second access network.

In a possible implementation, when the information about the second access network includes one or more of the identification information (for example, the TNGF ID or the trusted access network device identifier) of the second access network device, the address information of the second access network device, the port information of the second access network device, or the domain name information (for example, the FQDN or the domain name) of the second access network device, the terminal device may include the one or more of the identification information (for example, the TNGF ID or the trusted access network device identifier) of the second access network device, the address information of the second access network device, the port information of the second access network device, or the domain name information (for example, the FQDN or the domain name) of the second access network device in the domain name information part in the NAI=username@realm, namely, a realm part. The terminal device sends the NAI to the second access point (for example, a TNAP). The second access point (for example, the TNAP) may determine or select the second access network device (for example, the TNGF) based on the SSID selected by the terminal device and/or the NAI (or the realm part in the NAI).

For example, the terminal device obtains the information about the second access network by using the registration reject message, the registration accept message, the configuration update message, the wireless local area network selection policy rule (WLANSP rule), or the configuration update procedure. The second access network corresponds to or supports a part or all of the network slices that the terminal device requests to access. The information about the second access network includes one or more of the SSID, the TNGF identifier, the TNAP identifier, TNGF domain name information, a TNGF IP address, or TNGF port information. The terminal device selects the second access network (for example, selects an SSID and/or a TNAP corresponding to the second access network) based on the SSID and/or the TNAP identifier. The terminal device sends the NAI to the second access network (for example, the TNAN or the TNAP). The NAI may include the information about the second access network device (for example, information about the TNGF). For example, the NAI may include one or more of the TNGF identifier, the TNGF domain name information, the TNGF IP address, or the TNGF port information. In a possible implementation, the domain name information in the NAI may include one or more of the TNGF identifier, the TNGF domain name information, the TNGF IP address, or the TNGF port information. The TNAP or the TNAN may select the TNGF based on the SSID selected by the terminal device and/or the information about the TNGF included in the NAI. Therefore, the terminal device may establish the connection to the second access network device (for example, the TNGF).

In a possible implementation, that the NAI includes the information about the second access network device may include but is not limited to the following several possible forms:
For example, the second access network device is the TNGF:
NAI=<any_username>@nai.5gc.tngfid<TNGFID>.mnc<MNC>.mcc<MCC>.3gppne twork.org

In other words, the NAI or the domain name part (namely, the realm) of the NAI includes the identification information of the second access network device (for example, the TNGF). The TNGFID is the identification information of the TNGF. The identification information of the second access network device may include a character string, a digit, a bit or a bit string, an octal number or a hexadecimal number, or the like. A form of the identification information of the second access network device is not limited in this application.
NAI=<any_username>@nai.5gc.tngffqdn<TNGFFQDN>.mnc<MNC>.mcc<MCC>. 3gppnetwork.org

In other words, the NAI or the domain name part (namely, the realm) of the NAI includes the domain name information of the second access network device (for example, the TNGF). The TNGFFQDN is the domain name information of the TNGF. The domain name information of the second access network device may include a character string, a digit, a bit or a bit string, an octal number or a hexadecimal number, or the like. A form of the domain name information of the second access network device is not limited in this application.
NAI=<any_username>@nai.5gc.tngfaddr<TNGFADDR>.mnc<MNC>.mcc<MCC>. 3gppnetwork.org

In other words, the NAI or the domain name part (namely, the realm) of the NAI includes the address information of the second access network device (for example, the TNGF). The TNGFADDR is the address information (for example, an IP address or a MAC address) of the TNGF. The address information of the second access network device may include a character string, a digit, a bit or a bit string, an octal number or a hexadecimal number, or the like. A form of the address information of the second access network device is not limited in this application.
NAI=<any_username>@nai.5gc.tngfport<TNGFPORT>.mnc<MNC>.mcc<MCC>.3 gppnetwork.org

In other words, the NAI or the domain name part (namely, the realm) of the NAI includes the port information of the second access network device (for example, the TNGF). The TNGFPORT is the address information (for example, a TCP port number or a UDP port number) of the TNGF. The port information of the second access network device may include a character string, a digit, a bit or a bit string, an octal number or a hexadecimal number, or the like. A form of the port information of the second access network device is not limited in this application.

In a possible implementation, the terminal device obtains fourth indication information. The fourth indication information may indicate the terminal device to obtain the NAI based on the information about the one or more access networks. Alternatively, the fourth indication information may indicate the terminal device to obtain the NAI based on the correspondence between the information about the access network and the information about the network slice. Alternatively, the fourth indication information may indicate the terminal device to obtain the NAI based on the information about the network slice requested to be accessed and the correspondence between the information about the access network and the information about the network slice. Alternatively, the fourth indication information may indicate the terminal device to obtain the information about the second access network based on the information about the network slice requested to be accessed and the correspondence between the information about the access network and the information about the network slice, and obtain the NAI based on the information about the second access network.

In a possible implementation, the terminal device obtains fourth indication information. The fourth indication information may indicate the terminal device to obtain the NAI based on the information about the one or more access networks. Alternatively, the fourth indication information may indicate the terminal device to obtain the NAI based on the information about the one or more access networks and/or the information about the network slice corresponding to or supported by the one or more access networks. Alternatively, the fourth indication information may indicate the terminal device to obtain the NAI based on the information about the network slice requested to be accessed and based on the information about the one or more access networks and/or the information about the network slice corresponding to or supported by the one or more access networks. Alternatively, the fourth indication information may indicate the terminal device to obtain the information about the second access network based on the information about the network slice requested to be accessed and based on the information about the one or more access networks and/or the information about the network slice corresponding to or supported by the one or more access networks, and obtain the NAI based on the information about the second access network.

In a possible implementation, obtaining the NAI may be understood as generating or constructing the NAI.

In a possible implementation, the NAI includes information indicating the second access network device or other information associated with the second access network device, for example, an identifier of the second access network device.

In a possible implementation, the fourth indication information may be indication information included in the registration reject message, the registration accept message, the configuration update message, the wireless local area network selection policy rule (WLANSP rule), or the configuration update procedure. Alternatively, the fourth indication information may be the registration reject message, the registration accept message, the configuration update message, or the wireless local area network selection policy rule (WLANSP rule). Alternatively, the fourth indication information may be a part or all of the information about the second access network. Alternatively, the fourth indication information may be a part or all of information in the correspondence between the information about the access network and the information about the network slice. Alternatively, the fourth indication information may be a part or all of the information about the one or more access networks and/or the information about the network slice corresponding to or supported by the one or more access networks.

In another implementation, in the registration procedure for the UE, when determining, based on the network slice requested by the UE, that the access network device currently connected to the UE does not support the network slice requested by the UE, the mobility management device may change the access network device for the UE. Specifically, the source access network device may send the information about the target access network device to the UE, so that the UE can be connected to a target access network based on the information about the target access network device, and the changed target access network device can support the network slice requested by the UE, to improve the communication efficiency. In addition, changing the access network device for the UE may enable the UE to not perform a registration procedure again, to effectively reduce signaling overheads and delay overheads.

In this implementation, the second message may further include second indication information. The second indication information may indicate the terminal device to change the access network device, or indicate the UE to connect to an access network device corresponding to the requested network slice or connect to an access network device corresponding to the requested network slice.

With reference to the foregoing embodiment, the second message includes the information about the second access network device, and further includes the second indication information. In other words, the second message sent by the mobility management device to the UE indicates the UE to change the access network device based on the information about the second access network device, to meet the at least one network slice that the UE currently requests to access.

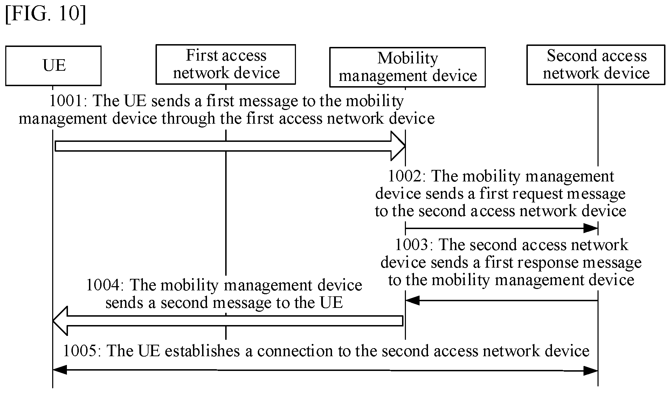

In a possible implementation, after receiving a first message, a mobility management device determines that a first access network device currently connected to UE does not support (a part or all of) network slices requested by the UE, but a second access network device can support one or more network slices requested by the UE. As shown in FIG. 10, the method may further include the following steps.

1001: The UE sends the first message to the mobility management device through the first access network device.

Refer to related descriptions of step 801 or steps 906 and 907.

1002: The mobility management device sends a first request message to the second access network device.

If the mobility management device determines that the first access network device does not support the part or all of the network slices requested by the UE, and determines that the second access network device supports a part or all of the network slices requested by the UE, the mobility management device sends the first request message to the second access network device, to request to change the access network device for the terminal device.

Specifically, the first request message may indicate a request for information (or an address) about a target access network device to which the access network device is changed for the terminal device, indicate a request for providing information about an access network device, or indicate a change or reselection of the access network device for the terminal device.

In a possible implementation, the first request message may include an identifier of the terminal device, where the identifier indicates that the access network device of the terminal device needs to be changed to or the terminal device needs to be reselected to the second access network device, or indicates a terminal device whose access network device is to be changed to or that is to be reselected to the second access network device.

Optionally, the first message in step 1001 may further include the identifier of the terminal device, so that the first message further indicates that the UE corresponding to the identifier of the terminal device requests to obtain information about an access network device that supports the network slice, or indicates that an access network device corresponding to the network slice requested by the UE may be matched for the UE corresponding to the identifier of the terminal device.

Alternatively, optionally, refer to step 907. The first access network device (for example, an N3IWF-1) may include, through an N2 interface, the first message in an N2 message to be sent to the mobility management device (for example, an AMF). The N2 message may further include the identifier of the terminal device, where the identifier indicates that the UE requests to obtain the information about the access network device that supports the network slice, or indicates that the access network device corresponding to the requested network slice may be matched for the UE.

1003: The second access network device sends a first response message to the mobility management device.

The first response message includes information about the second access network device. The first response message may indicate to change the access network device to the second access network device for the terminal device, or indicate that the target access network device is the second access network device.

1004: The mobility management device sends a second message to the UE.

The second message may include the information about the second access network device. Refer to step 802.

1005: The UE establishes a connection to the second access network device.

The UE may be connected to the second access network device based on the information about the second access network device, access a core network through the second access network device, complete a registration procedure, and obtain a requested network slice service. Refer to step 803.

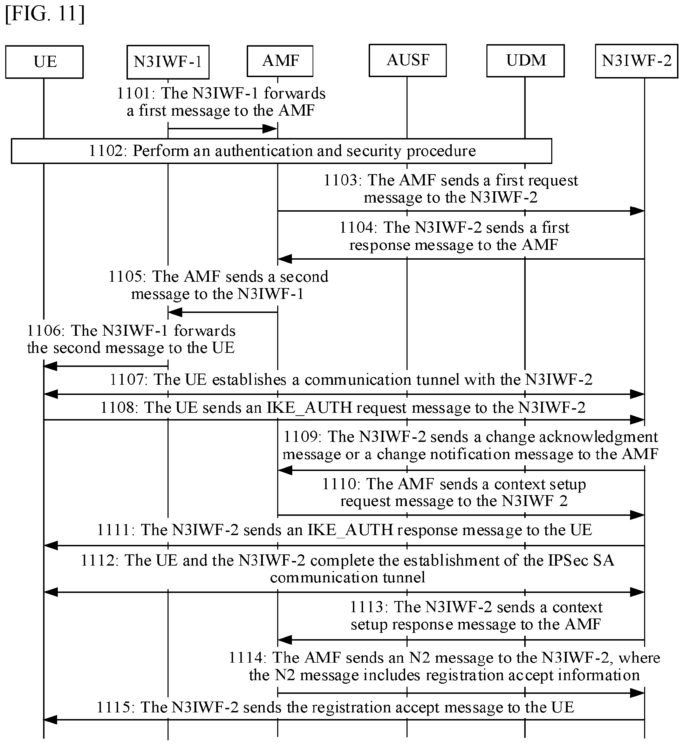

For example, in the following embodiment of this application, a specific procedure for the access network device determining method is described with reference to FIG. 11 by using an example in which UE accesses an untrusted non-3GPP access network device in a non-3GPP access type.

1101: An N3IWF-1 forwards a first message to an AMF.

For steps before step 1101, refer to step 901 to step 906. Details are not described herein again.

The N3IWF-1 selects the AMF, and forwards the first message to the AMF. Specifically, the N3IWF-1 may include, through an N2 interface, the first message in an N2 message to be sent to the AMF.

Optionally, the first message or the N2 message may further include an identifier of the UE.

1102: Perform an authentication and security procedure.

Refer to related descriptions of step 910, and details are not described herein again.

After receiving a NAS security mode complete message from the UE, and when determining that the N3IWF-1 currently connected to the UE does not support a part or all of network slices requested by the UE, the AMF may obtain, based on information about network slices respectively supported by a plurality of N3IWF network elements, information about an access network device, for example, an N3IWF-2, that supports (a part or all of) the network slices requested by the UE.

1103: The AMF sends a first request message to the N3IWF-2.

For example, the first request message may be specifically a change request (for example, a relocation request) message. Optionally, the relocation request message may include the identifier of the UE, where the identifier indicates, to the N3IWF-2, that an access network device connected to the UE corresponding to the identifier of the UE needs to be changed to the N3IWF-2, or that UE whose access network device is to be changed to or that is to be reselected to the N3IWF-2 is the UE corresponding to the identifier of the UE.

1104: The N3IWF-2 sends a first response message to the AMF.

The N3IWF-2 sends the first response message to the AMF based on the first request message. The first response message may carry information about the N3IWF-2, where for example, the information may be an identifier or an address of the N3IWF-2.

1105: The AMF sends a second message to the N3IWF-1.

The AMF may send an N2 message to the N3IWF-1 through an N2 port. The N2 message includes a downlink NAS message (the second message) sent to the UE, and the NAS message (the second message) may include the information about the N3IWF-2.

Optionally, the NAS message (the second message) may further include second indication information (for example, change indication information), to indicate that the access network device of the UE needs to be changed to the second access network device, or indicate that the UE may establish a connection to the N3IWF-2 based on the information about the N3IWF-2.

1106: The N3IWF-1 forwards the second message to the UE.

1107: The UE establishes a communication tunnel with the N3IWF-2.

Specifically, the UE may initiate an Internet key exchange (Internet Key Exchange, IKE) initial exchange, to establish an Internet protocol security security association (IPsec Security Association, IPsec SA) with the N3IWF-2.

1108: The UE sends an IKE_AUTH request message to the N3IWF-2.

The IKE_AUTH request message does not include an AUTH data payload (payload), to indicate that the IKE_AUTH request message is for EAP signaling exchange.

1109: The N3IWF-2 sends a change acknowledgment message or a change notification message to the AMF.

Optionally, the first request message sent by the AMF to the N3IWF-2 in step 1103 includes the identifier of the UE. After the N3IWF-2 establishes the connection to the UE, the N3IWF-2 determines that an identifier of the UE is the same as the identifier of the UE included in the first request message sent by the AMF to the N3IWF-2 in step 1103. In this case, the N3IWF-2 may send the change acknowledgment message to the AMF, to notify the AMF that the UE has established the connection to the N3IWF-2.

1110: The AMF sends a context setup request message to the N3IWF 2.

For example, an NGAP initial context setup request message is sent, and may include an N3IW key.

1111: The N3IWF-2 sends an IKE_AUTH response message to the UE.

The IKE_AUTH response message includes an EAP-success (Success). In this case, an EAP-5G session is completed, and no EAP-5G data packet is exchanged subsequently.

1112: The UE and the N3IWF-2 complete the establishment of the IPsec SA communication tunnel.

The UE and the N3IWF-2 establish the IPsec SA communication tunnel by using the previously obtained N3IW key.

1113: The N3IWF-2 sends a context setup response message to the AMF.

After the IPsec SA communication tunnel is established, the N3IWF-2 may send the context setup response message to the AMF, to notify the AMF that a context corresponding to the UE has been created. For example, the N3IWF-2 sends an NGAP initial context setup response to the AMF.

In this case, the IPsec SA is configured to run in a tunnel mode, and the N3IWF-2 may assign an internal IP address and a NAS IP address (NAS_IP_ADDRESS) to the UE, so that a subsequent NAS message may be transmitted through the IPsec SA. For example, for an uplink NAS message sent by the UE to the AMF, a source address may be the internal IP address of the UE, and a destination address is the NAS_IP_ADDRESS. For a downlink NAS message sent by the AMF to the UE, a source address may be the NAS_IP_ADDRESS, and a destination address may be the internal IP address of the UE.

1114: The AMF sends an N2 message to the N3IWF-2, where the N2 message includes a registration accept information.

The AMF sends the N2 message to the N3IWF-2, where the N2 message includes a NAS registration accept (NAS Registration Accept) message to be forwarded to the UE.

1115: The N3IWF-2 sends the registration accept message to the UE.

The N3IWF-2 sends the NAS registration accept message to the UE through the established IPsec SA communication tunnel.

In another implementation, the foregoing access network device determining method in this application may be further applied to a trusted non-3GPP access network device in a non-3GPP access type.

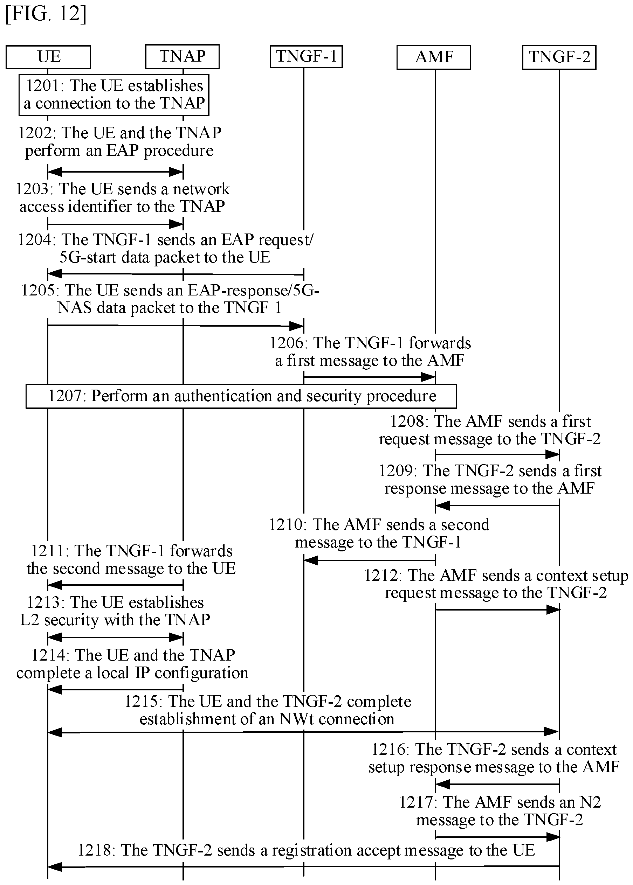

For example, the following describes a specific procedure for the access network device determining method with reference to FIG. 12 by using an example in which UE accesses the trusted non-3GPP access network device.

1201: The UE establishes a connection to a TNAP.

The UE selects a PLMN and a trusted non-3GPP access network TNAN connected to the PLMN. The UE establishes a layer-2 (Layer-2, L2) connection to the trusted non-3GPP access point TNAP.

In a possible implementation, the terminal device obtains configuration information, and selects, based on the configuration information, an access network device that supports a requested slice (or a needed slice). The configuration information may be one or more of a WLAN selection policy (for example, a WLAN selection policy, WLANSP), trusted non-3GPP access network configuration information (for example, a TNAN configuration), trusted non-3GPP access point selection information (for example, trusted non-3GPP access point selection information), or trusted non-3GPP gateway function selection information (for example, TNGF selection information).

In a possible implementation, the configuration information includes information about one or more access network devices and slice information corresponding to or supported by the one or more access network devices. The information about the access network device may be one or more of identification information (for example, an identifier or an SSID), domain name information (for example, a domain name or an FQDN), address information (for example, an IP address), or port number information. The slice information may be one or more pieces of NSSAI, one or more pieces of S-NSSAI, or the like.

In a possible implementation, the terminal device may select, based on the slice information that corresponds to or is supported by the information about the one or more access network devices and that is in the configuration information, one access network device from the one or more access network devices (which may be referred to as one or more optional access network devices) that support the slice requested or needed by the terminal device. In a possible implementation, the access network device may be an N3IWF, a TNAN, a TNGF, a TNAP, or a WLAN access point (for example, an access point, AP). In a possible implementation, a slice corresponding to the slice information included in the configuration information may be a slice supported by the access network device, may be a slice that is in a slice supported by the access network device and that is allowed to be used by the terminal device, or may be a slice that is in a slice supported by the access network device and that is subscribed to by the terminal device.

In another possible implementation, the configuration information includes one or more pieces of slice information and information about an access network device corresponding to the one or more pieces of slice information. The access network device corresponding to the slice information may be understood as access network device information of an access network device that supports a slice. The information about the access network device may be one or more of identification information, domain name information (for example, a domain name or an FQDN), address information (for example, an IP address), or port number information. The slice information may be one or more pieces of NSSAI, one or more pieces of S-NSSAI, or the like. The terminal device may determine, based on the information about the access network device corresponding to the slice information in the configuration information, information about one or more access network devices that support the slice requested or needed by the terminal device, and select one access network device from the access network device corresponding to the information about the one or more access network devices. In a possible implementation, the access network device may be an N3IWF, a TNAP, a TNAN, a TNGF, or a WLAN access point (for example, an access point, AP). In a possible implementation, the slice corresponding to the one or more pieces of slice information included in the configuration information may be a slice supported by a network, may be a slice that is allowed to be used by the terminal device, or may be a slice that is subscribed to by the terminal device.

In a possible implementation, the configuration information may be pre-configured on the terminal device, or the terminal device may obtain the configuration information through a core network device. The core network device may be a policy control device, a mobility management device, a session management device, a user plane device, a unified data management device, a network repository device, a network exposure function device, or the like. In a possible implementation, the terminal device may obtain the configuration information through a registration procedure or a configuration update procedure (for example, a UE configuration update procedure).

In a possible implementation, when the terminal device does not obtain the configuration information, or the configuration information obtained by the terminal device does not include the slice information, the terminal device may select an access network device that does not support the slice requested or needed by the terminal device.

1202: The UE and the TNAP perform an EAP procedure.

Specifically, the UE sends an EAP request message to the TNAP, where the EAP request message is encapsulated in an L2 data packet, for example, encapsulated in an IEEE 802.3, 802.1x, or PPP data packet. The TNAP sends an EAP response message or an EAP acknowledgment message (an EAP-req/identity message) to the UE to request to obtain identification information of the UE.

1203: The UE sends a network access identifier to the TNAP.

The network access identifier (Network Access Identifier, NAI) is for triggering the TANP to send an AAA request (AAA request) to a TNGF-1.

The NAI indicates a request for 5G connectivity (5G connectivity) of a specific PLMN. For example, the NAI="<any_username>@nai.5gc. mnc<MNC>.mcc<MCC>.3gppnetwork.org". An EAP data packet between the TNAP and the TNGF-1 is encapsulated by using an AAA message. The AAA request further includes an identifier of the TNAP, where the identifier may be used as user location information (User Location Information, ULI).

1204: The TNGF-1 sends an EAP request/5G-start data packet to the UE.

The EAP-request/5G-start data packet notifies the UE to initiate an EAP-5G session, for example, notifies the UE to start to send a NAS message (by encapsulating the NAS message in the EAP-5G data packet).

1205: The UE sends an EAP-response/5G-NAS data packet to the TNGF 1.

The 5G-NAS data packet includes an AN parameter and a first message (for example, a registration request message). The AN parameter includes parameter information, for example, a GUAMI or a selected PLMN ID (or a PLMN ID and a NID), used by the TNGF-1 to select an AMF.

Optionally, the first message (the registration request message) may include first indication information, where the first indication information indicates to obtain information about an access network device that supports at least one network slice requested by the terminal device, or indicates to match a corresponding access network device for the terminal device based on the first message.

In this case, the EAP-response/5G-NAS data packet sent by the UE to the TNGF 1 may further include an identifier of the terminal device, where the identifier is used by the TNGF 1 to determine to match the appropriate access network device for the terminal device corresponding to the identifier of the terminal device and feed back information about the access network device.

1206: The TNGF-1 forwards the first message to the AMF.

The TNGF-1 selects the AMF, and sends the first message (for example, the registration request message) to the AMF.

1207: Perform an authentication and security procedure.

The AMF may determine to perform an authentication procedure on the UE. Specifically, the AMF selects an AUSF, and sends an authentication request message to the AUSF. Subsequently, the AUSF performs the authentication procedure on the UE and obtains authentication data from a UDM. All authentication-related data packets may be encapsulated by using a NAS message, and all NAS messages may be encapsulated by using an EAP/5G-NAS data packet.

After completing the authentication, the AUSF sends a SEAF key to the AMF. The AMF may derive a NAS security key and a security key for the TNGF-1 by using the SEAF key. The AMF sends a NAS security mode command to the UE to activate NAS security. The NAS security mode command includes an EAP-success, where the EAP-success indicates that EAP-AKA authentication performed by a core network succeeds. The TNGF-1 forwards, to the UE, the NAS security mode command sent by the AMF, and sends, to the AMF, a NAS security mode complete message sent by the UE.

1208: The AMF sends a first request message to a TNGF-2.

After receiving the NAS security mode complete message from the UE, and when determining that the TNGF-1 currently connected to the UE does not support a part or all of the network slices requested by the UE, the AMF may obtain, based on information about network slices respectively supported by a plurality of TNGF network elements, information about an access network device, for example, an identifier or an address of the TNGF-2, that supports (a part or all of) the network slices requested by the UE. Then, the AMF sends the first request message to the TNGF-2.

For example, the first request message may be specifically a change request (Relocation Request) message, where the change request message indicates a request for obtaining the address of the TNGF-2. In a possible implementation, the first request message may include an identifier of the UE. The identifier of the UE may indicate the terminal device whose access network device is to be changed to or that is reselected to the TNGF-2.

1209: The TNGF-2 sends a first response message to the AMF.

The TNGF-2 sends information about the TNGF-2 to the AMF based on the first request message, where for example, the information may be the identifier or the address of the TNGF-2.

1210: The AMF sends a second message to the TNGF-1.

The second message may include the information about the TNGF-2.

Specifically, the AMF may send a relocation request message to the TNGF-1. The relocation request message carries the security key for the TNGF-1 and the second message (a downlink NAS message) to be sent to the UE.

Optionally, the downlink NAS message (the second message) may further include second indication information (for example, change indication information), to indicate that the access network device of the UE needs to be changed to the second access network device, namely, the TNGF-2, or indicate that the UE may establish a connection to the TNGF-2 based on the information about the TNGF-2.

1211: The TNGF-1 forwards the second message to the UE.

The TNGF-1 receives the security key for the TNGF, and sends the second message (the downlink NAS message) to the UE.

The method further includes: The UE sends an EAP-response/5G-notification to the TNGF-1.

After receiving the message, the TNGF-1 sends an AAA message to the TNAP, where the AAA message includes an EAP-success message sent to the UE and a key for the TNAP that is derived by the TNGF-1 and that is sent by the TNGF-1 to the TNAP.

1212: The AMF sends a context setup request message to the TNGF-2.

For example, an NGAP initial context setup request message is sent, and may include a TNGF key.

1213: The UE establishes L2 security with the TNAP.

The key for the TNAP may be for establishing the L2 security (layer-2 security) between the UE and the TNAP.

1214: The UE and the TNAP complete a local IP configuration.

The TNAP sends the local IP configuration to the UE, and the UE receives the IP configuration from the TNAN. For example, the UE may obtain an IP address of the UE through DHCP.

In this case, the UE is successfully connected to the TNAN and obtains the IP configuration.

1215: The UE and the TNGF-2 complete establishment of an NWt connection.

Specifically, the UE may initiate the establishment of the secure NWt connection to the TNGF-2, where NWt is a connection interface between the UE and the TNGF. For example, the UE may initiate IKE_INIT interaction by using the address of the TNGF-2. An identifier of the UE provided by the UE may be the same as the identifier of the UE included in step 1205 and/or step 1208, so that the TNGF-2 may determine, based on the identifier of the UE, a key that is for the TNGF-2 and that corresponds to the UE. The key for the TNGF-2 may be for bidirectional authentication.

Transmission between the UE and the TNGF does not need to be encrypted because the transmission is performed in a trusted network (where the network is deployed by an operator, is considered to be trusted, and therefore does not need to be encrypted). The TNGF-2 may assign an internal IP address, a TCP port, a NAS_IP_ADDRESS, and a differentiated services code point (differentiated services code point, DSCP) value to the UE. The DSCP value may be marked for an IP data packet transmitted between the UE and the TNGF-2. The UE and the TNAP may map the DSCP value to a corresponding QoS level. After an IPsec SA tunnel is established, the UE may establish a TCP connection to the TNGF by using the NAS_IP_ADDRESS and the TCP port. A subsequent NAS message may be transmitted through the IPsec SA tunnel. For example, for an uplink NAS message sent by the UE to the AMF, a source address may be the internal IP address of the UE, and a destination address is the NAS_IP_ADDRESS. For a downlink NAS message sent by the AMF to the UE, a source address may be the NAS_IP_ADDRESS, and a destination address may be the internal IP address of the UE.

1216: The TNGF-2 sends a context setup response message to the AMF.

After the NWt connection is successfully established, the TNGF-2 may notify, by using an NGAP initial context setup response, the AMF that a security context of the UE has been created.

1217: The AMF sends an N2 message to the TNGF-2.

The N2 message includes a NAS registration accept (NAS Registration Accept) message to be sent to the UE. When the AMF is subsequently registered with the UDM, the AMF needs to provide the UDM with an access type of non-3GPP access (Non-3GPP access).

1218: The TNGF-2 sends the registration accept message to the UE.

The TNGF-2 sends the NAS registration accept message to the UE through the established IPsec SA communication tunnel.

In still another possible implementation, in a trusted non-3GPP access scenario, if a mobility management device determines that a TNGF-1 (a first TNGF network element) does not support (a part or all of) network slices requested by UE, and determines that a TNGF-2 (a second TNGF network element) supports (a part or all of) the network slices requested by the UE, the mobility management device may further send a second message to the terminal device through the TNGF-2, to indicate information about a second access network device, namely, the TNGF-2, to the UE. Therefore, the UE may access the TNGF-2 by using the information about the TNGF-2, and then access a core network to obtain a slice service. In this way, a procedure may be further simplified, to reduce signaling overheads and delay overheads.

Optionally, after the mobility management device determines that the TNGF-1 does not support (the part or all of) the network slices requested by the UE, the method may further include: The mobility management device sends a second request message to the TNGF-1, to request to obtain an identifier of a trusted non-3GPP access point TNAP connected to the terminal device. The TNGF-1 sends, to the mobility management device, the identifier of the TNAP accessed by the UE.

Therefore, optionally, after obtaining identification information of the TNAP accessed by the UE, the mobility management device may send a third request message to the TNGF-2, to request to set up a context of the terminal device. The third request message may further include the identifier of the TNAP currently accessed by the UE.

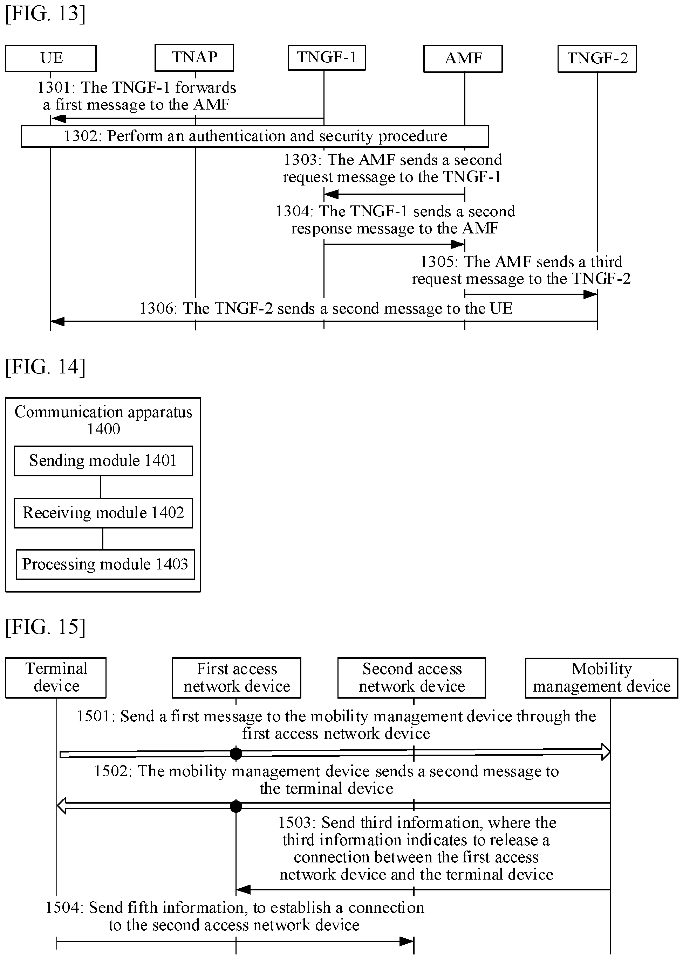

For example, the following describes a specific procedure for the access network device determining method with reference to FIG. 13 by using an example in which UE accesses a trusted non-3GPP access network device.

1301: A TNGF-1 forwards a first message to an AMF.

For steps before step 1301, refer to step 1201 to step 1205. Details are not described herein again.

The TNGF-1 selects the AMF, and sends the first message (for example, a registration request message) to the AMF.

1302: Perform an authentication and security procedure.

Refer to step 1207, and details are not described herein again.

1303: The AMF sends a second request message to the TNGF-1.

The AMF sends the request message (for example, a relocation request) to the TNGF 1. The request message requests to obtain an identifier of a TNAP (namely, an identifier of a TNAP connected to the UE). In a possible implementation, the request message includes indication information, and the indication information indicates a request for the identifier of the TNAP. After receiving the request message, the TNGF 1 sends, to the AMF, the identifier of the TNAP connected to the UE. In a possible implementation, the request message may further include an identifier of the terminal device. The identifier of the terminal device indicates that the request message requests to obtain the identifier of the TNAP connected to the terminal device corresponding to the identifier of the terminal device. Therefore, the TNGF1 may feed back, based on the request message, the identifier of the TNAP connected to the terminal device.

1304: The TNGF-1 sends a second response message to the AMF.

The second response message includes the identifier of the TNAP connected to the UE.

1305: The AMF sends a third request message to a TNGF-2.

The third request message requests to set up a security context of the UE. The third request message includes the identifier of the TNAP. Optionally, the third request message may further include a TNGF key.

For example, the AMF sends an NGAP initial context setup request message to the TNGF-2, where the NGAP initial context setup request message may include the TNGF key and the identifier of the TNAP. The TNGF-2 may learn, based on the identifier of the TNAP in the request message, that the setup of the security context is migrated from another TNGF.

Optionally, the third request message may further include third indication information, and the third indication information indicates that the setup of the security context of the UE is migrated from the another TNGF.

1306: The TNGF-2 sends a second message to the UE.

The second message may include information about the TNGF-2, to feed back, to the UE, that the TNGF-2 can support one or more of the network slices requested by the UE. The information about the TNGF-2 may be specifically an address or an identifier of the TNGF-2.

Specifically, the TNGF-2 may send, based on the identifier of the TNAP carried in the third request message, the second message to the UE through the TNAP corresponding to the identifier of the TNAP. For example, the information about the TNGF-2 may be sent to the UE by using an EAP-req/5G-notification message.

Optionally, the second message may further include second indication information (for example, change indication information), to indicate that an access network device of the UE needs to be changed to or the UE needs to be reselected to the second access network device, namely, the TNGF-2, or indicate that the UE may establish a connection to the TNGF-2 based on the information about the TNGF-2.

Therefore, the UE may subsequently establish the connection to the TNGF-2. For a subsequent procedure, refer to related descriptions of step 1211 and step 1213 to step 1218 in the foregoing implementation. Details are not described herein again.

Based on the foregoing access network device determining method provided in this application, this application further provides a communication apparatus. As shown in FIG. 14, the communication apparatus 1400 includes a sending module 1401, a receiving module 1402, and a processing module 1403, to implement the methods implemented by the terminal device in the foregoing embodiments, for example, FIG. 8 to FIG. 13.

The sending module 1401 is configured to send a first message to a mobility management device through a first access network device, where the first message includes an identifier of at least one network slice, and indicates a request for accessing the network slice.

The receiving module 1402 is configured to receive a second message through the first access network device or a second access network device, where the second message includes information about the second access network device, and indicates that the second access network device supports one or more of the at least one network slice.

The processing module 1403 is configured to establish a connection to the second access network device.

Further, the processing module 1403 is further configured to implement an operation or the like other than data/information receiving or sending on a terminal device side in the foregoing embodiments in FIG. 8 to FIG. 13 of this application. The sending module 1401 is further configured to implement the operation of data/information sending on the terminal device side in the foregoing embodiments of this application, for example, FIG. 8 to FIG. 12. The receiving module 1402 is further configured to implement the operation of data/information receiving on the terminal device side in the foregoing embodiments of this application, for example, FIG. 8 to FIG. 12.

In addition, based on the foregoing embodiments, this application further provides a communication apparatus. As shown in FIG. 14, the communication apparatus 1400 includes a sending module 1401, a receiving module 1402, and a processing module 1403, to implement the methods implemented by the mobility management device in the foregoing embodiments, for example, FIG. 8 to FIG. 12.

The receiving module 1402 is configured to receive a first message from a terminal device through a first access network device, where the first message includes an identifier of at least one network slice, and indicates that the terminal device requests to access the network slice.

If the processing module 1403 is configured to determine that the first access network device does not support one or more of the at least one network slice, and that a second access network device supports one or more of the at least one network slice,

the sending module 1401 is configured to send a second message to the terminal device through the first access network device, where the second message includes information about the second access network device, and indicates that the second access network device supports the one or more of the at least one network slice.

Further, the processing module 1403 is further configured to implement an operation or the like other than data/information receiving or sending on a mobility management device side in the foregoing embodiments in FIG. 8 to FIG. 12 of this application. The sending module 1401 is configured to implement the operation of data/information sending on the mobility management device side in the foregoing embodiments of this application, for example, FIG. 8 to FIG. 12. The receiving module 1402 is configured to implement the operation of data/information receiving on the mobility management device side in the foregoing embodiments of this application, for example, FIG. 8 to FIG. 11.

In addition, based on the foregoing embodiments, this application further provides a communication apparatus. As shown in FIG. 14, the communication apparatus 1400 includes a sending module 1401, a receiving module 1402, and a processing module 1403, to implement the methods implemented by the mobility management device in the foregoing embodiments, for example, FIG 13.

The receiving module 1402 is configured to receive a first message from a terminal device through a first access network device, where the first message includes an identifier of at least one network slice, and indicates that the terminal device requests to access the network slice.

The processing module 1403 is configured to determine that the first access network device does not support one or more of the at least one network slice, and that a second access network device supports one or more of the at least one network slice.

The sending module 1401 is configured to send a second message to the second access network device, where the second message indicates the second access network device to send information about the second access network device to the terminal device, and the information about the second access network device is used by the terminal device to establish a connection to the second access network device.

Further, the processing module 1403 is further configured to implement an operation or the like other than data/information receiving or sending on a mobility management device side in the foregoing embodiment in FIG. 13 of this application. The sending module 1401 is configured to implement the operation of data/information sending on the mobility management device side in the foregoing embodiments of this application, for example, FIG. 13. The receiving module 1402 is configured to implement the operation of data/information receiving on the mobility management device side in the foregoing embodiments of this application, for example, FIG. 13.

In addition, based on the foregoing embodiments, this application further provides a communication apparatus. As shown in FIG. 14, the communication apparatus 1400 includes a sending module 1401, a receiving module 1402, and a processing module 1403, to implement the methods implemented by the access network device in the foregoing embodiments, for example, FIG. 8 to FIG. 13.

The receiving module 1402 is configured to receive a first message from a terminal device, where the first message includes an identifier of at least one network slice, and a first request indicates that the terminal device requests to access the network slice.

The sending module 1401 is configured to send the first message to a mobility management device.

The receiving module 1402 is further configured to receive a second message from the mobility management device, where the second message includes information about a second access network device, and indicates that the second access network device supports one or more of the at least one network slice.

The sending module 1401 is further configured to send the second message to the terminal device.

Further, the processing module 1403 is further configured to implement an operation or the like other than data/information receiving or sending on an access network device side in the foregoing embodiments of this application, for example, FIG. 8 to FIG. 13. The sending module 1401 is configured to implement the operation of data/information sending on the access network device side in the foregoing embodiments of this application, for example, FIG. 8 to FIG. 13. The receiving module 1402 is configured to implement the operation of data/information receiving on the access network device side in the foregoing embodiments of this application, for example, FIG. 8 to FIG. 13.

In a simple embodiment, a person skilled in the art may figure out that the communication apparatus 1400 may be in the form shown in FIG. 7. For example, the processor 701 in FIG. 7 may invoke the computer-executable instructions stored in the memory 703, so that the communication apparatus 1400 performs the methods performed by the communication apparatuses in the foregoing method embodiments.

For example, functions/implementation processes of the sending module 1401 and the receiving module 1402 in FIG. 14 may be implemented by the processor 701 in FIG. 7 by invoking the computer-executable instructions stored in the memory 703. Alternatively, a function/an implementation process of the processing module 1403 in FIG. 14 may be implemented by the processor 701 in FIG. 7 by invoking the computer-executable instructions stored in the memory 703, and functions/implementation processes of the sending module 1401 and the receiving module 1402 in FIG. 14 may be implemented by a communication interface 704 in FIG. 7.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to cores configured to execute software instructions to perform operation or processing, the processor may further include a necessary hardware accelerator, for example, a field programmable gate array (field programmable gate array, FPGA), a PLD (programmable logic device), or a logic circuit implementing dedicated logical operation.

When the foregoing modules or units are implemented by hardware, the hardware may be any one or any combination of a CPU, a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or perform the foregoing method procedures without depending on software.

In addition, considering that different services may have privacy protection requirements for NSSAI information of a user, an access stratum (access stratum, AS) connection establishment procedure further includes operator-controlled (operator-controlled) slice information, in other words, user privacy protection is implemented by controlling whether the NSSAI information can be included in the connection establishment procedure.

Specifically, a serving PLMN may control, based on an access type, slice information (for example, the NSSAI information) that may be included by a terminal device (for example, UE) in the access stratum connection establishment procedure. For example, when the UE establishes a connection by using a service request (for example, service request) procedure, a periodic registration update (for example, periodic registration update) procedure, or a registration procedure used to update a UE capability, the access stratum connection establishment procedure may include the NSSAI information (if any). In addition, regardless of the procedure that triggers RRC connection establishment, a home PLMN or a visited PLMN may further indicate the UE not to include the NSSAI information at an access stratum, to enable NSSAI privacy protection.

In an implementation process, in a registration process of the UE, an AMF may include an access stratum connection establishment NSSAI inclusion mode parameter (Access Stratum Connection Establishment NSSAI Inclusion Mode parameter) in a registration accept (Registration Accept) message to be sent to the UE, to indicate whether and when the UE can include the slice information (for example, the NSSAI information) in the access stratum connection establishment (Access Stratum Connection Establishment).

Access stratum connection establishment NSSAI inclusion modes may include the following cases a, b, c, and d.
a. The UE may include a set of slice information corresponding to a slice allowed to be used, for example, an NSSAI set of allowed NSSAIs (Allowed NSSAI) (if available), in the access stratum connection establishment caused or triggered by the service request (Service Request) procedure, the periodic registration update (Periodic Registration Update) procedure, or the registration procedure used to update the UE capability (Registration procedure used to update the UE capability).
b. When the access stratum connection establishment is caused or triggered by the service request procedure, the included slice information (for example, the NSSAI information) may be S-NSSAI in a network slice that triggers the access stratum connection establishment, namely, all S-NSSAI that reactivates a user plane of a PDU session through the service request procedure, or S-NSSAI in a network slice related to triggering the service request procedure to execute control plane interaction. For example, for session management SM, the slice information may be S-NSSAI for a PDU session related to an SM message.
   When the access stratum connection establishment is caused or triggered by the periodic registration update procedure or the registration procedure used to update the UE capability, the included NSSAI information may be a subset of the allowed NSSAI.
c. The UE should not include any NSSAI information in the access stratum connection establishment caused or triggered by the service request procedure, the periodic registration update procedure, or the registration procedure used to update the UE capability.
d. The UE should not provide the NSSAI information at the access stratum.

In the mode a, b, or c, when the access stratum connection establishment is caused or triggered by mobility registration update or initial registration, the UE may include requested NSSAI provided ay a NAS.

For all UEs allowed to use the mode a, b, or c, the access stratum connection establishment NSSAI inclusion mode (Access Stratum Connection Establishment NSSAI Inclusion Mode) should be consistent in a same registration area. In other words, when the UE is within a range of the registration area, the access stratum connection establishment NSSAI inclusion mode remains unchanged. In a part of network slice configuration, the UE may store and depend on behavior of a corresponding mode in each PLMN and access type. An AMF network element corresponding to the serving PLMN should not indicate the UE to operate in any mode other than the mode d in a 3GPP access type, unless the HPLMN provides an indication indicating that the UE is allowed to operate in any mode other than the mode d (in other words, if the PLMN allows the mode a, b, or c), and then a UDM in the HPLMN sends an explicit indication to the serving AMF, to indicate that the NSSAI may be included, as a part of subscription data, in RRC.

A default operating mode of the UE is as follows:
For the 3GPP access type, the UE operates in the mode d by default unless the UE obtains an indication indicating that the UE can run in the mode a, b, or c.

For an untrusted non-3GPP access type, the UE operates in the mode b by default unless the UE obtains an indication indicating that the UE can run in the mode a, b, or d.

For a trusted non-3GPP access type, the UE operates in the mode d by default unless the UE obtains an indication indicating that the UE can run in the mode a, b, or c.

For a W-5GAN access type, a 5G-RG operates in the mode b by default unless the 5G-RG obtains an indication indicating that the 5G-RG can run in the mode a, c, or d.

In addition, an operator may pre-configure the UE to operate in the mode c in the HPLMN by default, to be specific, when the UE performs an initial registration procedure and a mobility registration update procedure with the HPLMN, the UE includes the NSSAI information at the access stratum by default until the HPLMN changes the mode as described above, and obtains an indication indicating that the UE can run in the mode a, b, or d.

In the foregoing scenario, based on the background in which the UE may not include the NSSAI information in the connection establishment procedure, this application further provides an implementation solution for determining an access network device. When an access network device connected to the UE does not support a slice requested by the UE, an AMF may determine a target access network device based on slice information supported by an access network device, and send information about the target access network device to the UE, so that the UE can establish a connection to the target access network device through a procedure, for example, a service request procedure, a mobility registration update procedure, a periodic update procedure, or a registration procedure used to update a UE capability, that enables the UE to establish the connection to the target access network device, and access a core network through the target access network device.

FIG. 15 shows an access network device determining method according to an embodiment of this application. An example in which a terminal device is UE is used. The method may include the following steps.

1501: The terminal device sends a first message to a mobility management device through a first access network device.

The first message includes an identifier, for example, requested NSSAI or S-NSSAI, of at least one network slice. The first message indicates that the UE requests to access the network slice, to obtain a service corresponding to the at least one network slice.

In an implementation, the first message may be specifically a registration request (Registration Request) message. The registration request message sent by the UE may be carried in a NAS message, and is transparently transmitted by the first access network device to the mobility management device. The registration request may include the requested NSSAI (Requested NSSAI).

In addition, in a possible implementation, the first message may further include first indication information, and the first indication information indicates to obtain information about an access network device that supports the at least one network slice or indicates to match or select a corresponding access network device based on the first message. In a possible implementation, the first indication information may indicate to obtain slice information supported by an access network device.

For other descriptions, refer to related descriptions of step 801 in the foregoing embodiment, and details are not described herein again.

1502: The mobility management device sends a second message to the terminal device through the first access network device.

Correspondingly, the mobility management device receives the first message. When determining that the first access network device currently connected to the UE does not support a part or all of the network slices requested by the UE, the mobility management device may determine a target access network device, for example, a second access network device, based on information about a network slice supported by an access network device, and send information about the second access network device to the UE by using the second message, so that the UE can be connected to the second access network device based on the information about the second access network device.

The second message may include the information about the second access network device.

In addition, the second message may indicate that the second access network device supports one or more of the at least one network slice. In other words, the second message indicates, to the UE, that the second access network device can support a part or all of the network slices requested by the UE.

In an implementation, the second message may further indicate that the first access network device does not support one or more of the at least one network slice. In other words, the second message may indicate, to the UE, that the first access network device does not support a part or all of the network slices requested by the UE, but the second access network device can support a part or all of network slices that are requested by the UE but not supported by the first access network device.

In an implementation, when the first message of the UE includes a plurality of network slices, and the second access network device supports only a part of the plurality of network slices requested by the UE, in this implementation, the second message may further include an identifier of one or more of the at least one network slice included in the first message.

For example, the second message may be a response message in response to the first message. For example, the first message may be the registration request message, and the second message may be a registration accept message.

For other descriptions, refer to related descriptions of step 802 in the foregoing embodiment, and details are not described herein again.

1503: The mobility management device sends third information, where the third information indicates to release a connection between the first access network device and the terminal device.

In a possible implementation, the mobility management device may send the third information to the first access network device, or may send the third information to the terminal device through the first access network device.

In a possible implementation, the third information may be the second message.

In a possible implementation, the third information may be information that is for updating a policy of the terminal device and that is in a configuration update procedure.

In a possible implementation, the third information may include the information about the second access network device. The terminal device learns, based on the third information, that the first access network device does not support the slice requested by the terminal device, or that the second access network device supports the slice requested by the terminal device. The terminal device establishes the connection to the second access network device. In a possible implementation, the terminal device may establish the connection to the second access network device after releasing the connection to the first access network device. In another possible implementation, the terminal device may perform a registration procedure through the second access network device after performing a deregistration procedure through the first access network device.

For example, that the mobility management device initiates a connection release procedure may include: The mobility management device sends a UE context release instruction (for example, an N2 UE Context Release Command) to the first access network device. Then, the first access network device sends an AS message to the UE, to release the connection to the first access network device.

For example, an AMF may initiate an N2 connection release procedure, or the UE may initiate an AN release procedure, so that the UE enters an idle state (for example, a CM-IDLE state). Subsequently, the UE may establish the connection to the second access network device through a service request procedure, a periodic registration update procedure, a mobility registration update procedure, a registration procedure used to update a capability of the terminal device, or the like, to obtain the service corresponding to the requested network slice (for example, the requested NSSAI), so that the second access network device can support the slice requested by the UE.

In an implementation, the terminal device may obtain fourth information, where the fourth information indicates that slice information is allowed to be included when the terminal device establishes the connection and/or indicates a procedure to be performed. In other words, the terminal device may learn or determine, by using the received fourth information or the configured/pre-configured fourth information, that information about the at least one network slice requested by the terminal device may be included in the procedure to be performed to subsequently establish the connection to the second access network device. In a possible implementation, the procedure to be performed includes the mobility registration update procedure, an initial access procedure, the service request procedure, the periodic registration update procedure, or the registration procedure used to update the capability of the terminal device.

1504: The terminal device sends fifth information, to establish the connection to the second access network device.

In a possible implementation, the terminal device may send the fifth information to the second access network device, or may send the fifth information to the mobility management device through the second access network device. The connection may be an access stratum connection (AS connection), an access network connection (AN connection), or a non-access stratum signaling connection (for example, a NAS signaling connection).

The fifth information may include the at least one network slice that the terminal device requests to access, for example, the requested NSSAI.

The fifth information may be sent to the mobility management device by using a message in the service request procedure, the periodic registration update procedure, the mobility registration update, or the registration procedure used to update the capability of the terminal device. In a possible implementation, the fifth information may be a message in the service request, the periodic registration update, the mobility registration update, or the registration procedure for updating the capability of the terminal device.

In an implementation, the terminal device may send, to the second access network device, indication information indicating that an establishment cause is access network device update, reselection, or redirection.

In a possible implementation, the establishment cause of establishing the connection between the terminal device and the second access network device may be the access network device update, reselection, or redirection. For example, when the terminal device establishes the connection to the second access network device, the establishment cause (for example, the establishment cause) sent by the terminal device to the second access network device may be the access network device redirection (for example, access node relocation, access network relocation, TNGF relocation, or N3IWF relocation), the access network device update, an access network device change, the access network device reselection, or the like. The establishment cause may indicate that the cause of establishing the connection between the terminal device and the second access network device is the access network device change or supporting the network slice requested by the terminal device.

After the UE establishes the connection to the second access network device, and/or establishes the connection to the mobility management device through the second access network device, the mobility management device updates, learns of, obtains, or determines allowed slice information (for example, allowed NSSAI) corresponding to the UE. The allowed slice information may include the requested slice information (for example, the requested NSSAI).

In this embodiment of this application, the allowed slice information (for example, the allowed NSSAI) may be updated in the following two manners.

Manner 1: The mobility management device may include the requested network slice information of the terminal device in the allowed slice information to be sent to the terminal device, in other words, the allowed NSSAI includes the requested NSSAI.

Specifically, when the terminal device accesses the mobility management device through the first access network device, the accessed mobility management device determines that at least one network slice (for example, a first network slice) in the requested NSSAI of the first message is not supported by the first access network device, but determines that the second access network device can support the at least one network slice (for example, the first network slice). In this case, the mobility management device determines, based on the requested network slice information (for example, the requested NSSAI) of the terminal device and supported network slice information (for example, a supported slice) of the second access network device, the allowed slice information (for example, the allowed NSSAI) corresponding to the UE.

It should be noted that the allowed slice information may include first slice information supported by the second access network device, where the first slice information includes an identifier of at least one network slice supported by the second access network device. In addition, the allowed slice information may include second slice information that the terminal device requests to access, where the second slice information includes an identifier of at least one network slice, and the first slice information may be the same as or different from the second slice information. For example, the slices requested by the terminal device are a slice 1, a slice 2, and a slice 3, the first access network device connected to the terminal device supports the slice 1, and the second access network device supports the slice 1 and the slice 2. In this case, the mobility management device may obtain that the allowed slice information of the terminal device includes the first slice information, and the first slice information includes identifiers of the slice 1 and the slice 2, where the first slice information includes the second slice information, and the second slice information includes a part or all of the slices, for example, the slice 1 and the slice 2, that the terminal device requests to access. In this case, the allowed slice information includes both slice information supported by the first access network device and slice information, for example, the slice 2, not supported by the first access network device. In other words, the allowed NSSAI in this application may include slice information that is not supported by the first access network device but supported by the second access network device.

Subsequently, when the mobility management device authenticates the UE and allows access to a core network, the second message sent by the mobility management device to the UE may include or carry the allowed slice information. Alternatively, the allowed slice information may be sent to the UE in a message (for example, a UE configuration update command) or a procedure (for example, a UE configuration update procedure) for configuration update. In a possible implementation, the mobility management device may send the allowed slice information and/or the information about the second access network device to the UE. In a possible implementation, the allowed slice information and/or the information about the second access network device may indicate to release the connection between the terminal device and the first access network device. For example, when obtaining the allowed slice information and/or the information about the second access network device, or obtaining the allowed slice information and/or the information about the second access network device through the first access network device, the terminal device may learn of one or more of the following information: The first access network device does not support the part or all of the slices that the terminal device requests to access; the second access network device supports the part or all of the slices that the terminal device requests to access; the connection to the first access network device is to be released; the terminal device is to perform the deregistration procedure through the first access network device; the terminal device needs to establish the connection to the second access network device; or the terminal device is to perform the registration procedure through the second access network device.

In an implementation, in a procedure for establishing the connection between the terminal device and the second access network device, the terminal device sends fifth information, where the fifth information includes third slice information that the terminal device requests to access, and the third slice information includes an identifier of a part or all of the network slices that the terminal device requests to access. The third slice information may be the same as or different from the first slice information or the second slice information. For example, based on the foregoing example, if the slices requested by the terminal device are the slice 1, the slice 2, and the slice 3, the first access network device connected to the terminal device supports the slice 1, and the second access network device supports the slice 1 and the slice 2, the third slice information may include the identifiers of the slice 1 and the slice 2. Alternatively, the third slice information may include the identifier of the slice 2, to indicate slice information corresponding to the slice that is not supported by the first access network device but supported by the second access network device. In a possible implementation, the third slice information may include slice information corresponding to a slice that is not allowed to be used (or is not supported by the first access network device) in the network slice that the terminal device requests to access when the terminal device performs access through the first access network device. In a possible implementation, the third slice information may be slice information corresponding to the network slice supported by the second access network device. In other words, the third slice information may include slice information corresponding to the slice that is not allowed to be used (or is not supported by the first access network device) and supported by the second access network device in the network slice that the terminal device requests to access when the terminal device performs access through the first access network device.

Manner 2: When the terminal device performs access through the first access network device, and the mobility management device determines that the first access network device does not support a part of the slices requested by the terminal device but that the second access network device supports at least one slice, the mobility management device may record, save, or store fourth slice information. The fourth slice information includes the slice not supported by the first access network device. Subsequently, the mobility management device may determine the allowed NSSAI based on the requested network slice information (for example, the requested NSSAI) of the terminal device and the fourth slice information. In embodiments of this application, storing, recording, and saving may have a same meaning.

For example, identification information of the network slice that is not supported by the first access network device and that is requested by the terminal device is recorded in context information corresponding to the terminal device. Therefore, after the UE establishes the connection to the mobility management device through the second access network device, the mobility management device may subsequently update, based on the context information, the slice information allowed to be used by the terminal device, for example, the allowed NSSAI.

Optionally, slice information stored in the context information corresponding to the UE may be the slice information allowed to be used by the UE (for example, the allowed NSSAI), the requested slice information (the requested NSSAI) of the UE, or the slice that is requested by the UE but is not supported by the first access network device (for example, NSSAI that is in the requested NSSAI but is not included in the allowed NSSAI). In other words, the AMF may save, store, or record the slice information of the slice that is requested by the UE but is not supported by the first access network device. Optionally, the slice information may be the slice information supported by the second access network device. For example, based on the foregoing example, if the slices requested by the terminal device are the slice 1, the slice 2, and the slice 3, the first access network device connected to the terminal device supports the slice 1, and the second access network device supports the slice 1 and the slice 2, the fourth slice information stored on an AMF side may include the identifiers of the slice 1 and the slice 2, or include the identifier of the slice 2 and/or an identifier of the slice 3.

Further, in the implementation of the foregoing manner 1, the second message includes the allowed slice information, and may further include fourth information, where the fourth information indicates that the requested slice information is allowed to be carried or included in an access stratum message (for example, an AS message) or a non-access stratum message (for example, a NAS message) in the procedure in which the UE establishes the connection to the second access network device.

Alternatively, the fourth information may be carried or included in step 1503, in other words, carried in the message for releasing the connection.

Therefore, subsequently, in step 1504, the at least one network slice that the terminal device requests to access, for example, the requested NSSAI, may be carried or included based on the fourth information in the procedure in which the terminal device establishes the connection to the second access network device or establishes the connection to the mobility management device through the second access network device.

In the foregoing implementation, when determining that the access network device currently connected to the UE does not support the slice requested by the UE, the mobility management device obtains or determines, for the UE, the target access network device that supports the slice. In addition, the UE establishes a connection to the target access network device when the deregistration procedure does not need to be performed, and accesses the core network. Furthermore, the slice information allowed to be used by the UE is extended or updated, so that extended or updated slice information allowed to be used by the UE includes the requested slice information of the UE. This simplifies an interaction procedure and effectively resolves a problem that the UE cannot be accurately connected to the access network device to obtain a network slice service.

In an implementation process, when the access network device connected to the UE does not support the slice requested by the UE, the UE can still access the core network, but the slice allowed to be used by the UE does not include the slice requested by the UE. Therefore, after the core network reselects an access network device for the UE, and the UE does not need to perform the registration procedure, the AMF needs to update the slice information allowed to be used by the UE. Otherwise, even if the UE accesses the core network through the target access network device that supports the slice requested by the UE, the UE cannot obtain the corresponding slice service through the requested network slice.

In addition, this application further provides a possible implementation, where the implementation may include the following steps:
1. A terminal device sends first information to a mobility management device through a first access network device, where the first information includes an identifier of at least one network slice that the terminal device requests to access.
2. The mobility management device obtains allowed slice information, where the allowed slice information includes an identifier of at least one slice supported by a second access network device.

Correspondingly, the mobility management device receives the first information of the terminal device; and when determining that the first access network device currently connected to the terminal device does not support a part or all of the network slices requested by the terminal device, the mobility management device may determine the second access network device for the terminal device based on information about a network slice supported by an access network device. The second access network device may support a part or all of network slices that are requested by the terminal device but not supported by the first access network device.

Therefore, the mobility management device determines the allowed slice information, where the allowed slice information may include an identifier of at least one network slice that is supported by the second access network device and requested by the terminal device.

Subsequently, the mobility management device may send the allowed slice information to the terminal device when the terminal device is authenticated and is allowed to access a core network. For example, the allowed slice information may be carried in second information sent to the terminal device. Alternatively, the allowed slice information may be sent to the UE in a message (for example, a UE configuration update command) or a procedure (for example, a UE configuration update procedure) for configuration update.

Therefore, when the terminal device subsequently establishes a connection to the mobility management device through the second access network device, the allowed slice information (for example, allowed NSSAI) that corresponds to the UE and that is determined by the mobility management device includes requested slice information (for example, requested NSSAI) of the terminal device. In this case, the terminal device can successfully establish the connection and access the core network.

This implementation may further include another step in a registration procedure or an access procedure for the terminal device. For details, refer to a related step in other embodiments of this application or a related procedure in a conventional implementation. This is not specifically limited in this application. Different implementations provided in this application may be combined with each other.

In the foregoing implementation, when determining that an access network device currently connected to the terminal device does not support the slice requested by the terminal device, the mobility management device may determine, for the terminal device, a target access network device that supports the slice. When the terminal device does not need to perform a deregistration procedure, the allowed slice information is updated, so that updated allowed slice information includes slice information that is supported by the target access network device and that is requested by the terminal device, and the terminal device establishes a connection to the target access network device and access the core network. This simplifies an interaction procedure, and effectively resolves a problem that the terminal device cannot be accurately connected to the access network device to obtain a network slice service.

The following describes a specific implementation of this application by using an untrusted non-3GPP access technology as an example. This application may be further applicable to a scenario of a trusted non-3GPP access type, a wireline access type, a trusted WLAN access technology, a 3GPP access type, or the like. For different access types or access technologies, the access network device in embodiments may be replaced with an access network device corresponding to the access type or access technology, and/or the manner of establishing the connection between the terminal device and the access network device may be replaced with a connection establishment manner corresponding to the access type or access technology. Examples of specific implementations applied to different access types are not enumerated one by one in this application.

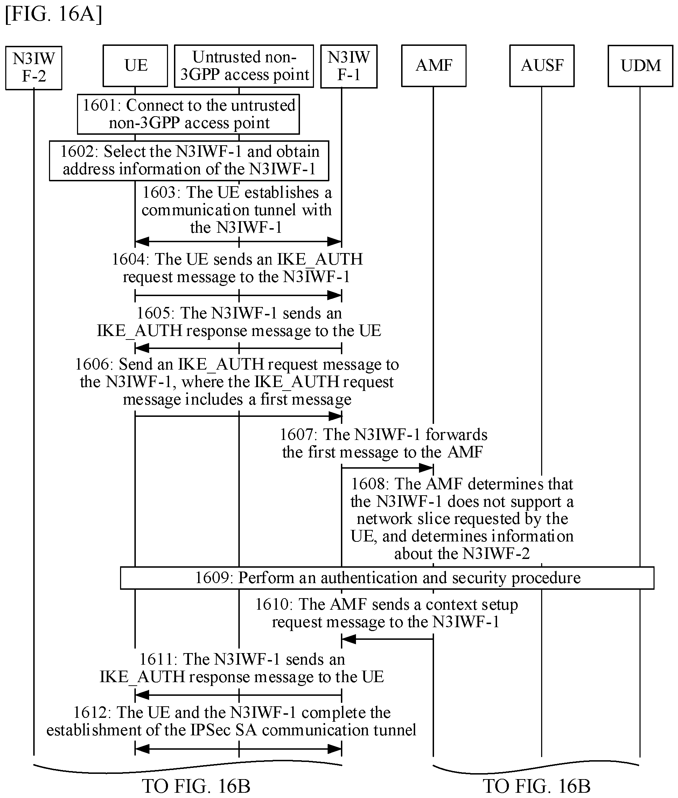

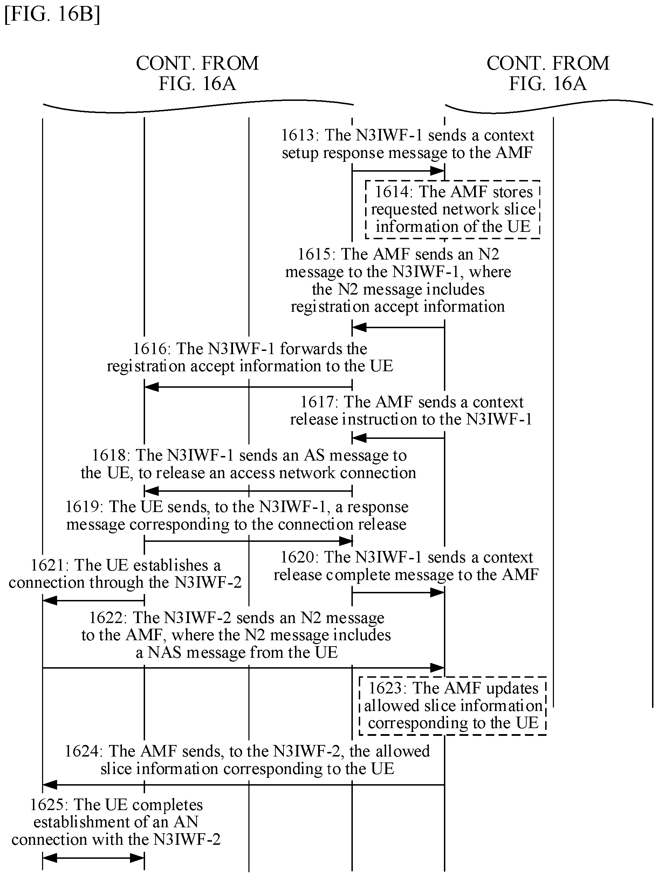

As shown in FIG. 16A and FIG. 16B, the method may include the following steps.

1601: UE connects to an untrusted non-3GPP access point.

1602: The UE selects an N3IWF-1 and obtains address information of the N3IWF-1.

1603: The UE establishes a communication tunnel with the N3IWF-1.

1604: The UE sends an IKE_AUTH request message to the N3IWF-1.

1605: The N3IWF-1 sends an IKE_AUTH response message to the UE.

1606: The UE sends an IKE_AUTH request message to the N3IWF-1, where the IKE_AUTH request message includes a first message.

The first message carries identification information of a network slice requested by the UE. For example, the first message may be a registration request, and carries requested NSSAI (for example, requested NSSAI). In embodiments of this application, carrying may be understood as including.

1607: The N3IWF-1 forwards the first message to an AMF.

1608: The AMF determines that the N3IWF-1 does not support the network slice requested by the UE, and determines information about an N3IWF-2.

For steps 1601 to 1608, refer to related descriptions of steps 901 to 908 in the foregoing embodiment. Details are not described herein again.

In a possible implementation, when determining that the N3IWF-1 currently connected to the UE does not support all or a part of the network slices requested by the UE, the AMF may determine, based on first indication information sent by the UE, that the network slice requested by the UE needs to be met, that a target access network device that supports the network slice requested by the UE needs to be selected, that information about the target access network device that supports the network slice requested by the UE needs to be obtained, that the UE supports access network device reselection, that the UE supports selecting an access network device based on the slice, or that the UE supports extended access network device configuration information.

Therefore, the AMF determines to obtain the information about the access network device, for example, an identifier of the N3IWF-2, that supports (a part or all of) the network slices requested by the UE. In a possible implementation, in the one or more network slices requested by the UE, a quantity of network slices supported by the N3IWF-2 is greater than a quantity of network slices supported by the N3IWF-1.

For example, the information about the access network device may be an identifier, for example, an N3IWF ID, an N3IWF node ID, a global N3IWF node ID, a TNGF ID, a TNGF node ID, a global TNGF node ID, a TNAP ID, a TNAP node ID, a global TNAP ID, a global TNAP node ID, an SSID, a W-AGF ID, a W-AGF node ID, a global W-AGF node ID, a RAN ID, a cell ID, a global cell ID, a TAI, a global RAN ID, a TWIF ID, a TWIF node ID, or a global TWIF node ID, of the access network device. Alternatively, the information about the access network device may be an address (for example, an IP address or a MAC address), a port number, domain name information (for example, an FQDN or an N3IWF FQDN), an SSID, a BSSID, a TNAN ID, an access point identifier (for example, an AP identifier or a TNAP identifier), or the like of the access network device.

In another possible implementation (corresponding to the manner 1 described above), the AMF obtains, based on requested network slice information (for example, the requested NSSAI) of the UE and/or supported slice information (for example, a supported slice) of the N3IWF-2, allowed slice information (for example, allowed NSSAI) corresponding to the UE. The AMF may include the allowed slice information corresponding to the UE in a registration accept message or a procedure or a message for configuration update, to send the allowed slice information to the UE. In embodiments of this application, obtaining may be understood as determining, receiving, generating, or the like.

1609: Perform an authentication and security procedure.

1610: The AMF sends a context setup request message to the N3IWF-1.

1611: The N3IWF-1 sends an IKE_AUTH response message to the UE.

1612: The UE and the N3IWF-1 complete the establishment of the IPsec SA communication tunnel.

1613: The N3IWF-1 sends a context setup response message to the AMF.

For the foregoing steps 1609 to 1613, refer to related descriptions of steps 910 to 914 in the foregoing embodiment.

In a possible implementation (corresponding to the foregoing manner 2), in step 1608, when the allowed slice information corresponding to the UE does not include the requested network slice information (for example, the requested NSSAI) of the UE and/or the supported slice information (for example, the supported slice) of the N3IWF-2, or the allowed slice information corresponding to the UE is allowed slice information obtained based on subscription data of the UE (for example, slice information corresponding to a slice subscribed to by the UE) and supported network slice information of the N3IWF-1, for example, if the AMF does not obtain the allowed slice information (for example, the extended allowed NSSAI in this application in the manner 1) based on the network slice information requested by the UE and/or the supported network slice information of the N3IWF-2, but obtains the allowed slice information (for example, existing allowed NSSAI) based on the subscription data of the UE and the supported network slice information of the N3IWF-1, the AMF may store the network slice information requested by the UE.

Optionally, step 1614 is included: The AMF stores the requested network slice information of the UE.

In an implementation, fourth slice information stored by the AMF in context information of the UE may be the slice information allowed to be used by the UE (for example, the allowed NSSAI), the requested slice information (the requested NSSAI) of the UE, or a slice requested by the UE but not supported by the N3IWF-1 (for example, NSSAI that is in the requested NSSAI but is not included in the allowed NSSAI). In other words, the AMF may store or record network slice information that is requested by the UE but not supported by the N3IWF-1. Optionally, the fourth slice information may include the slice information supported by the N3IWF-2.

In a possible implementation, the fourth slice information stored, recorded, or saved by the AMF may also be referred to as allowed slice information of the UE or slice information allowed to be used by the UE, for example, allowed NSSAI. The allowed NSSAI may include the slice information supported by the first access network device and the slice information supported by the second access network device. In a possible implementation, the fourth slice information may include slice information that is not supported by the first access network device but supported by the second access network device. In another possible implementation, the fourth slice information may be slice information not supported by the first access network device that is in the slice that the terminal device requests to access, or may be slice information not supported by the first access network device but supported by the second access network device that is in the slice that the terminal device requests to access.

In a possible implementation, the allowed NSSAI sent by the AMF to the UE may be different from the stored allowed NSSAI. For example, the allowed NSSAI (denoted as first allowed NSSAI) sent by the AMF to the UE may be determined based on the subscription data (for example, subscribed slice information) of the UE and the slice information supported by the first access network device. The allowed NSSAI (denoted as second allowed NSSAI) stored, maintained, or recorded by the AMF may include both the slice information supported by the first access network device and the slice information supported by the second access network device. In a possible implementation, the second allowed NSSAI may be a part or all of NSSAI other than the first allowed NSSAI in the requested NSSAI sent by the UE. The part or all of the NSSAI may be supported by the second access network device, or may be not supported by the first access network device. Optionally, the part or all of the NSSAI or the second allowed NSSAI may be NSSAI subscribed to by the UE.

1615: The AMF sends an N2 message to the N3IWF-1, where the N2 message includes the registration accept information.

The AMF sends the N2 message to the N3IWF-1, where the N2 message includes a NAS registration accept (NAS Registration Accept) message to be forwarded to the UE. Then, the N3IWF-1 may send the NAS registration accept message to the UE through the established IPsec SA communication tunnel.

In a possible implementation, when the AMF determines, in step 7, that the N3IWF-1 does not support the slice requested by the UE, and determines the information about the N3IWF 2, the registration accept message may include the information (the identifier or an address) about the N3IWF-2. The information about the N3IWF-2 is the information about the target access network device (for example, the second access network device) in the foregoing embodiments. For the information about the access network device, refer to the various possible forms of the foregoing information about the access network device, for example, the identifier, the address, or the port number of the access network device.

Optionally, the registration accept message may further include the requested slice information of the UE. To be specific, the AMF may send the information about the N3IWF-2 and slice information corresponding to the N3IWF-2 to the UE. The slice information corresponding to the N3IWF-2 may be the slice information supported by the N3IWF-2, or may be slice information supported by the N3IWF-2 and included in the requested slice of the UE.

In a possible implementation, when the UE includes the first indication information in the registration request message in steps 1606 and 1607, the AMF includes, in the registration accept message, the information about the N3IWF-2 and/or the slice information corresponding to the N3IWF-2.

In a possible implementation (corresponding to the foregoing manner 1), the allowed NSSAI included in the registration accept message sent by the AMF to the UE may be the allowed slice information (for example, may be extended allowed slice information) determined in the manner 1 and described in step 1608. For example, the registration accept message includes the allowed NSSAI (or the extended allowed NSSAI) of the requested slice information of the UE. In the allowed NSSAI, a part of slices may not be supported by the N3IWF-1, in other words, in the allowed NSSAI, a part of slices may be information about a slice supported by the N3IWF-2 but not supported by the N3IWF-1.

In another possible implementation, the registration accept message may carry fourth information. The fourth information indicates slice information that needs to be included and/or a procedure that needs to be performed when the UE subsequently establishes a connection through the N3IWF-2. The fourth information may also be referred to as carried slice indication information or included slice indication information.

For example, the fourth information may be mode information. The mode information may indicate that the UE may include requested slice information (requested NSSAI) of the UE in an AS message or a NAS message when establishing a connection to the N3IWF-2. The requested slice information may enable the N3IWF-2 or the AMF to learn of the requested slice information of the UE when the UE establishes the connection to the N3IWF-2. For example, the mode information may be an access stratum connection establishment NSSAI inclusion mode (Access Stratum Connection Establishment NSSAI Inclusion Mode), and may be specifically a mode e (as can be learned from the foregoing, there are modes a, b, c, and d in an implementation process). In a possible implementation, the requested NSSAI may be the requested NSSAI sent by the UE through the first access network device, may be NSSAI that the UE requests to access but the first access network device does not support, may be NSSAI that the UE requests to access and the second access network device supports, or may be NSSAI that the UE requests to access, the first access network device does not support, and the second access network device supports.

Alternatively, the fourth information may indicate that the UE needs to initiate a mobility registration update procedure or an initial access procedure when subsequently establishing the connection through the N3IWF-2. Therefore, the UE may include the requested slice information (the requested NSSAI) of the UE in the NAS message.

Alternatively, the fourth information may indicate that when the UE establishes the connection to the N3IWF-2, an establishment cause may indicate an access network device change/access network device reselection or access network device reselection/redirection (for example, the establishment cause is N3IWF relocation/redirection). In a possible implementation, when the AMF is registered with a UDM, an access type that needs to be provided to the UDM is non-3GPP access.

1616: The N3IWF-1 forwards the registration accept information to the UE.

The N3IWF-1 may send the NAS registration accept information to the UE through the IPsec SA communication tunnel established in step 1612.

1617: The AMF sends a context release instruction to the N3IWF-1.

The AMF initiates an N2 connection release procedure, and sends an N2 UE context release instruction (for example, an N2 UE context release command) to the N3IWF-1.

1618: The N3IWF-1 sends an AS message to the UE, to release an access network connection.

For example, the AS message sent by the N3IWF-1 to the UE may be an IKE informational request.

In a possible implementation, if the registration accept information in step 1615 does not include the fourth information, the fourth information may be carried in the N2 UE context release instruction and/or the AS message sent by the N3IWF-1 to the UE, to indicate that the requested slice information (the requested NSSAI) may be carried in the AS/NAS message for establishing the connection between the UE and the N3IWF-2.

1619: The UE sends, to the N3IWF-1, a response message corresponding to the connection release.

The response message may indicate that the AN connection is successfully released, and for example, may be a message in response to the IKE informational request.

1620: The N3IWF-1 sends a context release complete message to the AMF.

For example, the context release complete message may be N2 UE context release complete.

In a possible implementation, after obtaining the information about the second access network device by using the registration accept message or through the configuration update procedure, the UE may learn, based on the information about the second access network device, to establish the connection to the second access network device.

1621: The UE establishes the connection through the N3IWF-2.

In a possible implementation, when the UE initiates, through the N3IWF-2, a service request procedure, a periodic registration update procedure, or a registration procedure used to update a UE capability, the UE may include, based on the fourth information, the requested slice information (the requested NSSAI) in the AS or NAS message to be sent to the N3IWF-2.

Alternatively, a connection establishment request message indicates the establishment cause of establishing the connection to the access network device, where the establishment cause includes the access network device change/reselection/redirection. For example, in this embodiment, an untrusted non-3GPP access type is used as an example. In this case, the establishment cause (Establishment Cause) may be indicated as relocating/redirecting the N3IWF (or N3IWF relocation/redirection). For another access type, the establishment cause may be correspondingly an access network device name corresponding to the another access type. For example, for a trusted non-3GPP access technology, the establishment cause (Establishment Cause) may be indicated as TNGF relocation.

In a possible implementation, the UE initiates the mobility registration procedure to the N3IWF-2, and includes the requested slice information in the NAS message.

In a possible implementation, after establishing the connection to the N3IWF-2 based on the fourth information, the UE initiates the mobility registration procedure or the initial access procedure through the N3IWF-2, and includes the requested slice information in the NAS message.

In a possible implementation (corresponding to the foregoing manner 1), the UE may initiate, to the N3IWF-2, the service request procedure, the periodic registration update procedure, the registration procedure used to update the UE capability, or the mobility registration update procedure. In a possible implementation, in step 1614, the AMF obtains, based on the stored slice information (for example, the information stored in the context information of the UE), the requested slice information of the UE, and updates the allowed NSSAI.

1622: The N3IWF-2 sends an N2 message to the AMF, where the N2 message includes the NAS message from the UE.

A specific message type of the NAS message may depend on the procedure initiated by the UE. For example, if the UE initiates the service request procedure, the NAS message may be a service request. In a possible implementation, if the UE includes the requested slice information in the AS message, the target access network device may include the requested slice information in the N2 message.

Optionally, step 1623 may be further included: The AMF updates the allowed slice information corresponding to the UE.

The AMF obtains the requested slice information of the UE based on one or more of the slice information (for example, the slice information included in the context information of the UE) stored in step 1614, the NAS message from the UE, or the N2 message. The AMF updates the allowed slice information (for example, the allowed NSSAI) corresponding to the UE based on the requested slice information of the UE and the information about the supported slice of the target access network device. If the allowed slice information sent by the AMF to the UE through the N3IWF-1 already includes the requested slice information, this step may not be performed.

1624: The AMF sends, to the N3IWF-2, the allowed slice information corresponding to the UE.

The allowed slice information includes the requested slice information of the UE, in other words, the allowed NSSAI includes the requested NSSAI, so that the UE can obtain a requested network slice service through the N3IWF-2.

1625: The UE and the N3IWF-2 complete establishment of an AN connection.

It should be noted that, the foregoing embodiment of this application uses the untrusted non-3GPP access type as an example. For a scenario of another non-3GPP access type, a manner of establishing a connection between UE and an access network device is different. Therefore, the connection establishment procedure in steps 1601 to 1606 varies (for example, the embodiment shown in FIG. 12). In addition, an AS connection and an underlying connection that are subsequently for carrying a NAS message and a manner of establishing the connections may vary. For example, in the 3GPP access type, an RRC connection or a radio air interface carries NAS; and in the untrusted non-3GPP access technology or the trusted non-3GPP access technology, an IP connection carries a NAS message. For the wireline access technology, a layer-2 or layer-3 connection may carry a NAS message.

In the foregoing embodiment, when determining that the access network device currently connected to the UE does not support the slice requested by the UE, the AMF may determine, for the UE, the access network device that supports the slice. In addition, when the UE does not need to perform a deregistration procedure, the UE establishes the connection to the target access network device and accesses a core network. This effectively resolves a problem that the UE cannot be accurately connected to the access network device to obtain the network slice service.

In addition, in another implementation, a first core network device may obtain, based on information about a network slice requested by a terminal device, information about a second access network (or information about a second access network device) when a first access network device connected to the terminal device does not support a part or all of the network slices requested by the terminal device. The first core network device may send, to the terminal device, the information about the second access network and/or information about a network slice corresponding to or supported by the second access network. The terminal device may establish a connection to the second access network device based on the information about the second access network and/or the information about the network slice corresponding to or supported by the second access network.

In a possible implementation, the second access network device may include, based on the information about the second access network and/or the information about the network slice corresponding to or supported by the second access network, one or more of a service set identifier (for example, a service set identifier, SSID), identification information (for example, a TNGF ID or a trusted access network device identifier) of the second access network device, identification information (for example, a TNAP Identifier) of a second access network node, address information of the second access network device, domain name information (for example, an FQDN or a domain name) of the second access network device, port information of the second access network device, the information about the one or more network slices supported by the second access network, or information about one or more network slices supported by the second access network device. In a possible implementation, the information about the one or more network slices supported by the second access network may include the information about all the slices supported by the second access network, or include information about a network slice that is supported by the second access network and that is allowed to be used or subscribed to by the terminal device. In a possible implementation, the information about the one or more network slices supported by the second access network device may include the information about all the slices supported by the second access network device, or include information about a network slice that is supported by the second access network device and that is allowed to be used or subscribed to by the terminal device. The information about the network slice may include identification information (for example, NSSAI or S-NSSAI) of the network slice. In a possible implementation, one or more of the service set identifier (for example, the service set identifier, SSID), the identification information (for example, the TNGF ID or the trusted access network device identifier) of the second access network device, the identification information (for example, the TNAP identifier) of the second access network node, the address information of the second access network device, the domain name information (for example, the FQDN or the domain name) of the second access network device, or the port information of the second access network device may be related to or correspond to a part or all of the network slices that the terminal device requests to access.

For example, the terminal device requests to access a slice 1 and a slice 2, the first access network device supports the slice 1, and the second access network device supports the slice 1 and the slice 2. An SSID 1 supports the slice 1 and a slice 3, and an SSID 2 supports the slice 1 and the slice 2. When the first core network device determines, based on the information about the network slice (where for example, requested NSSAI includes the slice 1 and the slice 2) requested by the terminal device, that the first access network device does not support a part or all of the slices requested by the terminal device (where for example, the first access network device does not support the slice 2), and the second access network device supports a part or all of the slices requested by the terminal device (where for example, the second access network device supports the slice 1 and the slice 2), the first core network device obtains or determines the information about the second access network (or the information about the second access network device) based on information about an access network or a correspondence between information about an access network and information about a slice.

In a possible implementation, the first core network device sends, to the terminal device, the information about the second access network and/or the information about the network slice corresponding to or supported by the second access network. For example, a mobility management device or a policy control device may send, to the terminal device, the information about the second access network and/or the information about the network slice corresponding to or supported by the second access network.

In a possible implementation, information about one or more access networks and/or information about a network slice corresponding to or supported by one or more access networks may be configured on the first core network device. For example, the information about the one or more access networks and/or the information about the network slice corresponding to or supported by the one or more access networks may be configured on the mobility management device or the policy control device.

In a possible implementation, the information about the network slice supported by the access network may include the information about all the slices supported by the access network, or include information about a network slice that is supported by the access network and that is allowed to be used or subscribed to by the terminal device.

In a possible implementation, the first core network device may obtain, through a second core network device, information about one or more access networks and/or information about a network slice corresponding to or supported by the one or more access networks. For example, the mobility management device may obtain, through the policy control device, the information about the one or more access networks and/or the information about the network slice corresponding to or supported by the one or more access networks.

In a possible implementation, the first core network device may send, to the second core network device, the information about the network slice requested by the terminal device, and the second core network device obtains the information about the second access network based on the information about the network slice requested by the terminal device and based on the information about the one or more access networks and/or the information about the network slice corresponding to or supported by the one or more access networks. The second core network device sends the information about the second access network to the terminal device, or sends the information about the second access network to the terminal device through the first core network device. For example, the mobility management device may send, to the policy control device, the information about the network slice requested by the terminal device, and the policy control device obtains the information about the second access network based on the information about the network slice requested by the terminal device. The policy control device sends the information about the second access network to the terminal device, or sends the information about the second access network to the terminal device through the mobility management device. In a possible implementation, the policy control device may send the information about the second access network to the terminal device through a configuration update procedure.

In a possible implementation, after sending the information about the second access network to the terminal device, the first core network device may reject access of the terminal device, send a registration reject message to the terminal device, or perform an access network device reselection or redirection procedure.

In a possible implementation, the terminal device may obtain, by using the registration reject message, a registration accept message, a configuration update message, a wireless local area network selection policy rule (WLANSP rule), or a configuration update procedure, the information about the second access network and/or the information about the network slice corresponding to or supported by the second access network.

In a possible implementation, the terminal device may obtain the information about the second access network and/or the information about the network slice corresponding to or supported by the second access network.

In a possible implementation, the terminal device obtains the information about the second access network and/or the information about the network slice corresponding to or supported by the second access network, and establishes a connection to the second access network device.

In a possible implementation, the terminal device obtains the correspondence between the information about the access network and the information about the network slice, and obtains the information about the second access network based on the information about the network slice requested to be accessed.

In a possible implementation, the terminal device obtains the information about the one or more access networks and/or the information about the network slice corresponding to or supported by the one or more access networks, and obtains the information about the second access network based on the information about the network slice requested to be accessed. For example, the second access network or the second access network device supports the network slice that the terminal device requests to access, and the terminal device obtains the information about the second access network.

In a possible implementation, the terminal device obtains the correspondence between the information about the access network and information about the slice, and obtains the information about the second access network based on the information about the network slice requested to be accessed and the correspondence between the information about the access network and the information about the slice.

In a possible implementation, the terminal device obtains the information about the one or more access networks and/or the information about the network slice corresponding to or supported by the one or more access networks, and obtains the information about the second access network based on the information about the network slice requested to be accessed and based on the information about the one or more access networks and/or the information about the network slice corresponding to or supported by the one or more access networks. For example, the second access network or the second access network device supports the network slice that the terminal device requests to access, and the terminal device obtains the information about the second access network.

In a possible implementation, the terminal device may obtain the correspondence between the information about the access network and the information about the slice by using the registration reject message, the registration accept message, the configuration update message, the wireless local area network selection policy rule (WLANSP rule), or the configuration update procedure.

In a possible implementation, the information about the second access network includes one or more of the service set identifier (for example, the service set identifier, SSID), identification information (for example, the TNGF ID or the trusted access network device identifier) of the second access network device, the identification information (for example, the TNAP identifier) of the second access network node, the address information of the second access network device, the domain name information (for example, the FQDN or the domain name) of the second access network device, the port information of the second access network device, the information about the one or more network slices supported by the second access network, or the information about the one or more network slices supported by the second access network device. The terminal device obtains the information about the second access network, and determines or selects the service set identifier. For example, when the information about the second access network includes the SSID, the terminal device selects the SSID included in the information about the second access network. For example, when the information about the second access network includes the TNAP identifier, the terminal device selects a TNAP corresponding to the TNAP identifier included in the information about the second access network. For example, when determining or selecting the second access network or the second access network device based on the information about the network slice requested to be accessed, the terminal device selects or determines the SSID based on the information about the second access network.

In a possible implementation, the terminal device includes the information about the second access network device in a domain name information part of a network access identifier (network access Identifier, NAI) based on the information about the second access network. Alternatively, the terminal device generates or constructs a NAI based on the information about the second access network.

In a possible implementation, when the information about the second access network includes one or more of the identification information (for example, the TNGF ID or the trusted access network device identifier) of the second access network device, the address information of the second access network device, the port information of the second access network device, or the domain name information (for example, the FQDN or the domain name) of the second access network device, the terminal device may include the one or more of the identification information (for example, the TNGF ID or the trusted access network device identifier) of the second access network device, the address information of the second access network device, the port information of the second access network device, or the domain name information (for example, the FQDN or the domain name) of the second access network device in the domain name information part in the NAI=username@realm, namely, a realm part. The terminal device sends the NAI to the second access point (for example, a TNAP). The second access point (for example, the TNAP) may determine or select the second access network device (for example, the TNGF) based on the SSID selected by the terminal device and/or the NAI (or the realm part in the NAI).

For example, the terminal device obtains the information about the second access network by using the registration reject message, the registration accept message, the configuration update message, the wireless local area network selection policy rule (WLANSP rule), or the configuration update procedure. The second access network corresponds to or supports a part or all of the network slices that the terminal device requests to access. The information about the second access network includes one or more of the SSID, a TNGF identifier, the TNAP identifier, TNGF domain name information, a TNGF IP address, or TNGF port information. The terminal device selects the second access network (for example, selects an SSID and/or a TNAP corresponding to the second access network) based on the SSID and/or the TNAP identifier. The terminal device sends the NAI to the second access network (for example, the TNAN or the TNAP). The NAI may include the information about the second access network device (for example, information about the TNGF). For example, the NAI may include one or more of the TNGF identifier, the TNGF domain name information, the TNGF IP address, or the TNGF port information. In a possible implementation, the domain name information in the NAI may include one or more of the TNGF identifier, the TNGF domain name information, the TNGF IP address, or the TNGF port information. The TNAP or the TNAN may select the TNGF based on the SSID selected by the terminal device and/or the information about the TNGF included in the NAI. Therefore, the terminal device may establish the connection to the second access network device (for example, the TNGF).

In a possible implementation, that the NAI includes the information about the second access network device may include but is not limited to the following several possible forms:
For example, the second access network device is the TNGF:
NAI=<any_username>@nai.5gc.tngfid<TNGFID>.mnc<MNC>.mcc<MCC>.3gppne twork.org

In other words, the NAI or the domain name part (namely, the realm) of the NAI includes the identification information of the second access network device (for example, the TNGF). The TNGFID is identification information of the TNGF. The identification information of the second access network device may include a character string, a digit, a bit or a bit string, an octal number or a hexadecimal number, or the like. A form of the identification information of the second access network device is not limited in this application.
NAI=<any_username>@nai.5gc.tngffqdn<TNGFFQDN>.mnc<MNC>.mcc<MCC>. 3gppnetwork.org

In other words, the NAI or the domain name part (namely, the realm) of the NAI includes the domain name information of the second access network device (for example, the TNGF). The TNGFFQDN is the domain name information of the TNGF. The domain name information of the second access network device may include a character string, a digit, a bit or a bit string, an octal number or a hexadecimal number, or the like. A form of the domain name information of the second access network device is not limited in this application.
NAI=<any_username>@nai.5gc.tngfaddr<TNGFADDR>.mnc<MNC>.mcc<MCC>. 3gppnetwork.org

In other words, the NAI or the domain name part (namely, the realm) of the NAI includes the address information of the second access network device (for example, the TNGF). The TNGFADDR is the address information (for example, an IP address or a MAC address) of the TNGF. The address information of the second access network device may include a character string, a digit, a bit or a bit string, an octal number or a hexadecimal number, or the like. A form of the address information of the second access network device is not limited in this application.
NAI=<any_username>@nai.5gc.tngfport<TNGFPORT>.mnc<MNC>.mcc<MCC>.3 gppnetwork.org

In other words, the NAI or the domain name part (namely, the realm) of the NAI includes the port information of the second access network device (for example, the TNGF). The TNGFPORT is the address information (for example, a TCP port number or a UDP port number) of the TNGF. The port information of the second access network device may include a character string, a digit, a bit or a bit string, an octal number or a hexadecimal number, or the like. A form of the port information of the second access network device is not limited in this application. In a possible implementation, the terminal device obtains fourth indication information. The fourth indication information may indicate the terminal device to obtain the NAI based on the information about the one or more access networks. Alternatively, the fourth indication information may indicate the terminal device to obtain the NAI based on the correspondence between the information about the access network and the information about the network slice. Alternatively, the fourth indication information may indicate the terminal device to obtain the NAI based on the information about the network slice requested to be accessed and the correspondence between the information about the access network and the information about the network slice. Alternatively, the fourth indication information may indicate the terminal device to obtain the information about the second access network based on the information about the network slice requested to be accessed and the correspondence between the information about the access network and the information about the network slice, and obtain the NAI based on the information about the second access network.

In a possible implementation, the terminal device obtains fourth indication information. The fourth indication information may indicate the terminal device to obtain the NAI based on the information about the one or more access networks. Alternatively, the fourth indication information may indicate the terminal device to obtain the NAI based on the information about the one or more access networks and/or the information about the network slice corresponding to or supported by the one or more access networks. Alternatively, the fourth indication information may indicate the terminal device to obtain the NAI based on the information about the network slice requested to be accessed and based on the information about the one or more access networks and/or the information about the network slice corresponding to or supported by the one or more access networks. Alternatively, the fourth indication information may indicate the terminal device to obtain the information about the second access network based on the information about the network slice requested to be accessed and based on the information about the one or more access networks and/or the information about the network slice corresponding to or supported by the one or more access networks, and obtain the NAI based on the information about the second access network.

In a possible implementation, obtaining the NAI may be understood as generating or constructing the NAI.

In a possible implementation, the fourth indication information may be indication information included in the registration reject message, the registration accept message, the configuration update message, the wireless local area network selection policy rule (WLANSP rule), or the configuration update procedure. Alternatively, the fourth indication information may be the registration reject message, the registration accept message, the configuration update message, or the wireless local area network selection policy rule (WLANSP rule). Alternatively, the fourth indication information may be a part or all of the information about the second access network. Alternatively, the fourth indication information may be a part or all of information in the correspondence between the information about the access network and the information about the network slice. Alternatively, the fourth indication information may be a part or all of the information about the one or more access networks and/or the information about the network slice corresponding to or supported by the one or more access networks.

Based on the foregoing access network device determining method provided in this application, this application further provides a communication apparatus. As shown in FIG. 14, the communication apparatus 1400 includes a sending module 1401, a receiving module 1402, and a processing module 1403, to implement the methods implemented by the terminal device or the mobility management device in the foregoing embodiments, for example, FIG. 15 and FIG. 16A and FIG. 16B.

The processing module 1403 may be configured to implement an operation or the like other than data/information receiving or sending on a terminal device side in the foregoing embodiments in FIG. 15 and FIG. 16A and FIG. 16B of this application. The sending module 1401 is configured to implement the operation of data/information sending on the terminal device side in the foregoing embodiments of this application, for example, FIG. 15 and FIG. 16A and FIG. 16B. The receiving module 1402 is further configured to implement the operation of data/information receiving on the terminal device side in the foregoing embodiments of this application, for example, FIG. 15 and FIG. 16A and FIG. 16B.

The processing module 1403 may be further configured to implement an operation or the like other than data/information receiving or sending on a mobility management device side in the foregoing embodiments in FIG. 15 and FIG. 16A and FIG. 16B of this application. The sending module 1401 is configured to implement the operation of data/information sending on the mobility management device side in the foregoing embodiments of this application, for example, FIG. 15 and FIG. 16A and FIG. 16B. The receiving module 1402 is further configured to implement the operation of data/information receiving on the mobility management device side in the foregoing embodiments of this application, for example, FIG. 15 and FIG. 16A and FIG. 16B.

In a simple embodiment, a person skilled in the art may figure out that the communication apparatus 1400 may be in the form shown in FIG. 7. For example, the processor 701 in FIG. 7 may invoke the computer-executable instructions stored in the memory 703, so that the communication apparatus 1400 performs the methods performed by the communication apparatuses in FIG. 15 and FIG. 16A and FIG. 16B in the foregoing method embodiments.

For example, functions/implementation processes of the sending module 1401 and the receiving module 1402 in FIG. 14 may be implemented by the processor 701 in FIG. 7 by invoking the computer-executable instructions stored in the memory 703. Alternatively, a function/an implementation process of the processing module 1403 in FIG. 14 may be implemented by the processor 701 in FIG. 7 by invoking the computer-executable instructions stored in the memory 703, and functions/implementation processes of the sending module 1401 and the receiving module 1402 in FIG. 14 may be implemented by a communication interface 704 in FIG. 7.

Optionally, an embodiment of this application further provides a chip system. The chip system includes at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or a main memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may alternatively include both an internal storage unit and an external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the foregoing computer program product. When the program is executed, the procedures in the foregoing method embodiments may be included.

Optionally, an embodiment of this application further provides computer instructions. All or some of the procedures in the foregoing method embodiments may be implemented by the computer instructions instructing related hardware (for example, a computer, a processor, an access network device, a mobility management network element, or a session management network element). The program may be stored in the foregoing computer-readable storage medium or the foregoing computer program product.

The foregoing descriptions of the implementations allow a person skilled in the art to understand that, for the purpose of convenient and brief description, only division into the foregoing functional modules is used as an example for description. During actual application, the foregoing functions may be allocated to different functional modules based on a requirement and implemented, in other words, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An access network device determining method, applied to a terminal device, wherein the method comprises:
sending a first message to a mobility management device through a first access network device, wherein the first message comprises an identifier of at least one network slice, and indicates a request for accessing the network slice;
receiving a second message through the first access network device or a second access network device, wherein the second message comprises information about the second access network device, and indicates that the second access network device supports one or more of the at least one network slice; and
establishing a connection to the second access network device.

2. The method according to claim 1, wherein the second message indicates that the first access network device does not support one or more of the at least one network slice.

3. The method according to claim 1 or 2, wherein the first message comprises first indication information, and the first indication information indicates to obtain information about an access network device that supports the at least one network slice or indicates to match a corresponding access network device based on the first message.

4. The method according to any one of claims 1 to 3, wherein the information about the second access network device comprises at least one of an identifier of the second access network device or an address of the second access network device.

5. The method according to any one of claims 1 to 4, wherein the second message further comprises an identifier that is of one or more of the at least one network slice and that is comprised in the first message.

6. The method according to any one of claims 1 to 5, wherein the first access network device is any one of a trusted non-3GPP gateway function, TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function, W-AGF, an access network device corresponding to a non-3GPP access technology, or an access network device corresponding to a 3GPP access technology.

7. The method according to any one of claims 1 to 6, wherein if the second message is a registration accept message, before the receiving a second message, the method further comprises:
completing, by the terminal device, an authentication and security procedure, and establishing an Internet protocol security IPsec SA communication tunnel.

8. The method according to any one of claims 1 to 7, wherein after the receiving a second message, the method further comprises:
performing, by the terminal device, a deregistration procedure through the first access network device.

9. The method according to any one of claims 1 to 6, wherein the second message comprises second indication information, and the second indication information indicates the terminal device to change an access network device.

10. The method according to any one of claims 1 to 7, wherein the method further comprises:
obtaining third information, wherein the third information indicates to release a connection between the terminal device and the first access network device.

11. The method according to any one of claims 1 to 7 or 10, wherein the method further comprises:
obtaining allowed slice information, wherein the allowed slice information comprises first slice information supported by the second access network device, and the first slice information comprises an identifier of at least one network slice.

12. The method according to claim 11, wherein the allowed slice information comprises second slice information that the terminal device requests to access, the second slice information comprises an identifier of at least one network slice, and the first slice information is the same as or different from the second slice information.

13. The method according to any one of claims 1 to 7 or 10 to 12, wherein the method further comprises:
obtaining fourth information, wherein the fourth information indicates that slice information is allowed to be comprised when the terminal device establishes the connection and/or indicates a procedure to be performed.

14. The method according to any one of claims 1 to 7 or 10 to 13, wherein the establishing a connection to the second access network device specifically comprises:
sending fifth information, wherein the fifth information comprises third slice information that the terminal device requests to access, the third slice information comprises an identifier of at least one network slice, and the third slice information is the same as or different from the first slice information or the second slice information.

15. The method according to claim 14, wherein the method further comprises:
sending, by the terminal device to the second access network device, indication information indicating that an establishment cause is access network device update, reselection, or redirection.

16. An access network device determining method, applied to a mobility management device, wherein the method comprises:
receiving a first message from a terminal device through a first access network device, wherein the first message comprises an identifier of at least one network slice, and indicates that the terminal device requests to access the network slice; and
if it is determined that the first access network device does not support one or more of the at least one network slice, and that a second access network device supports one or more of the at least one network slice,
sending a second message to the terminal device through the first access network device, wherein the second message comprises information about the second access network device, and indicates that the second access network device supports the one or more of the at least one network slice.

17. The method according to claim 16, wherein the at least one network slice is a first network slice; and if the mobility management device determines that the first access network device does not support the first network slice, and determines that the second access network device supports the first network slice,
sending the second message to the terminal device through the first access network device.

18. The method according to claim 16 or 17, wherein the second message indicates that the first access network device does not support the one or more of the at least one network slice.

19. The method according to any one of claims 16 to 18, wherein the first message comprises first indication information, and the first indication information indicates to obtain information about an access network device that supports the at least one network slice or indicates to match a corresponding access network device based on the first message.

20. The method according to any one of claims 16 to 19, wherein the information about the second access network device comprises at least one of an identifier of the second access network device or an address of the second access network device.

21. The method according to any one of claims 16 to 20, wherein the second message further comprises an identifier that is of one or more of the at least one network slice and that is comprised in the first message.

22. The method according to any one of claims 16 to 21, wherein the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

23. The method according to any one of claims 16 to 22, wherein the second message is a registration reject message.

24. The method according to any one of claims 16 to 23, wherein the second message comprises second indication information, and the second indication information indicates the terminal device to change a corresponding access network device.

25. The method according to any one of claims 16 to 24, wherein the method further comprises:
receiving, by the mobility management device, an identifier of the terminal device, wherein the identifier of the terminal device is used by an access network device to determine the terminal device.

26. The method according to claim 25, wherein after it is determined that the second access network device supports the one or more of the at least one network slice, the method further comprises:
sending a first request message to the second access network device, wherein the first request message comprises the identifier of the terminal device, and requests to change the access network device for the terminal device; and
receiving a first response message from the second access network device, wherein the first response message comprises the address of the second access network device.

27. The method according to any one of claims 16 to 22, wherein the method further comprises:
storing fourth slice information that the terminal device requests to access, wherein the fourth slice information comprises an identifier of at least one network slice.

28. The method according to claim 27, wherein the fourth slice information comprises an identifier of at least one network slice not supported by the first access network device.

29. The method according to any one of claims 16 to 22, wherein the method further comprises:
sending allowed slice information to the terminal device, wherein the allowed slice information comprises first slice information supported by the second access network device, and the first slice information comprises an identifier of at least one network slice.

30. The method according to claim 29, wherein the allowed slice information comprises second slice information that the terminal device requests to access, the second slice information comprises an identifier of at least one network slice, and the first slice information is the same as or different from the second slice information.

31. The method according to any one of claims 16 to 22 or 27 to 30, wherein the method further comprises:
sending third information, wherein the third information indicates to release a connection between the terminal device and the first access network device.

32. The method according to any one of claims 16 to 22 or 29 to 31, wherein the method further comprises:
sending fourth information to the terminal device, wherein the fourth information indicates that slice information is allowed to be comprised when the terminal device establishes a connection and/or indicates a procedure to be performed.

33. The method according to any one of claims 16 to 22 or 29 to 32, wherein the method further comprises:
obtaining fifth information, wherein the fifth information comprises third slice information that the terminal device requests to access, the third slice information comprises an identifier of at least one network slice, and the third slice information is the same as or different from the first slice information or the second slice information.

34. The method according to any one of claims 27 to 33, wherein the method further comprises:
updating the allowed slice information based on the fourth slice information or the third slice information.

35. The method according to any one of claims 16 to 22 or 27 to 34, wherein the method further comprises:
sending, to the second access network device, the allowed slice information corresponding to the terminal device; and/or
sending the allowed slice information to the terminal device through the second access network device.

36. An access network device determining method, applied to a mobility management device, wherein the method comprises:
receiving a first message from a terminal device through a first access network device, wherein the first message comprises an identifier of at least one network slice, and indicates that the terminal device requests to access the network slice; and
if it is determined that the first access network device does not support one or more of the at least one network slice, and that a second access network device supports one or more of the at least one network slice,
sending a second message to the second access network device, wherein the second message indicates the second access network device to send information about the second access network device to the terminal device, and the information about the second access network device is used by the terminal device to establish a connection to the second access network device.

37. The method according to claim 36, wherein after it is determined that the first access network device does not support the one or more of the at least one network slice, the method further comprises:
sending a second request message to the first access network device, wherein the second request message requests to obtain an identifier of a non-3GPP access point connected to the terminal device; and
receiving, from the first access network device, the identifier of the non-3GPP access point connected to the terminal device.

38. The method according to claim 36 or 37, wherein after it is determined that the first access network device does not support the one or more of the at least one network slice, the method further comprises:
sending a third request message to the second access network device, wherein the third request message comprises the identifier of the non-3GPP access point.

39. The method according to claim 38, wherein the third request message further comprises third indication information, and the third indication information indicates to change an access network device for the terminal device, indicates that the terminal device is migrated from another access network device, or indicates that the terminal device was previously connected to another access network device.

40. The method according to claim 38 or 39, wherein the third request message is for setting up context information of the terminal device.

41. An access network device determining method, applied to a first core network device, wherein the method comprises:
sending information about a second access network to a terminal device, to enable the terminal device to obtain a network access identifier NAI based on the information about the second access network, and establish a connection to a second access network device, wherein the information about the second access network comprises an identifier of the second access network device.

42. The method according to claim 41, wherein before the sending information about a second access network to a terminal device, the method further comprises:
receiving a first message from the terminal device through a first access network device, wherein the first message comprises information about at least one network slice, and indicates that the terminal device requests to access the network slice; and
the sending information about a second access network to a terminal device specifically comprises: if it is determined that the first access network device does not support one or more of the at least one network slice, and that the second access network device supports one or more of the at least one network slice,
sending a second message to the terminal device, wherein the second message comprises the information about the second access network.

43. The method according to claim 41 or 42, wherein the method further comprises:
sending fourth indication information to the terminal device, wherein the fourth indication information indicates the terminal device to construct the NAI based on information about one or more access networks; obtain the NAI based on a correspondence between information about an access network and information about a network slice; or obtain the information about the second access network based on a correspondence between information about an access network and information about a network slice, and obtain the NAI based on the information about the second access network.

44. The method according to claim 43, wherein the fourth indication information is a registration reject message, a registration accept message, a configuration update message, a wireless local area network selection policy rule (WLANSP rule), or indication information comprised in a configuration update procedure.

45. The method according to any one of claims 41 to 44, wherein the information about the second access network comprises one or more of the following information: a service set identifier SSID, identification information of the second access network device, identification information of an second access network node, address information, domain name information, port information, all or a part of information about N network slices corresponding to or supported by the second access network, or all or a part of information about N network slices corresponding to or supported by the second access network device, wherein N is a positive integer.

46. The method according to claim 42, wherein the information about the network slice corresponding to or supported by the second access network device comprises the information that is about the at least one network slice and that is comprised in the first message.

47. The method according to any one of claims 41 to 46, wherein information about one or more access networks and/or information about a network slice corresponding to or supported by one or more access networks is configured on the first core network device.

48. The method according to any one of claims 41 to 47, wherein the method further comprises:
sending, by the first core network device to a second core network device, the information about the network slice requested by the terminal device.

49. The method according to claim 48, wherein the method further comprises:
receiving the information about the second access network from the second access network device; and
sending the information about the second access network to the terminal device.

50. The method according to claim 42, wherein the second message comprises a registration reject message, a registration accept message, a configuration update message, a wireless local area network selection policy rule, or a message in a configuration update procedure.

51. The method according to any one of claims 41 to 50, wherein the first core network device is a mobility management device, and the second core network device is a policy control device; or
the first core network device is a policy control device, and the second core network device is a mobility management device.

52. An access network device determining method, applied to a terminal device, wherein the method comprises:
obtaining information about a second access network from a first core network device, wherein the information about the second access network comprises information about a second access network device, and the second access network device supports at least one network slice that the terminal device requests to access;
obtaining a network access identifier NAI based on the information about the second access network; and
sending the NAI to an access point of the second access network, to enable the access point of the second access network to select the second access network device based on the NAI.

53. The method according to claim 52, wherein before the obtaining information about a second access network from a first core network device, the method further comprises:
sending a first message to a first access network device, wherein the first message comprises information about the at least one network slice, and indicates that the terminal device requests to access the network slice; and
the obtaining information about a second access network from a first core network device specifically comprises: receiving a second message, wherein the second message comprises the information about the second access network.

54. The method according to claim 52 or 53, wherein the information about the second access network comprises one or more of the following information: a service set identifier SSID, identification information of the second access network device, identification information of a second access network node, address information, domain name information, port information, all or a part of information about N network slices corresponding to or supported by the second access network, or all or a part of information about N network slices corresponding to or supported by the second access network device, wherein N is a positive integer.

55. The method according to claim 54, wherein the network slice corresponding to or supported by the second access network comprises the at least one network slice comprised in the first message.

56. The method according to claim 53, wherein the second message comprises a registration reject message, a registration accept message, a configuration update message, a wireless local area network selection policy rule, or a message in a configuration update procedure.

57. The method according to any one of claims 52 to 56, wherein a domain name information part of the NAI comprises the information about the second access network device.

58. The method according to any one of claims 52 to 57, wherein the method further comprises:
obtaining fourth indication information, wherein the fourth indication information indicates the terminal device to obtain the NAI based on information about one or more access networks; or obtain the NAI based on a correspondence between information about an access network and information about a network slice; or obtain the information about the second access network based on a correspondence between information about an access network and information about a network slice, and obtain the NAI based on the information about the second access network.

59. The method according to claim 58, wherein the fourth indication information is a registration reject message, a registration accept message, a configuration update message, a wireless local area network selection policy rule (WLANSP rule), or indication information comprised in a configuration update procedure.

60. A communication apparatus, wherein the communication apparatus comprises a processor and a transmission interface, wherein
the processor is configured to execute instructions stored in the memory, to enable the apparatus to perform the method according to any one of claims 1 to 59.

61. A computer-readable storage medium, comprising a program or instructions, wherein when the program or the instructions are run by a processor, the method according to any one of claims 1 to 59 is performed.

62. A computer program product, wherein when the computer program product runs on a computer or a processor, the computer or the processor is enabled to perform the method according to any one of claims 1 to 59.

## Amended claims

### Amended claims under Art. 19.1 PCT

1. An access network device determining method, applied to a terminal device, wherein the method comprises:
sending a first message to a mobility management device through a first access network device, wherein the first message comprises an identifier of at least one network slice, and indicates a request for accessing the network slice;
receiving a second message through the first access network device or a second access network device, wherein the second message comprises information about the second access network device, and indicates that the second access network device supports one or more of the at least one network slice; and
establishing a connection to the second access network device.

2. The method according to claim 1, wherein the second message indicates that the first access network device does not support one or more of the at least one network slice.

3. [Modified] The method according to claim 1 or 2, wherein the first message comprises first indication information, and the first indication information indicates to choose, based on the first message, an access network device that supports the slice needed by the terminal device.

4. The method according to any one of claims 1 to 3, wherein the information about the second access network device comprises at least one of an identifier of the second access network device or an address of the second access network device.

5. The method according to any one of claims 1 to 4, wherein the second message further comprises an identifier that is of one or more of the at least one network slice and that is comprised in the first message.

6. The method according to any one of claims 1 to 5, wherein the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

7. The method according to any one of claims 1 to 6, wherein if the second message is a registration accept message, before the receiving a second message, the method further comprises: completing, by the terminal device, an authentication and security procedure, and establishing an Internet protocol security IPsec SA communication tunnel.

8. The method according to any one of claims 1 to 7, wherein after the receiving a second message, the method further comprises:
performing, by the terminal device, a deregistration procedure through the first access network device.

9. The method according to any one of claims 1 to 6, wherein the second message comprises second indication information, and the second indication information indicates the terminal device to change an access network device.

10. The method according to any one of claims 1 to 7, wherein the method further comprises:
obtaining third information, wherein the third information indicates to release a connection between the terminal device and the first access network device.

11. The method according to any one of claims 1 to 7 or 10, wherein the method further comprises:
obtaining allowed slice information, wherein the allowed slice information comprises first slice information supported by the second access network device, and the first slice information comprises an identifier of at least one network slice.

12. The method according to claim 11, wherein the allowed slice information comprises second slice information that the terminal device requests to access, the second slice information comprises an identifier of at least one network slice, and the first slice information is the same as or different from the second slice information.

13. The method according to any one of claims 1 to 7 or 10 to 12, wherein the method further comprises:
obtaining fourth information, wherein the fourth information indicates that slice information is allowed to be comprised when the terminal device establishes the connection and/or indicates a procedure to be performed.

14. The method according to any one of claims 1 to 7 or 10 to 13, wherein the establishing a connection to the second access network device specifically comprises: sending fifth information, wherein the fifth information comprises third slice information that the terminal device requests to access, the third slice information comprises an identifier of at least one network slice, and the third slice information is the same as or different from the first slice information or the second slice information.

15. The method according to claim 14, wherein the method further comprises:
sending, by the terminal device to the second access network device, indication information indicating that an establishment cause is access network device update, reselection, or redirection.

16. [Added] The method according to any one of claims 1 to 15, wherein the second message is a registration reject message.

17. An access network device determining method, applied to a mobility management device, wherein the method comprises:
receiving a first message from a terminal device through a first access network device, wherein the first message comprises an identifier of at least one network slice, and indicates that the terminal device requests to access the network slice; and
if it is determined that the first access network device does not support one or more of the at least one network slice, and that a second access network device supports one or more of the at least one network slice,
sending a second message to the terminal device through the first access network device, wherein the second message comprises information about the second access network device, and indicates that the second access network device supports the one or more of the at least one network slice.

18. [Modified] The method according to claim 17, wherein the at least one network slice is a first network slice; and if the mobility management device determines that the first access network device does not support the first network slice, and determines that the second access network device supports the first network slice,
sending the second message to the terminal device through the first access network device.

19. [Modified] The method according to claim 17 or 18, wherein the second message indicates that the first access network device does not support the one or more of the at least one network slice.

20. [Modified] The method according to any one of claims 17 to 19, wherein the first message comprises first indication information, and the first indication information indicates to obtain information about an access network device that supports the at least one network slice or indicates to match a corresponding access network device based on the first message.

21. [Modified] The method according to any one of claims 17 to 20, wherein the information about the second access network device comprises at least one of an identifier of the second access network device or an address of the second access network device.

22. [Modified] The method according to any one of claims 17 to 21, wherein the second message further comprises an identifier that is of one or more of the at least one network slice and that is comprised in the first message.

23. [Modified] The method according to any one of claims 17 to 22, wherein the first access network device is any one of a trusted non-3GPP gateway function TNGF network element corresponding to a trusted non-3GPP access technology, a non-3GPP interworking function N3IWF network element corresponding to an untrusted non-3GPP access technology, a trusted wireless local area network WLAN interworking function TWIF network element corresponding to a trusted WLAN access technology, an access network device corresponding to a wireline access technology, a wireline-access gateway function W-AGF, an access network device corresponding to a non-3GPP access technology, or an access network device corresponding to a 3GPP access technology.

24. [Modified] The method according to any one of claims 17 to 23, wherein the second message is a registration reject message.

25. [Modified] The method according to any one of claims 17 to 24, wherein the second message comprises second indication information, and the second indication information indicates the terminal device to change a corresponding access network device.

26. [Modified] The method according to any one of claims 17 to 25, wherein the method further comprises:
receiving, by the mobility management device, an identifier of the terminal device, wherein the identifier of the terminal device is used by an access network device to determine the terminal device.

27. [Modified] The method according to claim 26, wherein after it is determined that the second access network device supports the one or more of the at least one network slice, the method further comprises:
sending a first request message to the second access network device, wherein the first request message comprises the identifier of the terminal device, and requests to change the access network device for the terminal device; and
receiving a first response message from the second access network device, wherein the first response message comprises the address of the second access network device.

28. [Modified] The method according to any one of claims 17 to 23, wherein the method further comprises:
storing fourth slice information that the terminal device requests to access, wherein the fourth slice information comprises an identifier of at least one network slice.

29. [Modified] The method according to claim 28, wherein the fourth slice information comprises an identifier of at least one network slice not supported by the first access network.

30. [Modified] The method according to any one of claims 17 to 23, wherein the method further comprises:
sending allowed slice information to the terminal device, wherein the allowed slice information comprises first slice information supported by the second access network device, and the first slice information comprises an identifier of at least one network slice.

31. [Modified] The method according to claim 30, wherein the allowed slice information comprises second slice information that the terminal device requests to access, the second slice information comprises an identifier of at least one network slice, and the first slice information is the same as or different from the second slice information.

32. [Modified] The method according to any one of claims 17 to 23 or 28 to 31, wherein the method further comprises:
sending third information, wherein the third information indicates to release a connection between the terminal device and the first access network device.

33. [Modified] The method according to any one of claims 17 to 23 or 30 to 32, wherein the method further comprises:
sending fourth information to the terminal device, wherein the fourth information indicates that slice information is allowed to be comprised when the terminal device establishes a connection and/or indicates a procedure to be performed.

34. [Modified] The method according to any one of claims 17 to 23 or 30 to 33, wherein the method further comprises:
obtaining fifth information, wherein the fifth information comprises third slice information that the terminal device requests to access, the third slice information comprises an identifier of at least one network slice, and the third slice information is the same as or different from the first slice information or the second slice information.

35. [Modified] The method according to any one of claims 28 to 34, wherein the method further comprises:
updating the allowed slice information based on the fourth slice information or the third slice information.

36. [Modified] The method according to any one of claims 17 to 23 or 28 to 35, wherein the method further comprises:
sending, to the second access network device, the allowed slice information corresponding to the terminal device; and/or
sending the allowed slice information to the terminal device through the second access network device.

37. An access network device determining method, applied to a mobility management device, wherein the method comprises:
receiving a first message from a terminal device through a first access network device, wherein the first message comprises an identifier of at least one network slice, and indicates that the terminal device requests to access the network slice; and
if it is determined that the first access network device does not support one or more of the at least one network slice, and that a second access network device supports one or more of the at least one network slice,
sending a second message to the second access network device, wherein the second message indicates the second access network device to send information about the second access network device to the terminal device, and the information about the second access network device is used by the terminal device to establish a connection to the second access network device.

38. [Modified] The method according to claim 37, wherein after it is determined that the first access network device does not support the one or more of the at least one network slice,
the method further comprises:
sending a second request message to the first access network device, wherein the second request message requests to obtain an identifier of a non-3GPP access point connected to the terminal device; and
receiving, from the first access network device, the identifier of the non-3GPP access point connected to the terminal device.

39. [Modified] The method according to claim 37 or 38, wherein after it is determined that the first access network device does not support the one or more of the at least one network slice, the method further comprises:
sending a third request message to the second access network device, wherein the third request message comprises the identifier of the non-3GPP access point.

40. [Modified] The method according to claim 39, wherein the third request message further comprises third indication information, and the third indication information indicates to change an access network device for the terminal device, indicates that the terminal device is migrated from another access network device, or indicates that the terminal device was previously connected to another access network device.

41. [Modified] The method according to claim 39 or 40, wherein the third request message is for setting up context information of the terminal device.

42. An access network device determining method, applied to a first core network device, wherein the method comprises:
sending information about a second access network to a terminal device, to enable the terminal device to obtain a network access identifier NAI based on the information about the second access network, and establish a connection to a second access network device, wherein the information about the second access network comprises an identifier of the second access network device.

43. [Modified] The method according to claim 42, wherein before the sending information about a second access network to a terminal device, the method further comprises:
receiving a first message from the terminal device through a first access network device, wherein the first message comprises information about at least one network slice, and indicates that the terminal device requests to access the network slice; and the sending information about a second access network to a terminal device specifically comprises: if it is determined that the first access network device does not support one or more of the at least one network slice, and that the second access network device supports one or more of the at least one network slice,
sending a second message to the terminal device, wherein the second message comprises the information about the second access network.

44. [Modified] The method according to claim 42 or 43, wherein the method further comprises: sending fourth indication information to the terminal device, wherein the fourth indication information indicates the terminal device to construct the NAI based on information about one or more access networks; obtain the NAI based on a correspondence between information about an access network and information about a network slice; or obtain the information about the second access network based on a correspondence between information about an access network and information about a network slice, and obtain the NAI based on the information about the second access network.

45. [Modified] The method according to claim 44, wherein the fourth indication information is a registration reject message, a registration accept message, a configuration update message, a wireless local area network selection policy rule (WLANSP rule), or indication information comprised in a configuration update procedure.

46. [Modified] The method according to any one of claims 42 to 45, wherein the information about the second access network comprises one or more of the following information: a service set identifier SSID, identification information of the second access network device, identification information of an second access network node, address information, domain name information, port information, all or a part of information about N network slices corresponding to or supported by the second access network, or all or a part of information about N network slices corresponding to or supported by the second access network device, wherein N is a positive integer.

47. [Modified] The method according to claim 43, wherein the information about the network slice corresponding to or supported by the second access network device comprises the information that is about the at least one network slice and that is comprised in the first message.

48. [Modified] The method according to any one of claims 42 to 47, wherein information about one or more access networks and/or information about a network slice corresponding to or supported by one or more access networks is configured on the first core network device.

49. [Modified] The method according to any one of claims 42 to 48, wherein the method further comprises:
sending, by the first core network device to a second core network device, the information about the network slice requested by the terminal device.

50. [Modified] The method according to claim 49, wherein the method further comprises:
receiving the information about the second access network from the second access network device; and
sending the information about the second access network to the terminal device.

51. [Modified] The method according to claim 43, wherein the second message comprises a registration reject message, a registration accept message, a configuration update message, a wireless local area network selection policy rule, or a message in a configuration update procedure.

52. [Modified] The method according to any one of claims 42 to 51, wherein the first core network device is a mobility management device, and the second core network device is a policy control device; or
the first core network device is a policy control device, and the second core network device is a mobility management device.

53. An access network device determining method, applied to a terminal device, wherein the method comprises:
obtaining information about a second access network from a first core network device, wherein the information about the second access network comprises information about a second access network device, and the second access network device supports at least one network slice that the terminal device requests to access; obtaining a network access identifier NAI based on the information about the second access network; and
sending the NAI to an access point of the second access network, to enable the access point of the second access network to select the second access network device based on the NAI.

54. [Modified] The method according to claim 53, wherein before the obtaining information about a second access network from a first core network device, the method further comprises:
sending a first message to a first access network device, wherein the first message comprises information about the at least one network slice, and indicates that the terminal device requests to access the network slice; and
the obtaining information about a second access network from a first core network device specifically comprises: receiving a second message, wherein the second message comprises the information about the second access network.

55. [Modified] The method according to claim 53 or 54, wherein the information about the second access network comprises one or more of the following information: a service set identifier SSID, identification information of the second access network device, identification information of a second access network node, address information, domain name information, port information, all or a part of information about N network slices corresponding to or supported by the second access network, or all or a part of information about N network slices corresponding to or supported by the second access network device, wherein N is a positive integer.

56. [Modified] The method according to claim 55, wherein the network slice corresponding to or supported by the second access network comprises the at least one network slice comprised in the first message.

57. [Modified] The method according to claim 54, wherein the second message comprises a registration reject message, a registration accept message, a configuration update message, a wireless local area network selection policy rule, or a message in a configuration update procedure.

58. [Modified] The method according to any one of claims 53 to 57, wherein a domain name information part of the NAI comprises the information about the second access network device.

59. [Modified] The method according to any one of claims 53 to 58, wherein the method further comprises:
obtaining fourth indication information, wherein the fourth indication information indicates the terminal device to obtain the NAI based on information about one or more access networks; obtain the NAI based on a correspondence between information about an access network and information about a network slice; or obtain the information about the second access network based on a correspondence between information about an access network and information about a network slice, and obtain the NAI based on the information about the second access network.

60. [Modified] The method according to claim 59, wherein the fourth indication information is a registration reject message, a registration accept message, a configuration update message, a wireless local area network selection policy rule (WLANSP rules), or indication information comprised in a configuration update procedure.

61. [Modified] A communication apparatus, wherein the communication apparatus comprises a processor and a transmission interface, wherein
the processor is configured to execute instructions stored in a memory, to enable the apparatus to perform the method according to any one of claims 1 to 60.

62. [Modified] A computer-readable storage medium, comprising a program or instructions, wherein when the program or the instructions are run by a processor, the method according to any one of claims 1 to 60 is performed.

63. [Modified] A computer program product, wherein when the computer program product runs on a computer or a processor, the computer or the processor is enabled to perform the method according to any one of claims 1 to 60.
